# EUROPÄISCHE PATENTSCHRIFT

(11) **EP 3 789 685 B1**
(45) Veröffentlichungstag und Bekanntmachung des Hinweises auf die Patenterteilung: **21.07.2021**
(21) Anmeldenummer: 19210444.6
(22) Anmeldetag: 20.11.2019
(51) Int. Cl.: F24D 19/10, F24H 8/00

(54) **VERFAHREN ZUR INBETRIEBNAHME EINER BIOMASSE-HEIZANLAGE**
METHOD FOR COMMISSIONING A BIOMASS HEATING SYSTEM
PROCÉDÉ DE MISE EN SERVICE D'UNE INSTALLATION DE CHAUFFAGE À BIOMASSE

(30) Priorität: 03.09.2019 EP 19195118; 19.11.2019 EP 19210080
(43) Veröffentlichungstag der Anmeldung: 10.03.2021
(60) Teilanmeldung: 21178541.5
(73) Patentinhaber: SL-Technik GmbH, 5120 St. Pantaleon (AT)
(72) Erfinder: SOMMERAUER, Thilo, 5120 St. Pantaleon (AT)
(74) Vertreter: Kuhnen & Wacker Patent- und Rechtsanwaltsbüro PartG mbB

(56) Entgegenhaltungen:
- DE-A1- 19 706 067
- DE-U1- 20 210 190
- GB-A- 2 542 678

## Beschreibung

### TECHNISCHES GEBIET

Die Erfindung betrifft ein Verfahren zur Inbetriebnahme einer Biomasse-Heizanlage.

### STAND DER TECHNIK

Biomasse-Heizanlagen in einem Leistungsbereich von 20 bis 500 kW sind bekannt. Biomasse kann als ein günstiger, heimischer, krisensicherer und umweltfreundlicher Brennstoff angesehen werden. Als verfeuerbare Biomasse gibt es beispielsweise Hackgut oder Pellets.

Die Pellets bestehen meistens aus Holzspänen, Sägespänen, Biomasse oder anderen Materialien, die in kleine Scheiben oder Zylinder mit einem Durchmesser von ca. 3 bis 15 mm und einer Länge von 5 bis 30 mm verdichtet worden sind. Hackgut (auch als Holzschnitzel, Holzhackschnitzel oder Hackschnitzel bezeichnet) ist mit schneidenden Werkzeugen zerkleinertes Holz.

Die Druckschriften DE19706067A1 und DE20210190U1 offenbaren Biomasse-Heizanlagen. Das Dokument GB2542678A offenbart ein Verfahren zur Inbetriebnahme einer Gas-Heizanlage. Biomasse-Heizanlagen für Brennstoff in Form von Pellets und Hackgut weisen im Wesentlichen einen Kessel mit einer Brennkammer (der Verbrennungsraum) und mit einer daran anschließenden Wärmetauschvorrichtung auf. Aufgrund in vielen Ländern verschärfter gesetzlicher Vorschriften weisen einige Biomasse-Heizanlagen auch einen Feinstaubfilter auf. Regelmäßig ist weiteres verschiedenes Zubehör vorhanden, wie beispielsweise Regelungseinrichtungen, Sonden, Sicherheitsthermostate, Druckschalter, eine Abgas- bzw. Rauchgasrückführung und ein separater Brennstoffbehälter.

Bei der Brennkammer sind regelmäßig eine Einrichtung zur Zuführung von Brennstoff, eine Einrichtung für die Zufuhr der Luft und eine Zündvorrichtung für den Brennstoff vorgesehen. Die Einrichtung zur Zufuhr der Luft weist wiederum normalerweise ein Hochleistungsgebläse mit niedrigem Druck auf, um die thermodynamischen Faktoren bei der Verbrennung in der Brennkammer vorteilhaft zu beeinflussen. Eine Einrichtung zur Zuführung von Brennstoff kann beispielsweise mit einem seitlichen Einschub vorgesehen sein (sog. Quereinschubfeuerung). Dabei wird der Brennstoff von der Seite über eine Schnecke oder einen Kolben in die Brennkammer eingeschoben.

In der Brennkammer ist weiter üblicherweise ein Feuerungsrost vorgesehen, auf welchem kontinuierlich der Brennstoff im Wesentlichen zugeführt und verbrannt wird. Dieser Feuerungsrost lagert den Brennstoff für die Verbrennung und weist Öffnungen, beispielsweise Schlitze, auf, die den Durchgang eines Teils der Verbrennungsluft als Primärluft zu dem Brennstoff erlauben. Weiter kann der Rost starr oder beweglich ausgeführt sein.

Beim Durchströmen des Rosts mit der Primärluft wird unter anderem auch der Rost gekühlt, wodurch das Material geschont wird. Zudem kann es bei unzureichender Luftzuführung auf dem Rost zu Schlackenbildung kommen. Insbesondere Feuerungen, die mit unterschiedlichen Brennstoffen beschickt werden sollen, womit sich die vorliegende Offenbarung insbesondere beschäftigt, weisen die inhärente Problematik auf, dass die unterschiedlichen Brennstoffe unterschiedliche Ascheschmelzpunkte, Wassergehalte und unterschiedliches Brennverhalten aufweisen. Damit ist es problematisch eine Heizanlage vorzusehen, die für unterschiedliche Brennstoffe gleichermaßen gut geeignet ist. Die Brennkammer kann weiterhin regelmäßig in eine Primärverbrennungszone (unmittelbare Verbrennung des Brennstoffes auf dem Rost) und eine Sekundärverbrennungszone (Nachverbrennung des Rauchgases) eingeteilt werden. In der Brennkammer erfolgt die Trocknung, pyrolytische Zersetzung sowie die Vergasung des Brennstoffes. Um die entstehenden brennbaren Gase vollständig zu verbrennen kann zudem eine Sekundärluft eingeführt werden.

Die Verbrennung der Pellets oder des Hackguts weist nach der Trocknung im Wesentlichen zwei Phasen auf. In der ersten Phase wird der Brennstoff durch hohe Temperaturen und Luft, die in die Brennkammer eingeblasen werden kann, und zumindest teilweise pyrolytisch zersetzt und in Gas umgewandelt, In der zweiten Phase treten die Verbrennung des in Gas umgewandelten Teils sowie die Verbrennung der eventuell vorhandenen restlichen Feststoffe ein. Insofern gast der Brennstoff aus, und das entstandene Gas wird mitverbrannt.

Unter Pyrolyse versteht man die thermische Zersetzung eines festen Stoffes unter Sauerstoffabschluss. Die Pyrolyse lässt sich in die primäre und sekundäre Pyrolyse aufteilen. Die Produkte der primären Pyrolyse sind Pyrolysekoks und Pyrolysegase, wobei sich die Pyrolysegase in bei Raumtemperatur kondensierbare und nicht kondensierbare Gase unterteilen lassen. Die primäre Pyrolyse findet bei grob 250-450°C und die sekundäre Pyrolyse bei ungefähr 450-600°C statt. Die in weiterer Folge auftretende sekundäre Pyrolyse basiert auf der Weiterreaktion der primär gebildeten Pyrolyseprodukte. Die Trocknung und Pyrolyse finden zumindest weitgehend ohne den Einsatz von Luft statt, da flüchtige CH - Verbindungen vom Partikel austreten und daher keine Luft an die Partikeloberfläche gelangt. Die Vergasung kann als Teil der Oxidation gesehen werden; es werden die bei der pyrolytischen Zersetzung entstandenen festen, flüssigen und gasförmigen Produkte durch weitere Wärmeeinwirkung in Reaktion gebracht. Dies geschieht unter Zugabe eines Vergasungsmittels wie Luft, Sauerstoff oder auch Wasserdampf. Der Lambda-Wert bei der Vergasung ist größer als null und kleiner als eins. Die Vergasung findet bei rund 300 bis 850°C statt. Oberhalb von ungefähr 850°C findet die vollständige Oxidation mit Luftüberschuss (Lambda größer 1) statt. Die Reaktionsendprodukte sind im Wesentlichen Kohlendioxid, Wasserdampf und Asche. Bei allen Phasen sind die Grenzen nicht starr, sondern fließend. Mittels einer am Abgasausgang des Kessels vorgesehenen Lamdasonde kann der Verbrennungsprozess vorteilhaft geregelt werden.

Allgemein ausgedrückt wird der Wirkungsgrad der Verbrennung durch die Umwandlung der Pellets in Gas erhöht, weil gasförmiger Brennstoff mit der Verbrennungsluft besser vermischt wird, und eine geringere Emission von Schadstoffen, weniger unverbrannte Partikel und Asche erzeugt werden.

Bei der Verbrennung von Biomasse entstehen luftgetragene Verbrennungsprodukte, deren Hauptbestandteile Kohlenstoff, Wasserstoff und Sauerstoff sind. Diese können in Emissionen aus vollständiger Oxidation, aus unvollständiger Oxidation und Stoffen aus Spurenelementen bzw. Verunreinigungen unterschieden werden. Bei den Emissionen aus vollständiger Oxidation handelt es sich im Wesentlichen um Kohlenstoffdioxid (CO₂) und Wasserdampf (H₂O). Die Bildung von Kohlenstoffdioxid aus dem Kohlenstoff der Biomasse ist das Ziel der Verbrennung, da so die freigesetzte Energie genutzt werden kann. Die Freisetzung von Kohlenstoffdioxid (CO₂) verhält sich weitgehend proportional zum Kohlenstoffgehalt der verbrannten Brennstoffmenge; somit ist der Kohlenstoffdioxid auch abhängig von der bereitzustellenden Nutzenergie. Eine Reduzierung kann im Wesentlichen nur durch eine Verbesserung des Wirkungsgrades erzielt werden. Ebenso entstehen Verbrennungsrückstände, wie beispielsweise Asche.

Allerdings sind die vorstehend beschriebenen komplexen Verbrennungsvorgänge nicht einfach zu beherrschen. So besteht ganz allgemein formuliert ein Verbesserungsbedarf betreffend der Verbrennungsvorgänge in Biomasse-Heizanlagen.

Betreffend die Luftzufuhr in die Brennkammer sind weiterhin ganz allgemein Abgas- bzw. Rauchgasrückführungseinrichtungen bekannt, die Rauchgas aus der Brennkammer zur erneuten Verbrennung in die Brennkammer zurückführen. Hierbei existieren im Stand der Technik üblicherweise Öffnungen in der Brennkammer zur Zufuhr von Primärluft durch eine die Brennkammer speisende Primärluftleitung, und weiterhin existieren Umfangsöffnungen in der Brennkammer zur Zufuhr von Frischluft.

Das Rauchgas bzw. Abgas der Verbrennung in der Brennkammer wird dem Wärmetauscher zugeführt, so dass die heißen Verbrennungsgase durch den Wärmetauscher strömen, um Wärme auf ein Wärmetauschmedium zu übertragen, bei dem es sich normalerweise um Wasser bis etwa 80°C handelt.

Bei der Zündvorrichtung handelt es sich meistens um eine Heißlufteinrichtung oder eine Glüheinrichtung. Im ersten Fall wird die Verbrennung in Gang gesetzt, indem der Brennkammer Heißluft zugeführt wird, wobei die Heißluft durch einen elektrischen Widerstand aufgeheizt wird. Im zweiten Fall weist die Zündvorrichtung eine Glühkerze / einen Glühstab oder mehrere Glühkerzen auf, um die Pellets oder das Hackgut durch direkten Kontakt zu erhitzen, bis die Verbrennung beginnt. Die Glühkerzen können auch mit einem Motor versehen sein, um während der Zündphase mit den Pellets oder dem Hackgut in Berührung zu bleiben, und dann zurückzufahren, um nicht den Flammen ausgesetzt zu bleiben. Diese Lösung ist verschleißanfällig und aufwändig.

Grundsätzlich bestehen bei herkömmlichen Biomasse-Heizanlagen die Probleme, dass die gasförmigen oder festen Emissionen zu hoch sind, dass der Wirkungsgrad zu niedrig ist und dass die Staubemissionen zu hoch sind. Problematisch ist weiter die variierende Qualität des Brennstoffs, aufgrund des variierenden Wassergehalts des Brennstoffs, womit ein gleichmäßiger Abbrand des Brennstoffs mit niedriger Emission erschwert wird. Insbesondere bei Biomasse-Heizanlagen, welche für verschiedene Arten von biologischem Brennstoff tauglich sein sollen, erschwert es die variierende Qualität und Konsistenz des Brennstoffs, eine durchgängig hohe Effizienz der Biomasse-Heizanlage aufrechtzuerhalten. Diesbezüglich besteht erheblicher Optimierungsbedarf.

Ein Nachteil der herkömmlichen Biomasse-Heizanlagen für Pellets kann darin bestehen, dass Pellets, die in die Brennkammer fallen, aus dem Gitter bzw. Rost herausrollen bzw. herausrutschen können und in einen Bereich der Brennkammer gelangen können, in dem die Temperatur niedriger ist oder in dem die Luftzufuhr schlecht ist, oder sie können sogar in die unterste Kammer des Kessels fallen. Pellets, die nicht auf dem Gitter bzw. Rost verbleiben, verbrennen unvollständig und verursachen dadurch einen schlechten Wirkungsgrad, übermäßige Asche und eine bestimmte Menge an unverbrannten Schadstoffpartikeln.

Aus diesem Grund besitzen die bekannten Biomasse-Heizanlagen für Pellets in der Nähe des Gitters bzw. Rostes und/oder des Austritts des Verbrennungsgases beispielsweise Prallbleche, um Brennstoffelemente an bestimmten Orten zurückzuhalten. Bei manchen Kesseln sind an der Innenseite der Brennkammer Absätze vorgesehen, um zu verhindern, dass Pellets in die Kammer des Kessels hineinfallen. In diesen Prallblechen und Absätzen können sich jedoch wiederum Verbrennungsrückstände (beispielsweise Asche oder Schlacke) festsetzen, was die Reinigung erschwert und Luftströmungen in der Brennkammer behindern kann, was wiederum die Effizienz mindert. Zudem erfordern diese Prallbleche einen eigenen Herstellungs- und Montageaufwand.

Biomasse-Heizanlagen für Pellets oder Hackgut weisen die folgenden weiteren Nachteile und Probleme auf.

Ein Problem besteht darin, dass eine unvollständige Verbrennung infolge der nicht gleichmäßigen Verteilung des Brennstoffes auf dem Gitter bzw. Rost und infolge der nicht optimalen Mischung von Luft und Brennstoff die Anhäufung und das Herabfallen von unverbrannter Asche durch die Lufteintrittsöffnungen, die direkt auf den Verbrennungsrost führen, in die Luftkanäle begünstigt.

Dies ist besonders störend und verursacht häufige Unterbrechungen, um Wartungsarbeiten wie Reinigen durchzuführen. Aus allen diesen Gründen wird in der Brennkammer normalerweise ein großer Luftüberschuss aufrechterhalten, doch dadurch nehmen die Flammentemperatur und der Wirkungsgrad der Verbrennung ab, und es kommt zu hohen NOx-Emissionen.

Der Einsatz eines Gebläses mit niedriger Druckhöhe liefert keine geeignete Wirbelströmung der Luft in der Brennkammer und ermöglicht deshalb auch keine optimale Mischung von Luft und Brennstoff. Generell ist es schwierig, in herkömmlichen Brennkammern eine optimale Wirbelströmung auszubilden.

Ein weiteres Problem bei den bekannten Brennern besteht noch darin, dass die beiden Phasen, Umwandlung des Brennstoffs in Gas und Verbrennung, mittels der gleichen Luftmenge gleichzeitig in der gesamten Brennkammer stattfinden, womit die Effizienz gesenkt wird, unter Anderem da der optimale Verbrennungszustand nur teilweise oder gar nicht erreicht werden kann.

Weiter besteht insbesondere auch bei den Wärmetauschern von Biomasse-Heizanlagen des Stands der Technik Optimierungsbedarf, d.h., deren Effizienz könnte gesteigert werden. Ebenso besteht Verbesserungsbedarf betreffend der oft umständlichen und ineffizienten Abreinigung von herkömmlichen Wärmetauschern.

Wie aus vorstehendem ersichtlich ist, sind Biomasse-Heizanlage komplexe Einrichtungen. Entsprechend ist die Inbetriebnahme einer Biomasse-Heizanlage schwierig, zeitintensiv und es kann zu Fehleinstellungen kommen.

Hierzu trägt auch der Umstand bei, dass viele der Biomasse-Heizanlagen recht individuell vorgesehen werden. So können sich die Biomasse-Heizanlagen untereinander unterscheiden, beispielsweise können diverse Komponenten wie beispielsweise die Filtereinrichtung oder ein Rauchgaskondensator variieren oder auch ganz fehlen, es können die Einschubrichtungen auf den Rost variieren, oder es können die Leistungsparameter variieren.

Zudem sind die üblichen Einstellmöglichkeiten zur Inbetriebnahme einer Biomasse-Heizanlage of schwer bedienbar, unübersichtlich und insofern wenig nutzerfreundlich.

Es kann eine Aufgabe der Erfindung sein, ein optimiertes Verfahren zur Inbetriebnahme einer Biomasse-Heizanlage vorzusehen.

Dabei können erfindungsgemäß und ergänzend folgende Überlegungen eine Rolle spielen:
Es soll zur Initialisierung eine Biomasse-Heizanlage in Hybridtechnologie vorgesehen sein, welche emissionsarm (v.a. Feinstaub, CO, Kohlenwasserstoffe, NOx) ist, welche brennstoffflexibel mit Hackgut und Pellets betrieben werden kann, welche einen hohen Wirkungsgrad aufweist, und welche dafür eine optimierte Rauchgasbehandlung aufweist.

Die Hybridtechnologie soll sowohl den Einsatz von Pellets als auch von Hackgut mit Wassergehalten zwischen 8 und 35 Gewichtsprozent ermöglichen.

Möglichst niedrige gasförmige Emissionen (kleiner als 50 oder 100 mg/Nm³ bezogen auf trockenes Rauchgas und 13 Volumenprozent O₂) sollen erzielt werden.

Sehr niedrige Staubemissionen kleiner 15 mg mg/Nm³ ohne und kleiner 5 mg mg/Nm³ mit Elektrofilterbetrieb werden angestrebt.

Ein hoher Wirkungsgrad von bis zu 95% soll erreicht werden.

Weiter kann man berücksichtigen, dass der Betrieb der Anlage optimiert sein soll. Beispielsweise soll eine einfache Entaschung, einfache Reinigung oder eine einfache Wartung ermöglicht werden.

Zudem sollte eine hohe Anlagenverfügbarkeit vorhanden sein.

Dabei kann/können sich die vorstehend genannte Aufgabe oder die potentiellen Einzelproblemstellungen auch auf einzelne Teilaspekte der Gesamtanlage beziehen, beispielsweise auf die Brennkammer, den Wärmetauscher oder den Feinstaubfilter.

Unter einer optimierten Rauchgasbehandlung sind all diejenigen Maßnahmen zu verstehen, mit denen das Rauchgas oder die Verbrennung verbessert werden. Dies kann beispielsweise Maßnahme umfassen, die die Biomasse-Heizanlage emmissionsärmer, energieeffizienter oder kostengünstiger gestalten, und die die strömungstechnische und/oder physikalische Behandlung des Rauchgases beinhalten. Unter den Oberbegriff der Rauchgasbehandlung fallen beispielsweise die später erläuterte Rauchgaskondensation oder die ebenso später erläuterte Rauchgasrezirkulation.

Das Verfahren gemäß der Erfindung ist im Anspruch 1 beschrieben. Weitere Aspekte und vorteilhafte Weiterbildungen sind Gegenstand der abhängigen Ansprüche.

Gemäß einem Aspekt der vorliegenden Offenbarung ist ein Verfahren zur Inbetriebnahme einer Biomasse-Heizanlage zur Verfeuerung von Brennstoff in Form von Pellets und/oder Hackgut offenbart, wobei die Biomasse-Heizanlage, einen Kessel mit einer Brennkammer, ein Gebläse, und eine Steuereinrichtung mit einem Speicher und einem Display aufweist, wobei das Verfahren die folgenden Schritte aufweist:
Abfragen, ob die Biomasse-Heizanlage erstmalig initialisiert wird, wobei, falls die Biomasse-Heizanlage nicht erstmalig initialisiert wird, das Verfahren beendet wird, und falls die Biomasse-Heizanlage erstmalig initialisiert wird, das Verfahren mit dem folgenden Schritt fortgesetzt wird:
Einstellen einer Mehrzahl von Wärmeerzeugungsparametern, welche zumindest die folgenden Parameter umfassen:
- einen Kesseltypparameter mit dem Arbeitsbereiche des Gebläses festgelegt werden;
- einen Materialparameter, der die Eigenschaften des zu verfeuernden Brennstoffs / der Brennstoffe definiert.

Gemäß einer Weiterbildung ist ein Verfahren zur Inbetriebnahme einer Biomasse-Heizanlage zur Verfeuerung von Brennstoff in Form von Pellets und/oder Hackgut vorgesehen, wobei das Verfahren nach dem Schritt des Einstellens der Wärmeerzeugungsparameter die folgenden Schritte aufweist:
Überprüfung der Plausibilität der eingestellten Wärmeerzeugungsparameter, und falls die Plausibilitätsüberprüfung negativ ist:
erneutes Durchführen des Schrittes des Einstellens der Wärmeerzeugungsparameter; Speichern der eingestellten Parameter in dem Speicher der Steuereinrichtung, falls die Überprüfung der Plausibilität der eingestellten Parameter positiv ist.

Gemäß einer Weiterbildung ist ein Verfahren zur Inbetriebnahme einer Biomasse-Heizanlage zur Verfeuerung von Brennstoff in Form von Pellets und/oder Hackgut vorgesehen, wobei das Verfahren die folgenden Schritte nach dem Schritt des Durchführens der Plausibilitätsüberprüfung aufweist:
Anzeigen einer Abfrage auf dem Display, ob zumindest ein Puffer vorhanden ist; Erfassen einer Benutzerantwort auf die Abfrage, ob zumindest ein Puffer vorhanden ist; Durchführen der folgenden Schritte, falls zumindest ein Puffer vorhanden ist:
Einstellen zumindest eines Pufferparameters; und Überprüfung der Plausibilität des eingestellten Pufferparameters, und falls die Plausibilitätsüberprüfung negativ ist:
erneutes Durchführen des Schrittes des Einstellens des Pufferparameters.

Gemäß einer Weiterbildung ist ein Verfahren zur Inbetriebnahme einer Biomasse-Heizanlage zur Verfeuerung von Brennstoff in Form von Pellets und/oder Hackgut vorgesehen, wobei das Verfahren die folgenden Schritte nach dem Schritt des Durchführens der Plausibilitätsüberprüfung aufweist:
Anzeigen einer Abfrage auf dem Display, ob zumindest ein Warmwasserspeicher vorhanden ist; Erfassen einer Benutzerantwort auf die Abfrage, ob zumindest ein Warmwasserspeicher vorhanden ist; Durchführen der folgenden Schritte, falls zumindest ein Warmwasserspeicher vorhanden ist:
Einstellen zumindest eines Warmwasserspeicherparameters; und Überprüfung der Plausibilität des eingestellten Warmwasserspeicherparameters, und falls die Plausibilitätsüberprüfung negativ ist:
erneutes Durchführen des Schrittes des Einstellens des Warmwasserspeicherparameters.

Gemäß einer Weiterbildung ist ein Verfahren zur Inbetriebnahme einer Biomasse-Heizanlage zur Verfeuerung von Brennstoff in Form von Pellets und/oder Hackgut vorgesehen, wobei das Verfahren die folgenden Schritte nach dem Schritt des Durchführens der Plausibilitätsüberprüfung aufweist:
Anzeigen einer Abfrage auf dem Display, ob zumindest ein Heizkreis vorhanden ist; Erfassen einer Benutzerantwort auf die Abfrage, ob zumindest ein Heizkreis vorhanden ist; Durchführen der folgenden Schritte, falls zumindest ein Heizkreis vorhanden ist:
Einstellen zumindest eines Heizkreisparameters; und Überprüfung der Plausibilität des eingestellten Heizkreisparameters, und falls die Plausibilitätsüberprüfung negativ ist:
erneutes Durchführen des Schrittes des Einstellens des Heizkreisparameters.

Gemäß einer Weiterbildung ist ein Verfahren zur Inbetriebnahme einer Biomasse-Heizanlage zur Verfeuerung von Brennstoff in Form von Pellets und/oder Hackgut vorgesehen, wobei das Verfahren die folgenden Schritte nach dem Schritt des Durchführens der Plausibilitätsüberprüfung aufweist:
Anzeigen einer Abfrage auf dem Display, ob zumindest ein Solarmodul vorhanden ist; Erfassen einer Benutzerantwort auf die Abfrage, ob zumindest ein Solarmodul vorhanden ist;
Durchführen der folgenden Schritte, falls zumindest ein Solarmodul vorhanden ist:
   Einstellen zumindest eines Solarmodulparameters; und Überprüfung der Plausibilität des eingestellten Solarmodulparameters, und falls die Plausibilitätsüberprüfung negativ ist:
   erneutes Durchführen des Schrittes des Einstellens des Solarmodulparameters.

Gemäß einer Weiterbildung ist ein Verfahren zur Inbetriebnahme einer Biomasse-Heizanlage zur Verfeuerung von Brennstoff in Form von Pellets und/oder Hackgut vorgesehen, wobei das Verfahren die folgenden Schritte aufweist:
Erstellen eines entsprechenden Icons für eine Anzeige auf dem Display, falls der jeweilige des Erfassens der Abfrage auf dem Display positiv ergeben hat, dass Puffer und/oder Warmwasserspeicher und/oder Heizkreise und/oder Solarmodule vorhanden sind; Abspeichern des Icons in der Steuereinrichtung.

Gemäß einer Weiterbildung ist ein Verfahren zur Inbetriebnahme einer Biomasse-Heizanlage zur Verfeuerung von Brennstoff in Form von Pellets und/oder Hackgut vorgesehen, das Verfahren aufweisen die folgenden Schritte:
Erstellen der entsprechenden Icons derart, dass mit den Icons korrespondierende Sensorparameter, die durch die Steuereinrichtung erfasst werden, in den Icons dargestellt werden.

Gemäß einer Weiterbildung ist ein Computerprogramm, welches derart eingerichtet ist, dass es die vorstehenden Verfahren ausführen kann.

Gemäß einer Weiterbildung ist ein Computerlesbares Speichermedium vorgesehen, dass das vorstehende Computerprogramm beinhaltet.

Obschon alle vorstehenden Einzelmerkmale und Details eines Aspekts der Erfindung und der Weiterbildungen dieses Aspekts in Zusammenhang mit der Biomasse-Heizanlage beschrieben sind, so sind diese Einzelmerkmale und Details auch als solche unabhängig von der Biomasse-Heizanlage mit Bezug auf eine Steuereinrichtung für eine Anlage offenbart.

Zudem vorstehenden sind unabhängig von der Biomasse-Heizanlage und dem Installationsverfahren eine Rauchgasrezirkulationseinrichtung, eine Übergangsschnecke, eine Primärmischeinheit, eine Sekundärmischeinheit und ein Rauchgaskondensator beschrieben und können entsprechend unabhängig davon beansprucht werden.

Gemäß einem ergänzenden Aspekt der vorliegenden Offenbarung ist entsprechend eine Biomasse-Heizanlage zur Verfeuerung von Brennstoff in Form von Pellets und/oder Hackgut vorgesehen, die Anlage aufweisend das Folgende: einen Kessel mit einer Brenneinrichtung; einen Wärmetauscher mit einem Eintritt und einem Austritt; wobei die Brenneinrichtung eine Brennkammer mit einer Primärverbrennungszone und mit einer stromabwärts dazu vorgesehenen Sekundärverbrennungszone aufweist; wobei die Sekundärverbrennungszone der Brennkammer strömungstechnisch mit dem Eintritt des Wärmetauschers verbunden ist; wobei die Primärverbrennungszone durch eine Mehrzahl von Brennkammersteinen seitlich umfasst ist.

Die Vorteile dieser Konfiguration und auch der folgenden Aspekte ergeben sich aus der folgenden Beschreibung der zugehörigen Ausführungsbeispiele.

Gemäß einer Weiterbildung des vorstehenden Aspekts ist Biomasse-Heizanlage vorgesehen, die weiter das Folgende aufweist: eine Rezirkulationseinrichtung zum Rezirkulieren eines bei der Verfeuerung des Brennstoffs in der Brenneinrichtung erzeugten Rauchgases; wobei die Rezirkulationseinrichtung das Folgende aufweist: einen Rezirkulationseintritt, der stromabwärts zu dem Austritt des Wärmetauschers vorgesehen und strömungstechnisch mit diesem verbunden ist; und einen Primärluftkanal für die Zufuhr von Primärluft; eine Primärmischeinheit mit einer Primärmischkammer und einem Primärmischkanal, wobei die Primärmischkammer stromabwärts zu dem Rezirkulationseintritt und dem Primärluftkanal vorgesehen und mit diesen strömungstechnisch verbunden ist; und zumindest zwei Luftventile, die eingangsseitig an der Primärmischkammer vorgesehen sind; und einen Primärdurchtritt in die Primärverbrennungszone, der stromabwärts zu dem Primärmischkanal vorgesehen ist und mit diesem strömungstechnisch verbunden ist; wobei die Primärmischeinheit derart eingerichtet ist, dass diese das Rauchgas aus dem Rezirkulationseintritt mit der Primärluft aus dem Primärluftkanal mittels der zumindest zwei Luftventile der Primärmischkammer mischen kann.

Gemäß einer Weiterbildung des vorstehenden Aspekts ist Biomasse-Heizanlage vorgesehen, die weiter das Folgende aufweist: der Primärmischkanal mit einem Primärmischkammeraustritt der Primärmischkammer unmittelbar verbunden ist, und der Primärmischkanal stromabwärts zu der Primärmischkammer vorgesehen ist.

Gemäß einer Weiterbildung des vorstehenden Aspekts ist Biomasse-Heizanlage vorgesehen, die weiter das Folgende aufweist: der Primärmischkanal sich geradlinig erstreckt und von Anfang bis Ende eine Mindestlänge von 700 mm aufweist.

Gemäß einer Weiterbildung des vorstehenden Aspekts ist Biomasse-Heizanlage vorgesehen, die weiter das Folgende aufweist: die Luftventile der Primärmischkammer Drehschieberventile sind, die jeweils einen Ventilkörper mit zumindest einem sichelförmigen Ventilflügel und mit zumindest einer korrespondierenden sichelförmigen Ventildurchtrittsöffnung in die Primärmischkammer aufweisen. Gemäß einer Weiterbildung des vorstehenden Aspekts ist Biomasse-Heizanlage vorgesehen, die weiter das Folgende aufweist: die Primärmischkammer ausgangsseitig einen Primärmischkammeraustritt aufweist und; die Primärmischkammer eingangsseitig zumindest zwei Ventildurchtrittsöffnungen aufweist; und die Primärmischkammer derart eingerichtet ist, dass sich die zumindest zwei Ventildurchtrittsöffnungen und der Primärmischkammeraustritt nicht durch die Primärmischkammer hindurch gegenüberliegen, so dass die durch die zumindest zwei Ventildurchtrittsöffnungen in die Primärmischkammer eintretenden Strömungen in der Primärmischkammer ab- oder umgelenkt werden.

Gemäß einer Weiterbildung des vorstehenden Aspekts ist Biomasse-Heizanlage vorgesehen, die weiter das Folgende aufweist: die Rezirkulationseinrichtung zudem das Folgende aufweist: einen Sekundärluftkanal für die Zufuhr von Sekundärluft; eine Sekundärmischeinheit mit einer Sekundärmischkammer und einem Sekundärmischkanal, wobei die Sekundärmischkammer stromabwärts zu dem Rezirkulationseintritt und dem Sekundärluftkanal vorgesehen und mit diesen strömungstechnisch verbunden ist; und zumindest zwei Luftventile, die eingangsseitig an der Sekundärmischkammer vorgesehen sind; und Sekundärluftdüsen, die in den Brennkammersteinen vorgesehen sind und die seitlich in die Primärverbrennungszone gerichtet sind, und die stromabwärts zu dem Sekundärmischkanal vorgesehen und mit diesem strömungstechnisch verbunden sind; wobei die Sekundärmischeinheit derart eingerichtet ist, dass diese das Rauchgas aus dem Rezirkulationseintritt mit der Sekundärluft aus dem Sekundärluftkanal mittels der zumindest zwei Luftventile der Sekundärmischkammer mischen kann.

Gemäß einer Weiterbildung des vorstehenden Aspekts ist Biomasse-Heizanlage vorgesehen, die weiter das Folgende aufweist: einen Rauchgaskondensator, der stromabwärts zu dem Wärmetauscher vorgesehen und mit diesem strömungstechnisch verbunden ist; wobei: der Rauchgaskondensator einen ersten Fluidanschluss und einen zweiten Fluidanschluss zur Beströmung des Rauchgaskondensators mit einem Wärmetauschermedium aufweist; und der Rauchgaskondensator eine Vielzahl von U-förmigen Wärmetauscherrohren aufweist, wobei die Vielzahl der U-förmigen Wärmetauscherrohre gruppenweise in einer ersten Richtung parallel zueinander angeordnet ist; wobei die Gruppen der Wärmetauscherrohre in einer zweiten Richtung parallel zueinander angeordnet sind; wobei die Gruppen der Wärmetauscherrohre strömungstechnisch zwischen dem Fluidanschluss und dem zweiten Fluidanschluss in Serie miteinander verbunden sind; die Vielzahl der U-förmigen Wärmetauscherrohre derart angeordnet ist, dass diese in Bezug auf die Durchströmung der Vielzahl von Wärmetauscherrohren mit dem Rauchgas eine Kreuz-Gegenstrom Konfiguration ausbilden.

Gemäß einer Weiterbildung des vorstehenden Aspekts ist Biomasse-Heizanlage vorgesehen, die weiter das Folgende aufweist: die Vielzahl der U-förmigen Wärmetauscherrohre derart angeordnet ist, dass diese für die Durchströmung mit dem Rauchgas strömungstechnisch durchgängige Gassen in der zweiten Richtung ausbilden, wobei die Gassen eine (horizontale) Minimalbreite SP2 von 6,0 mm +- 0,5 mm aufweisen.

Gemäß einer Weiterbildung des vorstehenden Aspekts ist Biomasse-Heizanlage vorgesehen, die weiter das Folgende aufweist: die Enden aller U-förmigen Wärmetauscherrohre in einem plattenförmigen Rohrbodenelement aufgenommen angeordnet sind; und eine Anzahl von 7 bis 12, vorzugsweise von 8 bis 10, Wärmetauscherrohren 493 jeweils als Gruppe in der ersten Richtung angeordnet sind; eine Anzahl von 8 bis 14, vorzugsweise 10 bis 12, Gruppen von Wärmetauscherrohren 493 in der zweiten Richtung angeordnet sind.

Gemäß einer Weiterbildung des vorstehenden Aspekts ist Biomasse-Heizanlage vorgesehen, die weiter das Folgende aufweist: die U-förmigen Wärmetauscherrohre eine Maximallänge von 421 mm +- 50 mm aufweisen; und/oder aus dem Werkstoff 1.4462 (in der beim Anmeldetag dieser Anmeldung gültigen Fassung der Definition dieses Werkstoffs) bestehen.

Gemäß einer Weiterbildung des vorstehenden Aspekts ist Biomasse-Heizanlage vorgesehen, die weiter das Folgende aufweist: eine Ascheaustragungsschnecke zum Befördern von Verbrennungsrückständen aus dem Kessel heraus; wobei die Ascheaustragungsschnecke eine Übergangsschnecke aufweist, die in einem Übergangsschneckengehäuse drehbar aufgenommen angeordnet ist, und die einen Gegenlauf aufweist.

Gemäß einer Weiterbildung des vorstehenden Aspekts ist Biomasse-Heizanlage vorgesehen, die weiter das Folgende aufweist: die Verbrennungsrückstände in dem Übergangsschneckengehäuse bei Drehung der Ascheaustragungsschnecke derart kompaktiert werden, dass die Verbrennungsrückstände zwischen die Brennkammer und den Austritt des Wärmetauschers in Bezug auf das Rauchgas zumindest weitgehend trennen oder gasdicht abdichten.

Gemäß einer Weiterbildung des vorstehenden Aspekts ist Biomasse-Heizanlage vorgesehen, die weiter das Folgende aufweist: das Übergangsschneckengehäuse eine nach oben geöffnete Öffnung aufweist, die von einem Trichterelement umfasst ist, und der Gegenlauf der Übergangsschnecke derart angeordnet ist, dass die Verbrennungsrückstände bei Drehung der Ascheaustragungsschnecke nach oben aus der Öffnung ausgetragen werden.

Gemäß einer Weiterbildung des vorstehenden Aspekts ist Biomasse-Heizanlage vorgesehen, die weiter das Folgende aufweist: die Ascheaustragungsschnecke auf einer Seite der Übergangsschnecke einen größeren Durchmesser aufweist, als auf der anderen Seite der Übergangsschnecke.

"Horizontal" kann vorliegend eine ebene Ausrichtung einer Achse oder eines Querschnitts in der Annahme bezeichnen, dass der Kessel ebenso horizontal aufgestellt ist, womit beispielsweise das Erdniveau die Referenz sein kann. Alternativ kann "Horizontal" vorliegend "parallel" zur Grundebene des Kessels bedeuten, so wie diese üblicherweise definiert wird. Weiter alternativ kann, insbesondere bei einem Fehlen einer Bezugsebene, "horizontal" lediglich als "Parallel" zur Verbrennungsebene des Rosts verstanden werden.

Obschon alle vorstehenden Einzelmerkmale und Details eines Aspekts der Erfindung und der Weiterbildungen dieses Aspekts in Zusammenhang mit der Biomasse-Heizanlage und der Rezirkulationseinrichtung beschrieben sind, so sind diese Einzelmerkmale und Details auch als solche unabhängig von der Biomasse-Heizanlage offenbart.

Insbesondere sind unabhängig von der Biomasse-Heizanlage eine Rauchgasrezirkulationseinrichtung, eine Übergangsschnecke, eine Primärmischeinheit, eine Sekundärmischeinheit und ein Rauchgaskondensator beschrieben und können entsprechend unabhängig davon beansprucht werden.

Insofern ist ergänzend eine Rezirkulationseinrichtung zum Rezirkulieren eines bei der Verfeuerung des Brennstoffs in einer Brenneinrichtung erzeugten Rauchgases offenbart, wobei die Rezirkulationseinrichtung das Folgende aufweist: einen Rezirkulationseintritt, der eingerichtet ist, stromabwärts zu dem Austritt des Wärmetauschers vorgesehen und strömungstechnisch mit diesem verbunden zu werden; und einen Primärluftkanal für die Zufuhr von Primärluft; eine Primärmischeinheit mit einer Primärmischkammer und einem Primärmischkanal, wobei die Primärmischkammer stromabwärts zu dem Rezirkulationseintritt und dem Primärluftkanal vorgesehen und mit diesen strömungstechnisch verbunden ist; und zumindest zwei Luftventile, die eingangsseitig an der Primärmischkammer vorgesehen sind; und einen Primärdurchtritt in die Primärverbrennungszone, der stromabwärts zu dem Primärmischkanal vorgesehen ist und mit diesem strömungstechnisch verbunden ist; wobei die Primärmischeinheit derart eingerichtet ist, dass diese das Rauchgas aus dem Rezirkulationseintritt mit der Primärluft aus dem Primärluftkanal mittels der zumindest zwei Luftventile der Primärmischkammer mischen kann.

Diese Rezirkulationseinrichtung kann mit weiteren hierin offenbarten Aspekten und Einzelmerkmalen kombiniert werden, so wie der Fachmann dies als technisch machbar erachtet.

Es ist weiter ein Rauchgaskondensator offenbart, der mit einem Abgasausgang eines Kessels verbunden werden kann; wobei: der Rauchgaskondensator einen ersten Fluidanschluss und einen zweiten Fluidanschluss zur Beströmung des Rauchgaskondensators mit einem Wärmetauschermedium aufweist; und der Rauchgaskondensator eine Vielzahl von U-förmigen Wärmetauscherrohren aufweist, wobei die Vielzahl der U-förmigen Wärmetauscherrohre gruppenweise in einer ersten Richtung parallel zueinander angeordnet ist; wobei die Gruppen der Wärmetauscherrohre in einer zweiten Richtung parallel zueinander angeordnet sind; wobei die Gruppen der Wärmetauscherrohre strömungstechnisch zwischen dem Fluidanschluss und dem zweiten Fluidanschluss in Serie miteinander verbunden sind; die Vielzahl der U-förmigen Wärmetauscherrohre derart angeordnet ist, dass diese in Bezug auf die Durchströmung der Vielzahl von Wärmetauscherrohren mit dem Rauchgas eine Kreuz-Gegenstrom Konfiguration ausbilden.

Dieser Rauchgaskondensator kann mit weiteren hierin offenbarten Aspekten und Einzelmerkmalen kombiniert werden, so wie der Fachmann dies als technisch machbar erachtet.

Weiter eine Ascheaustragungsschnecke zum Befördern von Verbrennungsrückständen aus einem Kessel einer Biomasse-Heizanlage offenbart; wobei die Ascheaustragungsschnecke eine Übergangsschnecke aufweist, die in einem Übergangsschneckengehäuse drehbar aufgenommen angeordnet ist, und die einen Gegenlauf aufweist.

Diese Ascheaustragungsschnecke kann mit weiteren hierin offenbarten Aspekten und Einzelmerkmalen kombiniert werden, so wie der Fachmann dies als technisch machbar erachtet.

Die erfindungsgemäße Biomasse-Heizanlage wird nachfolgend in Ausführungsbeispielen und einzelnen Aspekten anhand der Figuren der Zeichnung näher erläutert:
- Fig. 1: zeigt eine dreidimensionale Überblicksansicht einer Biomasse-Heizanlage gemäß einer Ausführungsform der Erfindung;
- Fig. 2: zeigt eine Querschnittsansicht durch die Biomasse-Heizanlage der Fig. 1, welche entlang einer Schnittlinie SL1 vorgenommen wurde und welche aus der Seitenansicht S betrachtet dargestellt ist;
- Fig. 3: zeigt ebenso eine Querschnittsansicht durch die Biomasse-Heizanlage der Fig. 1 mit einer Darstellung des Strömungsverlaufs, wobei die Querschnittsansicht entlang einer Schnittlinie SL1 vorgenommen wurde und aus der Seitenansicht S betrachtet dargestellt ist;
- Fig. 4: zeigt eine Teilansicht der Fig. 2, die eine Brennkammergeometrie des Kessels der Fig. 2 und Fig. 3 darstellt;
- Fig. 5: zeigt eine Schnittansicht durch den Kessel bzw. die Brennkammer des Kessels entlang der Vertikalschnittlinie A2 der Fig. 4;
- Fig. 6: zeigt eine dreidimensionale Schnittansicht auf die Primärverbrennungszone der Brennkammer mit dem Drehrost der Fig. 4;
- Fig. 7: zeigt entsprechend zur Fig. 6 eine Explosionsdarstellung der Brennkammersteine;
- Fig. 8: zeigt eine Aufsicht auf den Drehrost mit Drehrostelementen von oben aus Sicht der Schnittlinie A1 der Fig. 2;
- Fig. 9: zeigt den Drehrost der Fig. 2 in geschlossener Position, wobei alle Drehrostelemente horizontal ausgerichtet bzw. geschlossen sind;
- Fig. 10: zeigt den Drehrost der Fig. 9 in dem Zustand einer Teilabreinigung des Drehrosts im Gluterhaltungsbetrieb;
- Fig. 11: zeigt den Drehrost der Fig. 9 im Zustand der Universalabreinigung, welche bevorzugt während eines Anlagenstillstands durchgeführt wird;
- Fig. 12: zeigt eine herausgestellte Schrägansicht einer beispielhaften Rezirkulationseinrichtung mit Brennkammersteinen, die eine Primärverbrennungszone umgeben;
- Fig. 13: zeigt eine herausgestellte semitransparente Schrägansicht der Rezirkulationseinrichtung der Fig. 12;
- Fig. 14: zeigt eine Seitenansicht der Rezirkulationseinrichtung 5 der Figuren 12 und 13;
- Fig. 15: zeigt ein schematisches Blockdiagramm, dass den Strömungsverlauf in den jeweiligen Einzelkomponenten der Biomasse-Heizanlage und der Rezirkulationseinrichtung der Fig. 12 bis 14 zeigt;
- Fig. 16: zeigt, korrespondierend zu den Außenansichten der Fig. 12 und der Fig. 13, eine Schnittansicht einer beispielhaften Primärmischkammer, sowie von zwei eingangsseitigen (Primär-) Luftventile 52 mit deren (Primär-) Ventilvorkammern 525 aus einem schrägen Sichtwinkel;
- Fig. 17: zeigt, korrespondierend zu den Außenansichten der Fig. 12 und der Fig. 13, betreffend der optionalen Sekundärrezirkulation eine Schnittansicht einer beispielhaften Sekundärmischkammer, sowie von zwei eingangsseitigen (Sekundär-) Luftventilen mit deren (Sekundär-) Ventilvorkammern aus einem weiteren schrägen Sichtwinkel;
- Fig. 18: zeigt eine dreidimensionale Überblicksansicht der Biomasse-Heizanlage der Fig. 1 mit einer zusätzlichen Außenverkleidung und einem zusätzlichen Rauchgaskondensator;
- Fig. 19a: zeigt den Rauchgaskondensator 49 der Fig. 18 in einer Seitenansicht aus der Richtung des Pfeils H der Fig. 18;
- Fig. 19b: zeigt den Rauchgaskondensator 49 der Fig. 18 in einer Seitenansicht aus der Richtung des Pfeils V der Fig. 18;
- Fig. 20: zeigt eine Innenansicht des Rauchgaskondensators der Fig. 19a und der Fig. 18;
- Fig. 21: zeigt den Rauchgaskondensator aus einer Ansicht von oben mit einem Blick in die Öffnung für die Rauchgaszuleitung des Rauchgaskondensators;
- Fig. 22: zeigt den Rauchgaskondensator der Fig. 18 aus einer horizontalen Schnittansicht von oben;
- Fig. 23: zeigt eine dreidimensionale Ansicht einer Vielzahl von Wärmetauscherrohren mit dem Rohrbodenelement und dem Rohrhalteelement;
- Fig. 24: zeigt eine Seitenansicht der Vielzahl der Wärmetauscherrohre der Fig. 23;
- Fig. 25: zeigt eine Draufsicht auf die Vielzahl der Wärmetauscherrohre der Fig. 23;
- Fig. 26: zeigt eine Draufsicht auf die Vielzahl der Wärmetauscherrohre der Fig. 23;
- Fig. 27a: zeigt eine aus den Figuren 2 und 3 herausgestellte Schnittansicht einer Ascheaustragungsschnecke mit einer Übergangsschnecke;
- Fig. 27b: zeigt eine dreidimensionale Schrägansicht der Ascheaustragungsschnecke der Fig. 27a;
- Fig. 28: zeigt eine dreidimensionale Schrägansicht eines Gehäuses der Übergangsschnecke;
- Fig. 29: zeigt eine Detailansicht der Schnittansicht der Ascheaustragungsschnecke mit der Übergangsschnecke der Fig. 27a;
- Fig. 30: zeigt ein Verfahren zur Inbetriebnahme der Biomasse-Heizanlage gemäß einer der Ausführungsformen der Fig. 1 bis 29 zur Verfeuerung von Brennstoff in Form von Pellets und/oder Hackgut;
- Fig. 31: zeigt einen optionalen Teil des Verfahrens zur Inbetriebnahme der Biomasse-Heizanlage in Fortführung des Verfahrens der Fig. 30;
- Fig. 32: zeigt einen optionalen Teil des Verfahrens zur Inbetriebnahme der Biomasse-Heizanlage in Fortführung des Verfahrens der Fig. 30 oder der Fig. 31;
- Fig. 33: zeigt einen optionalen Teil des Verfahrens zur Inbetriebnahme der Biomasse-Heizanlage in Fortführung des Verfahrens der Fig. 30, der Fig. 31 oder der Fig. 32;
- Fig. 34: zeigt einen optionalen Teil des Verfahrens zur Inbetriebnahme der Biomasse-Heizanlage in Fortführung des Verfahrens der Fig. 30, der Fig. 31, der Fig. 32 oder der Fig. 33;
- Fig. 35: zeigt einen optionalen Teil des Verfahrens zur Inbetriebnahme der Biomasse-Heizanlage in Fortführung des Verfahrens der Fig. 30, der Fig. 31, der Fig. 32, der Fig. 34 oder der Fig. 35;
- Fig. 36: zeigt eine beispielhafte Darstellung der Anzeige eines Displays einer Steuereinrichtung der Biomasse-Heizanlage der Fig. 18.

### BESCHREIBUNG VON BEISPIELHAFTEN AUSFÜHRUNGSFORMEN

Im Folgenden werden verschiedene Ausführungsformen der vorliegenden Offenbarung unter Bezugnahme auf die beigefügten Zeichnungen offenbart. Ausführungsformen und darin verwendete Begriffe sollen jedoch nicht dazu dienen, die vorliegende Offenbarung auf bestimmte Ausführungsformen zu beschränken, und sie sollte so ausgelegt werden, dass sie verschiedene Änderungen, Äquivalente und/oder Alternativen gemäß den Ausführungsformen der vorliegenden Offenbarung beinhaltet.

Sollten in der Beschreibung allgemeinere Begriffe für in den Figuren dargestellte Merkmale oder Elemente verwendet werden, so ist beabsichtigt, dass für den Fachmann nicht nur das spezielle Merkmal oder Element in den Figuren offenbart ist, sondern auch die allgemeinere technische Lehre.

In Bezug auf die Beschreibung der Figuren können die gleichen Bezugszeichen in den einzelnen Figuren verwendet werden, um auf ähnliche oder technisch entsprechende Elemente zu verweisen. Weiter können der Übersichtlichkeit halber in einzelnen Detail- oder Ausschnittsansichten mehr Elemente oder Merkmale mit Bezugszeichen dargestellt sein, als in den Überblicksansichten. Dabei ist davon auszugehen, dass diese Elemente oder Merkmale auch entsprechend in den Überblicksdarstellungen offenbart sind, auch wenn diese dort nicht explizit aufgeführt sind.

Es ist zu verstehen, dass eine Singularform eines Substantivs, das einem Gegenstand entspricht, eines oder mehrere der Dinge beinhalten kann, es sei denn, der betreffende Kontext weist eindeutig auf etwas anderes hin.

In der vorliegenden Offenbarung kann ein Ausdruck wie "A oder B", "mindestens einer von A oder/und B" oder "einer oder mehrere von A oder/und B" alle möglichen Kombinationen von zusammen aufgeführten Merkmalen beinhalten. Ausdrücke wie "erster", "zweiter", "primär" oder "sekundär", die hierin verwendet werden, können verschiedene Elemente unabhängig von ihrer Reihenfolge und/oder Bedeutung darstellen und schränken entsprechende Elemente nicht ein. Wenn beschrieben wird, dass ein Element (z.B. ein erstes Element) "funktionsfähig" oder "kommunikativ" mit einem anderen Element (z.B. einem zweiten Element) gekoppelt oder verbunden ist, kann das Element direkt mit dem anderen Element verbunden werden oder mit dem anderen Element über ein anderes Element (z.B. ein drittes Element) verbunden werden.

Ein in der vorliegenden Offenbarung verwendeter Ausdruck "konfiguriert zu" (oder "eingerichtet") kann beispielsweise durch "geeignet für", "geeignet zu", "angepasst zu", "gemacht zu", "fähig zu" oder "entworfen zu" ersetzt werden, je nach dem technisch Möglichen. Alternativ kann in einer bestimmten Situation ein Ausdruck "Vorrichtung konfiguriert zu" oder "eingerichtet zu" bedeuten, dass die Vorrichtung zusammen mit einer anderen Vorrichtung oder Komponente arbeiten kann, oder eine entsprechende Funktion ausführen kann.

Alle Größenangaben, welche in "mm" angegeben sind, sind als ein Größenbereich von +- 1 mm um den angegebenen Wert zu verstehen, sofern nicht eine andere Toleranz oder andere Bereiche explizit angegeben ist.

Anzumerken ist, dass die vorliegenden Einzelaspekte, beispielsweise der Drehrost, die Brennkammer oder die Filtereinrichtung gesondert von bzw. getrennt von der Biomasse-Heizanlage hierin als Einzelteile oder Einzelvorrichtungen offenbart sind. Es ist dem Fachmann also klar, dass auch einzelne Aspekte oder Anlagenteile hierin auch für sich genommen offenbart sind. Vorliegend sind die einzelnen Aspekte oder Anlageteile insbesondere in den durch Klammern gekennzeichneten Unterkapiteln offenbart. Es ist vorgesehen, dass diese einzelnen Aspekte auch gesondert beansprucht werden können.

Weiter sind der Übersichtlichkeit halber in den Figuren nicht alle Merkmale und Elemente, insbesondere wenn sich diese wiederholen, einzeln bezeichnet. Es sind vielmehr die Elemente und Merkmale jeweils exemplarisch bezeichnet. Analoge oder gleiche Elemente sind dann als solche zu verstehen.

### (Biomasse-Heizanlage)

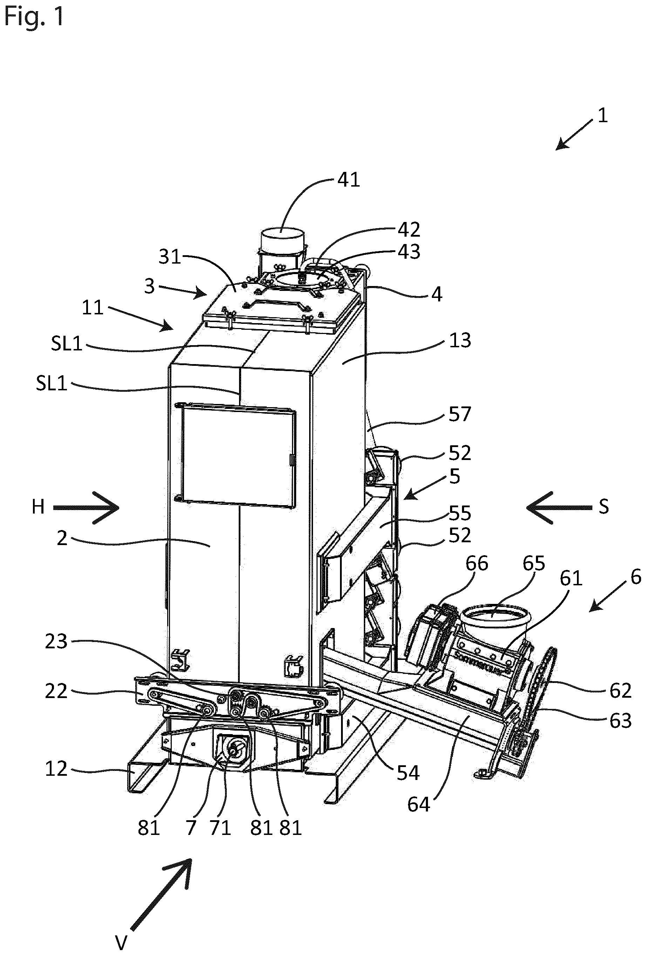

Fig. 1 zeigt eine dreidimensionale Überblicksansicht der Biomasse-Heizanlage 1 gemäß einer Ausführungsform der Erfindung.

Der Pfeil V bezeichnet in den Figuren die Vorderansicht der Anlage 1, und der Pfeil S bezeichnet in den Figuren die Seitenansicht der Anlage 1.

Die Biomasse-Heizanlage 1 weist einen Kessel 11 auf, der auf einem Kesselfuß 12 gelagert ist. Der Kessel 11 weist ein Kesselgehäuse 13, beispielsweise aus Stahlblech, auf.

Im vorderen Teil des Kessels 11 befindet sich eine Brenneinrichtung 2 (nicht dargestellt), die über eine erste Wartungsöffnung mit einem Verschluss 21 erreicht werden kann. Eine Drehmechanikhalterung 22 für einen Drehrost 25 (nicht dargestellt) lagert eine Drehmechanik 23, mit der Antriebskräfte auf Lagerachsen 81 des Drehrosts 25 übertragen werden können.

Im Mittelteil des Kessels 11 befindet sich ein Wärmetauscher 3 (nicht dargestellt), der von oben über eine zweite Wartungsöffnung mit einem Verschluss 31 erreicht werden kann.

Im Hinterteil des Kessels 11 befindet sich eine optionale Filtereinrichtung 4 (nicht dargestellt) mit einer Elektrode 44 (nicht dargestellt), die mit einer isolierenden Elektrodenhalterung 43 aufgehängt ist, und die über eine Elektrodenversorgungsleitung 42 unter Spannung gesetzt wird. Das Abgas der Biomasse-Heizanlage 1 wird über einen Abgasausgang 41 abgeführt, der der Filtereinrichtung 4 strömungstechnisch (fluidisch) nachgelagert angeordnet ist. Hier kann ein Ventilator vorgesehen sein.

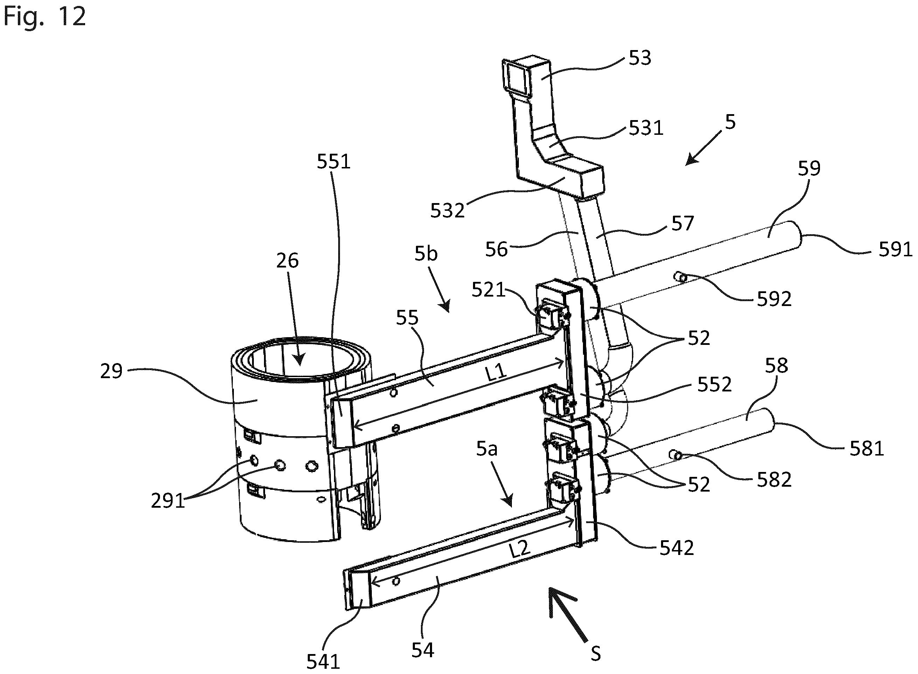

Hinter dem Kessel 11 ist eine Rezirkulationseinrichtung 5 vorgesehen, die einen Teil des Rauch- bzw. Abgases über Rezirkulationskanäle 54 und 55 und Luftventile 52 zur Wiederverwendung beim Verbrennungsvorgang rezirkuliert. Diese Rezirkulationseinrichtung 5 wird später mit Bezug auf die Figuren 12 bis 17 im Detail erläutert.

Weiter weist die Biomasse-Heizanlage 1 eine Brennstoffzufuhr 6 auf, mit der der Brennstoff kontrolliert zu der Brenneinrichtung 2 in die Primärverbrennungszone 26 von der Seite auf den Drehrost 25 befördert wird. Die Brennstoffzufuhr 6 weist eine Zellradschleuse 61 mit einer Brennstoffzufuhröffnung 65 auf, wobei die Zellradschleuse 61 einen Antriebsmotor 66 mit einer Ansteuerelektronik aufweist. Eine von dem Antriebsmotor 66 angetriebene Achse 62 treibt eine Übersetzungsmechanik 63 an, die eine (nicht dargestellte) Brennstoff-Förderschnecke 67 antreiben kann, so dass der Brennstoff in einem Brennstoff-Zufuhrkanal 64 zu der Brenneinrichtung 2 gefördert wird.

Im unteren Teil der Biomasse-Heizanlage 1 ist eine Ascheabfuhreinrichtung 7 vorgesehen, welche eine Ascheaustragungsschnecke 71 mit einer Übergangsschnecke 73 in einem Ascheaustragungskanal aufweist, die von einem Motor 72 betrieben wird.

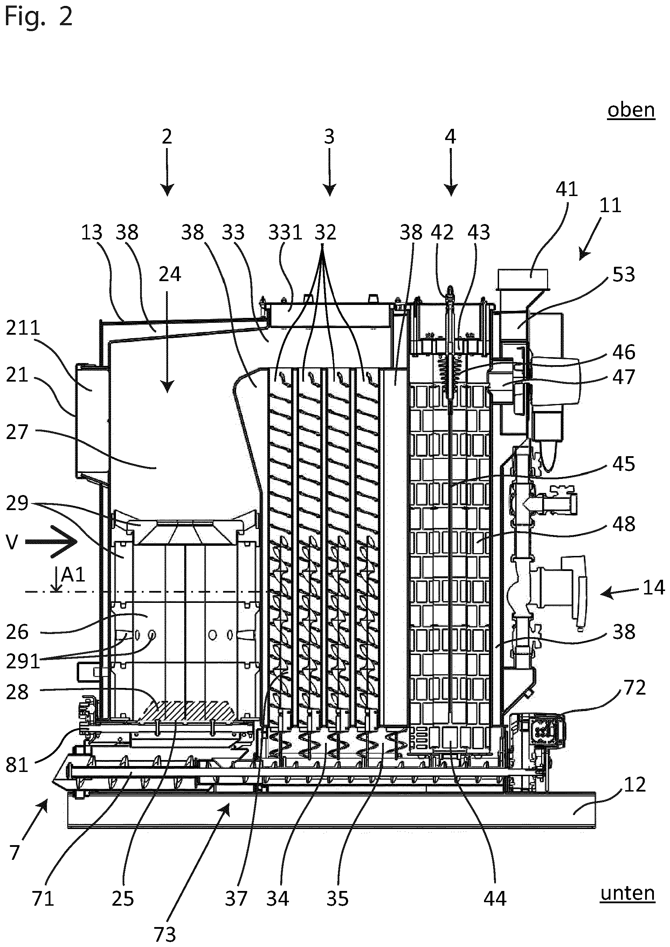

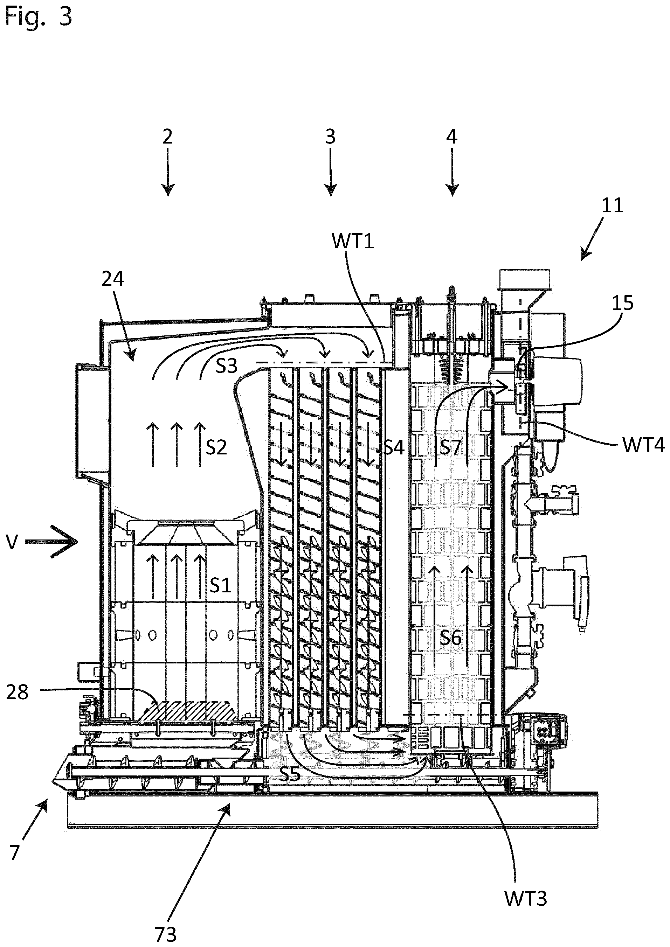

Fig. 2 zeigt nun eine Querschnittsansicht durch die Biomasse-Heizanlage 1 der Fig. 1, welche entlang einer Schnittlinie SL1 vorgenommen wurde und welche aus der Seitenansicht S betrachtet dargestellt ist. In der korrespondierenden Fig. 3, welche den gleichen Schnitt wie Fig. 2 darstellt, sind der Übersichtlichkeit halber die Strömungen des Rauchgases, und strömungstechnische Querschnitte schematisch dargestellt. Zu Fig. 3 anzumerken ist, dass einzelne Bereiche im Vergleich zu der Fig. 2 abgeblendet dargestellt sind. Dies dient nur der Übersichtlichkeit der Fig. 3 und der Sichtbarkeit der Strömungspfeile S5, S6 und S7.

Von links nach rechts sind in Fig. 2 die Brenneinrichtung 2, der Wärmetauscher 3 und eine (optionale) Filtereinrichtung 4 des Kessels 11 vorgesehen. Der Kessel 11 ist auf dem Kesselfuß 12 gelagert, und weist ein mehrwandiges Kesselgehäuse 13 auf, in welchem Wasser oder ein anderes fluides Wärmetauschmedium zirkulieren kann. Zur Zufuhr und Abfuhr des Wärmetauschmediums ist eine Wasserzirkulationseinrichtung 14 mit Pumpe, Ventilen, Leitungen, etc. vorgesehen.

Die Brenneinrichtung 2 weist eine Brennkammer 24 auf, in der im Kern der Verbrennungsprozess des Brennstoffes stattfindet. Die Brennkammer 24 weist einen, später näher erläuterten, mehrteiligen Drehrost 25 auf, auf dem das Brennstoffbett 28 aufliegt. Der mehrteilige Drehrost 25 ist mittels einer Mehrzahl von Lagerachsen 81 drehbar gelagert angeordnet.

Weiter bezugnehmend auf Fig. 2 ist die Primärverbrennungszone 26 der Brennkammer 24 durch (eine Mehrzahl von) Brennkammersteine(n) 29 umfasst, womit die Brennkammersteine 29 die Geometrie der Primärverbrennungszone 26 definieren. Der Querschnitt der Primärverbrennungszone 26 (beispielsweise) entlang der Horizontalschnittlinie A1 ist im Wesentlichen oval (beispielsweise 380 mm +- 60mm x 320 mm +- 60 mm; dabei ist anzumerken, dass einige der vorstehenden Größenkombinationen auch einen kreisförmigen Querschnitt ergeben können). Die Pfeile S1 der korrespondierenden Fig 3 geben die Primärströmung in der Primärverbrennungszone 26 schematisch wieder, wobei diese Primärströmung zudem (nicht näher dargestellt) einen Drall aufweist, um die Durchmischung des Rauchgases zu verbessern. Die Brennkammersteine 29 bilden die Innenverkleidung der Primärverbrennungszone 26 aus, speichern Wärme und sind dem Feuer direkt ausgesetzt. Damit schützen die Brennkammersteine 29 auch das weitere Material der Brennkammer 24, beispielsweise Gusseisen, vor der direkten Flammeneinwirkung in der Brennkammer 24. Die Brennkammersteine 29 sind vorzugsweise an die Form des Rosts 25 angepasst. Die Brennkammersteine 29 weisen weiter Sekundärluft- bzw. Rezirkulationsdüsen 291 auf, die das Rauchgas in die Primärverbrennungszone 26 zur erneuten Teilnahme am Verbrennungsprozess rezirkulieren. Die Sekundärluftdüsen bzw. Rezirkulationsdüsen 291 sind dabei nicht auf die Mitte der Primärverbrennungszone 26 ausgerichtet, sondern sind diese azentrisch ausgerichtet, um einen Drall der Strömung in der Primärverbrennungszone 26 zu bewirken (d.h., eine Wirbelströmung). Die Brennkammersteine 29 werden später noch eingehender erläutert. Eine Isolation 311 ist am Kesselrohreintritt vorgesehen. Die ovale Querschnittsform der Primärverbrennungszone 26 (und der Düse) begünstigen die Ausbildung einer Wirbelströmung vorteilhaft.

Eine Sekundärverbrennungszone 27 schließt sich an die Primärverbrennungszone 26 der Brennkammer 26 an und definiert den Strahlungsteil der Brennkammer 26. In dem Strahlungsteil gibt das bei der Verbrennung entstandene Rauchgas seine Wärmeenergie hauptsächlich durch Wärmestrahlung insbesondere an das Wärmetauschmedium ab, welches sich in den beiden linken Kammern für das Wärmetauschmedium 38 befindet. Die entsprechende Rauchgasströmung ist in Fig. 3 durch die Pfeile S2 und S3 angegeben. Die erste Wartungsöffnung 21 ist mit einem Dämmmaterial, beispielsweise Vermiculite™, isoliert. Die vorliegende Sekundärverbrennungszone 27 ist derart eingerichtet, dass ein Ausbrand des Rauchgases gewährleistet wird. Die spezielle geometrische Ausgestaltung der Sekundärverbrennungszone 27 wird später noch eingehender erläutert.

Nach der Sekundärverbrennungszone 27 strömt das Rauchgas über dessen Eintritt 33 in die Wärmetauscheinrichtung 3, welche ein Bündel von parallel zueinander vorgesehenen Kesselrohren 32 aufweist. In den Kesselrohren 32 strömt das Rauchgas nun abwärts, wie in Fig. 3 durch die Pfeile S4 angegeben. Man kann diesen Teil der Strömung auch als Konvektionsteil bezeichnen, da die Wärmeabgabe des Rauchgases im Wesentlichen an den Kesselrohrwänden über eine erzwungene Konvektion erfolgt. Durch die im Kessel 11 verursachten Temperaturgradienten im Wärmetauschermedium, beispielsweise im Wasser, stellt sich eine natürliche Konvektion des Wassers ein, welche eine Durchmischung des Kesselwassers begünstigt.

In den Kesselrohren 32 sind Federturbulatoren 36 und Spiral- bzw. Bandturbulatoren 37 angeordnet, um den Wirkungsgrad der Wärmetauscheinrichtung 4 zu verbessern.

Der Ausgang der Kesselrohre 32 mündet über den Wendekammereintritt 34 bzw. -einlass in die Wendekammer 35. Dabei ist die Wendekammer 35 derart gegenüber der Brennkammer 24 abgedichtet, dass kein Rauchgas aus der Wendekammer 35 direkt zurück in die Brennkammer 24 strömen kann. Allerdings ist trotzdem ein gemeinsamer (Ab-)Transportweg für die Verbrennungsrückstände vorgesehen, die im gesamten Strömungsbereich des Kessels 11 anfallen können. Falls die Filtereinrichtung 4 nicht vorgesehen ist, wird das Rauchgas wieder im Kessel 11 nach oben abgeführt. Der andere Fall der optionalen Filtereinrichtung 4 ist in den Fig. 2 und 3 dargestellt. Dabei wird das Rauchgas nach der Wendekammer 35 wieder nach oben in die Filtereinrichtung 4 eingeleitet (vgl. Pfeile S5), welche vorliegend beispielhaft eine elektrostatische Filtereinrichtung 4 ist. Dabei können am Eintritt 44 der Filtereinrichtung 4 Strömungsblenden vorgesehen sein, die die Rauchgasströmung homogenisieren.

Elektrostatische Staubfilter, oder auch Elektroabscheider genannt, sind Einrichtungen zur Abscheidung von Partikeln aus Gasen, die auf dem elektrostatischen Prinzip beruhen. Diese Filtereinrichtungen werden insbesondere zur elektrischen Reinigung von Abgasen verwendet. Bei Elektrofiltern werden Staubteilchen durch eine Koronaentladung elektrisch aufgeladen und zur entgegengesetzt aufgeladenen Elektrode gezogen. Die Koronaentladung findet auf einer dafür geeigneten, geladenen Hochspannungselektrode im Inneren des Elektrofilters statt. Die Elektrode ist bevorzugt mit herausragenden Spitzen und eventuell scharfen Kanten ausgeführt, weil dort die Dichte der Feldlinien und damit auch die elektrische Feldstärke am größten und somit die Koronaentladung begünstigt ist. Die gegengesetzte Elektrode besteht für gewöhnlich aus einem geerdeten Rauchgas- bzw. Abgasrohrabschnitt, der um die Elektrode gelagert ist. Der Abscheidungsgrad eines Elektrofilters ist insbesondere von der Verweilzeit der Abgase im Filtersystem und der Spannung zwischen Sprüh- und Abscheidungselektrode abhängig. Die dafür notwendige gleichgerichtete Hochspannung wird von einer Hochspannungserzeugungseinrichtung (nicht dargestellt) bereitgestellt. Die Hochspannungserzeugungsanlage und die Halterung für die Elektrode sind vor Staub und Verschmutzung zu schützen, um ungewollte Kriechströme zu vermeiden und die Standzeit der Anlage 1 zu verlängern.

Wie in Fig. 2 gezeigt, ist eine stabförmige Elektrode 45 (welche vorzugsweise wie eine längliche, plattenförmige Stahlfeder ausgestaltet ist) in etwa mittig in einem annähernd kaminförmigen Innenraum der Filtereinrichtung 4 gehaltert. Die Elektrode 45 besteht zumindest weitgehend aus einem hochwertigen Federstahl oder Chromstahl und ist von einer Elektrodenhalterung 43 über einen Hochspannungsisolator, d.h., eine Elektrodenisolation 46, gehaltert.

Die Elektrode 45 hängt schwingungsfähig nach unten in den Innenraum der Filtereinrichtung 4. Dabei kann die Elektrode 45 beispielsweise quer zur Längsachse der Elektrode 45 hin- und her schwingen.

Ein Käfig 48 dient gleichzeitig als Gegenelektrode und als Abreinigungsmechanik für die Filtereinrichtung 4. Der Käfig 48 ist mit dem Masse- bzw. Erdpotential verbunden. Durch den herrschenden Potentialunterschied wird das in der Filtereinrichtung 4 strömende Rauchgas bzw. Abgas, vgl. die Pfeile S6, gefiltert wie vorstehend erläutert. Im Falle der Abreinigung der Filtereinrichtung 4 wird die Elektrode 45 stromlos geschaltet. Der Käfig 48 weist vorzugsweise ein achteckiges regelmäßiges Querschnittsprofil auf. Der Käfig 48 kann vorzugsweise bei der Herstellung mit dem Laser zugeschnitten werden.

Das Rauchgas strömt nach dem Austritt aus dem Wärmetauscher 3 (aus dessen Austritt) durch die Wendekammer 34 in den Eintritt 44 der Filtereinrichtung 4.

Dabei ist die (optionale) Filtereinrichtung 4 optional vollintegriert in den Kessel 11 vorgesehen, womit die dem Wärmetauscher 3 zugewandte und von dem Wärmetauschermedium durchspülte Wandfläche auch aus Richtung der Filtereinrichtung 4 zum Wärmetausch eingesetzt wird, womit die Effizienz der Anlage 1 nochmals verbessert wird. Damit kann zumindest ein Teil der Wand die Filtereinrichtung 4 mit dem Wärmetauschmedium durchspült sein.

Am Filteraustritt 47 strömt das gereinigte Abgas aus der Filtereinrichtung 4 hinaus, wie durch die Pfeile S7 angegeben. Nach dem Filteraustritt wird ein Teil des Abgases über die Rezirkulationseinrichtung 5 wieder zu der Primärverbrennungszone 26 zurückgeführt. Auch dies wird später noch näher erläutert werden. Dieses zur Rezirkulierung bestimmte Abgas bzw. Rauchgas kann kurz auch als "Rezi" oder "Rezi-Gas" bezeichnet werden. Der verbleibende Teil des Abgases wird über den Abgasausgang 41 aus dem Kessel 11 hinausgeleitet.

Eine Ascheabfuhr 7 ist im unteren Teil des Kessels 11 angeordnet. Über eine Ascheaustragungsschnecke 71 wird die beispielsweise aus der Brennkammer 24, den Kesselrohren 32 und der Filtereinrichtung 4 herausfallende Asche seitlich aus dem Kessel 11 ausgefördert.

Der Kessel 11 dieser Ausführungsform wurde mittels CFD-Simulationen berechnet. Weiter wurden Praxisexperimente durchgeführt, um die CFD-Simulationen zu bestätigen. Ausgangspunkt der Überlegungen waren Berechnungen für einen 100 kW Kessel, wobei jedoch ein Leistungsbereich von 20 bis 500 kW berücksichtigt wurde.

Eine CFD-Simulation (CFD = Computational Fluid Dynamics = numerische Strömungsmechanik) ist die räumlich und zeitlich aufgelöste Simulation von Strömungs- und Wärmeleitprozessen. Dabei können die Strömungsprozesse laminar und/oder turbulent sein, von chemischen Reaktionen begleitet auftreten, oder es kann sich um ein mehrphasiges System handeln. CFD-Simulationen eignen sich somit gut als Design- und Optimierungswerkzeug. Bei der vorliegenden Erfindung wurden CDF-Simulationen eingesetzt, um die strömungstechnischen Parameter derart zu optimieren, dass die vorstehend aufgeführten Aufgaben der Erfindung gelöst werden. Insbesondere wurden im Ergebnis die mechanische Ausgestaltung und Dimensionierung des Kessels 11 maßgeblich durch die CFD-Simulation und auch durch zugehörige praktische Experimente definiert. Die Simulationsergebnisse basieren auf einer Strömungssimulation mit Berücksichtigung der Wärmeübertragung.

Die vorstehend aufgeführten Bestandteile der Biomasse-Heizanlage 1 und des Kessels 11, die Ergebnis der CFD-Simulationen sind, werden nachstehend eingehender beschrieben.

### (Brennkammer)

Die Gestaltung der Brennkammerform ist von Wichtigkeit, um die aufgabengemäßen Anforderungen einhalten zu können. Durch die Brennkammerform bzw. -geometrie erreicht werden sollen eine möglichst gute turbulente Durchmischung und Homogenisierung der Strömung über den Querschnitt des Rauchgaskanals, eine Minimierung des Feuerungsvolumens, eine Reduktion des Luftüberschusses und des Rezirkulationsverhältnisses (Wirkungsgrad, Betriebskosten), eine Reduktion der CO-Emissionen und der NOx-Emissionen, eine Reduktion von Temperaturspitzen (Fouling und Verschlackung) sowie eine Reduktion von Rauchgas-Geschwindigkeitsspitzen (Materialbeanspruchung und Erosion).

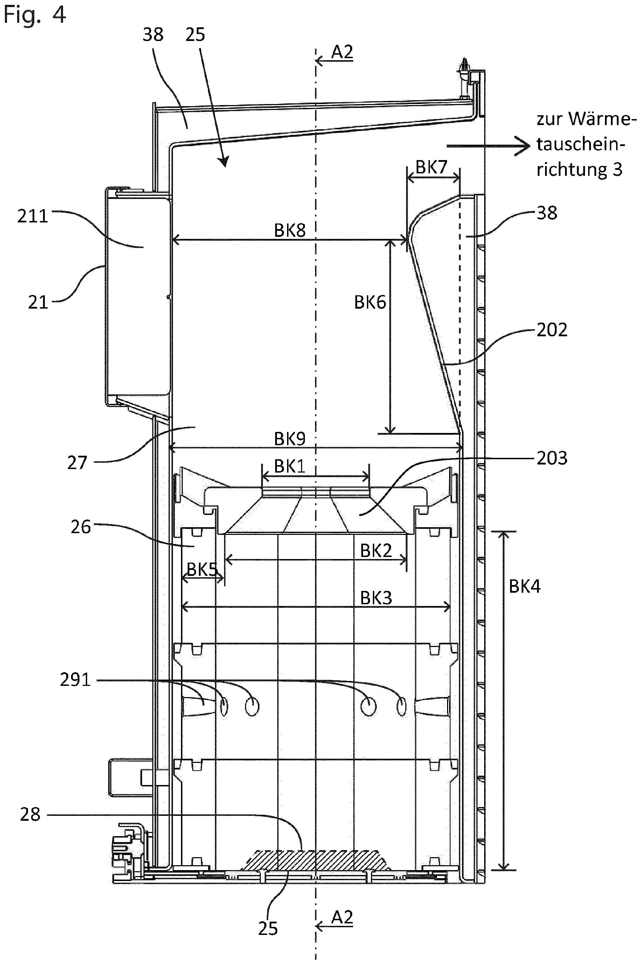

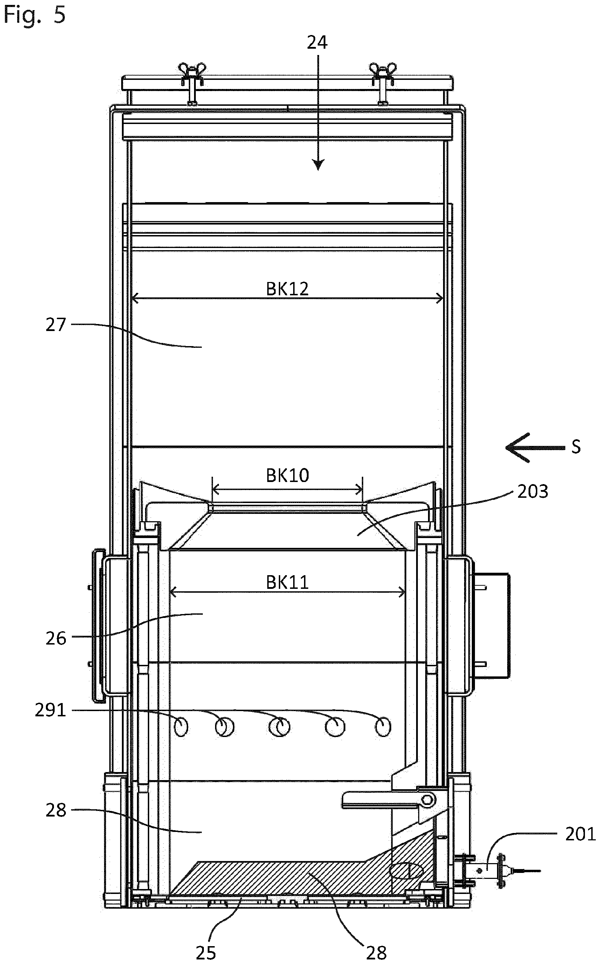

Die Fig. 4, die eine Teilansicht der Fig. 2 ist, und die Fig. 5, welche eine Schnittansicht durch den Kessel 11 entlang der Vertikalschnittlinie A2 ist, stellen eine Brennkammergeometrie dar, die den vorstehend genannten Anforderungen für Biomasse-Heizanlagen über einen weiten Leistungsbereich von beispielsweise 20 bis 500 kW gerecht wird.

Die in den Figuren 3 und 4 angegebenen und über CFD-Berechnungen und Praxisexperimente ermittelten Maße sind im Einzelnen wie folgt:
BK1 = 172 mm +- 40 mm, vorzugsweise +- 17 mm;
BK2 = 300 mm +- 50 mm, vorzugsweise +- 30 mm;
BK3 = 430 mm +- 80 mm, vorzugsweise +- 40 mm;
BK4 = 538 mm +- 80 mm, vorzugsweise +- 50 mm;
BK5 = (BK3 - BK2) / 2 = bspw. 65 mm +- 30 mm, vorzugsweise +- 20 mm;
BK6 = 307 mm +- 50 mm, vorzugsweise +- 20 mm;
BK7 = 82 mm +- 20 mm, vorzugsweise +- 20 mm;
BK8 = 379 mm +- 40 mm, vorzugsweise +- 20 mm;
BK9 = 470 mm +- 50 mm, vorzugsweise +- 20 mm;
BK10 = 232 mm +- 40 mm, vorzugsweise +- 20 mm;
BK11 = 380 mm +- 60 mm, vorzugsweise +- 30 mm;
BK12 = 460 mm +- 80 mm, vorzugsweise +- 30 mm.

Mit diesen Werten werden vorliegend sowohl die Geometrien der Primärverbrennungszone 26 als auch der Sekundärverbrennungszone 27 der Brennkammer 24 optimiert. Die angegebenen Größenbereiche sind Bereiche, mit denen die Anforderungen ebenso (annähernd) erfüllt werden, wie mit den angegebenen exakten Werten.

Dabei kann vorzugsweise eine Kammergeometrie der Primärverbrennungszone 26 der Brennkammer 24 (bzw. ein Innenvolumen der Primärverbrennungszone 26 der Brennkammer 24) anhand der folgenden Grundparameter definiert werden:
Ein Volumen mit einer ovalen horizontalen Grundfläche mit den Maßen von 380 mm +- 60mm (vorzugsweise +-30mm) x 320 mm +- 60 mm (vorzugsweise +-30mm), sowie einer Höhe von 538 mm +- 80 mm (vorzugsweise +- 50 mm).

Als Fortbildung dessen kann das vorstehend definierte Volumen eine obere Öffnung in Form einer Brennkammerdüse 203 aufweisen, die in die Sekundärverbrennungszone 27 der Brennkammer 24 mündet, welche eine in die Sekundärverbrennungszone 27 hineinragende Brennkammerschräge 202 aufweist, welche vorzugsweise das Wärmetauschmedium 38 beinhaltet. Die Brennkammerschräge 202 verringert den Querschnitt der Sekundärverbrennungszone 27 zumindest um 5%, bevorzugt um zumindest 15% und noch mehr bevorzugt um zumindest 19%.

Die Brennkammerschräge 202 dient der Homogenisierung der Strömung S3 in Richtung des Wärmetauschers 3 und damit der Beströmung der Kesselrohre 32.

Im Stand der Technik gibt es häufig Brennkammern mit rechteckiger oder polygonaler Brennkammer und Düse, wobei jedoch die unregelmäßige Form der Brennkammer und der Düse ein weiteres Hindernis für eine gleichmäßige Luftverteilung und eine gute Mischung von Luft und Brennstoff, wie vorliegend erkannt wurde.

Deshalb ist vorliegend die Brennkammer 24 ohne Totecken oder Totkanten vorgesehen.

Vorliegend wurde somit erkannt, dass die Geometrie der Brennkammer (und des gesamten Strömungsverlaufs im Kessel) eine maßgebliche Rolle bei den Überlegungen zur Optimierung der Biomasse-Heizanlage 1 spielt. Deshalb wurde (in Abkehr von den üblichen rechteckigen oder mehr-eckigen Formgebungen) die hierin beschriebene ovale oder runde Grundgeometrie ohne Totecken gewählt. Zudem wurde auch diese Grundgeometrie der Brennkammer und deren Aufbau mit den vorstehend angegebenen Maßen / Maßbereichen optimiert. Dabei sind diese Maße /Maßbereiche derart gewählt, dass insbesondere auch unterschiedliche Brennstoffe (Hackgut und Pellets) mit unterschiedlicher Qualität (beispielsweise mit unterschiedlichem Wassergehalt) bei sehr hohem Wirkungsgrad verbrannt werden kann. Dies haben die Praxistests und CFD-Simulationen ergeben.

Insbesondere kann die Primärverbrennungszone 26 der Brennkammer 24 ein Volumen umfassen, das bevorzugt im Außenumfang einen ovalen oder annähernd kreisförmigen Horizontalquerschnitt aufweist (ein solcher Querschnitt ist in Fig. 2 beispielhaft mit A1 gekennzeichnet). Dieser Horizontalquerschnitt kann zudem bevorzugt die Grundfläche der Primärverbrennungszone 26 der Brennkammer 24 darstellen. Über die durch den Doppelpfeil BK4 angegebene Höhe kann die Brennkammer 24 einen annähernd gleichbleibenden Querschnitt aufweisen. Insofern kann die Primärverbrennungszone 24 ein annähernd oval-zylindrisches Volumen aufweisen. Bevorzugt können die Seitenwände und die Grundfläche (der Rost) der Primärverbrennungszone 26 senkrecht aufeinander stehen.

Vorstehend wird der Begriff "annähernd" verwendet, da selbstverständlich einzelne Kerben, konstruktiv bedingte Abweichungen oder kleine Asymmetrien vorhanden sein können, beispielsweise bei den Übergängen der einzelnen Brennkammersteine 29 zueinander. Diese geringfügigen Abweichungen spielen strömungstechnisch jedoch nur eine untergeordnete Rolle.

Der Horizontalquerschnitt der Brennkammer 24 und insbesondere der Primärverbrennungszone 26 der Brennkammer 24 können ebenso bevorzugt regelmäßig ausgeführt sein. Weiter kann der Horizontalquerschnitt der Brennkammer 24 und insbesondere der Primärverbrennungszone 26 der Brennkammer 24 bevorzugt eine regelmäßige (und/oder symmetrische) Ellipse sein.

Zudem kann der Horizontalquerschnitt (der Außenumfang) der Primärverbrennungszone 26 über eine vorgegebene Höhe, beispielsweise 20 cm) dieser gleichbleibend ausgestaltet sein.

Damit ist vorliegend eine oval-zylindrische Primärverbrennungszone 26 der Brennkammer 24 vorgesehen, die nach CFD-Berechnungen eine deutlich gleichmäßigere und bessere Luftverteilung in der Brennkammer 24 ermöglicht als bei rechteckigen Brennkammern des Stands der Technik. Die fehlenden Toträume vermeiden zudem Zonen in der Brennkammer mit schlechter Luftdurchströmung, was die Effizienz steigert und die Schlackebildung verringert.

Ebenso ist die Düse 203 zwischen der Primärverbrennungszone 26 und der Sekundärverbrennungszone 27 als ovale oder annähernd kreisförmige Verengung ausgestaltet, um ebenso die Strömungsverhältnisse zu optimieren. Der vorstehend erläuterte Drall der Strömung in der Primärverbrennungszone 26 führt zu einem helixförmig nach oben gerichteten Strömungsverlauf, wobei eine ebenso ovale oder annähernd kreisförmige Düse diesen Strömungsverlauf begünstigt, und nicht wie übliche rechteckige Düsen stört. Diese optimierte Düse 203 bündelt die nach oben strömende Luft und sorgt für eine gleichmäßige Zuströmung in die Sekundärverbrennungszone 27. Dies verbessert den Verbrennungsvorgang und erhöht die Effizienz.

Zudem wird vorliegend der Strömungsverlauf in der Sekundärverbrennungszone 27 und aus der Sekundärverbrennungszone 27 zu den Kesselrohren 32 optimiert, wie nachstehend näher erläutert.

Die Brennkammerschräge 202 der Fig. 4, welche ohne Bezugszeichen auch in den Fig. 2 und 3 zu erkennen ist und an der sich die Brennkammer 25 (bzw. deren Querschnitt) von unten nach oben hin zumindest annähernd linear verjüngt, sorgt nach CFD-Berechnungen für eine Vergleichmäßigung der Rauchgasströmung in Richtung der Wärmetauscheinrichtung 4, womit deren Effizienz verbessert werden kann. Dabei verjüngt sich die horizontale Querschnittsfläche der Brennkammer 25 von Anfang bis Ende der Brennkammerschräge 202 bevorzugt zumindest um 5%. Die Brennkammerschräge 202 ist dabei auf der Seite der Brennkammer 25 zur Wärmetauscheinrichtung 4 vorgesehen, und ist an der Stelle der maximalen Verjüngung abgerundet vorgesehen. Im Stand der Technik üblich sind parallele bzw. gerade Brennkammerwände ohne eine Verjüngung (um die Rauchgasströmung nicht zu behindern).

Die Umlenkung des Rauchgasstromes vor dem Rohrbündelwärmetauscher ist derart ausgestaltet, dass eine ungleichmäßige Anströmung der Rohre bestmöglich vermieden wird, womit Temperaturspitzen in einzelnen Kesselrohren 32 niedrig gehalten werden können. In der Folge ist die Effizienz der Wärmetauscheinrichtung 4 verbessert.

Im Detail wird der gasförmige Volumenstrom des Rauchgases durch die schräge Brennkammerwandung mit einer gleichmäßigen Geschwindigkeit (auch im Falle unterschiedlicher Verbrennungszustände) zu den Wärmetauscherrohren bzw. den Kesselrohren 32 geführt. Dadurch entsteht eine gleichmäßige Wärmeverteilung der einzelnen Kesselrohre 32 betreffenden Wärmetauscherflächen. Die Abgastemperatur wird somit gesenkt und der Wirkungsgrad erhöht. Dabei ist die Strömungsverteilung insbesondere an der in der Fig. 3 dargestellten Indikatorlinie WT1 deutlich gleichmäßiger als im Stand der Technik. Die Linie WT1 stellt eine Eintrittsfläche für den Wärmetauscher 3 dar. Die Indikatorlinie WT3 gibt eine beispielshafte Querschnittslinie durch die Filtereinrichtung 4 an, in der die Strömung möglichst homogen eingerichtet ist (u.A. aufgrund von Strömungsblenden am Eingang der Filtereinrichtung 4 und aufgrund der Geometrie der Wendekammer 35).

Weiter ist im unteren Teil der Brennkammer 25 am Brennstoffbett 28 eine Zündeinrichtung 201 vorgesehen. Diese kann eine Initialzündung oder eine erneute Zündung des Brennstoffes bewirken. Es kann die Zündeinrichtung 201 ein Glühzünder sein. Die Zündeinrichtung ist vorteilhaft ortsfest und horizontal seitlich versetzt zum Ort der Einschüttung des Brennstoffs angeordnet.

Weiter kann (optional) nach dem Ausgang des Rauchgases (d.h., nach S7) aus der Filtereinrichtung eine Lamdasonde (nicht dargestellt) vorgesehen sein. Durch die Lambdasonde kann eine Steuerung (nicht dargestellt) den jeweiligen Heizwert erkennen. Die Lambdasonde kann somit für das ideale Mischverhältnis zwischen den Brennstoffen und der Sauerstoffzufuhr sorgen. Trotz unterschiedlicher Brennstoffqualitäten werden im Ergebnis eine hohe Effizienz und ein höherer Wirkungsgrad erreichbar.

Das in Fig. 5 gezeigte Brennstoffbett 28 zeigt eine grobe Brennstoffverteilung aufgrund der Zuführung des Brennstoffs von der rechten Seite der Fig. 5. Dieses Brennstoffbett 28 wird von unten mit einem Rauchgas-Frischluft Gemisch beströmt, das von der Rezirkulationseinrichtung 5 bereitgestellt wird. Dieses Rauchgas-Frischluft Gemisch ist vorteilhaft vortemperiert und weist die ideale Menge (Massenstrom) und das ideale Mischungsverhältnis auf, so wie das eine nicht näher gezeigte Anlagensteuerung aufgrund diverser sensorisch erfasster Messwerte und zugehöriger Luftventile 52 regelt.

Weiter ist in den Fig. 4 und 5 eine Brennkammerdüse 203 gezeigt, die die Primärverbrennungszone 26 von der Sekundärverbrennungszone 27 trennt und die Rauchgasströmung beschleunigt und bündelt. Dadurch wird die Rauchgasströmung besser durchmischt und kann in der Sekundärverbrennungszone 27 effizienter verbrennen. Das Flächenverhältnis der Brennkammerdüse 203 liegt in einem Bereich von 25% bis 45%, beträgt jedoch bevorzugt 30% bis 40%, und ist idealerweise 36 % +- 1% (Verhältnis der gemessenen Eingangsfläche zur gemessenen Ausgangsfläche der Düse 203).

Mithin stellen die vorstehenden Angaben zur Brennkammergeometrie der Primärverbrennungszone 26 zusammen mit der Geometrie der Düse 203 eine vorteilhafte Weiterbildung der vorliegenden Offenbarung dar.

### (Brennkammersteine)

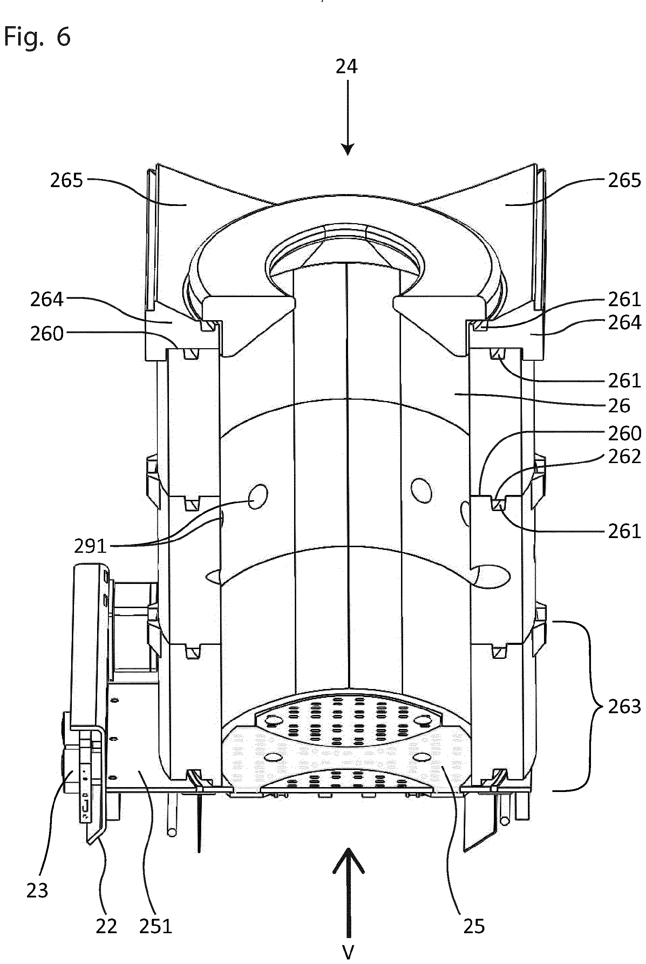

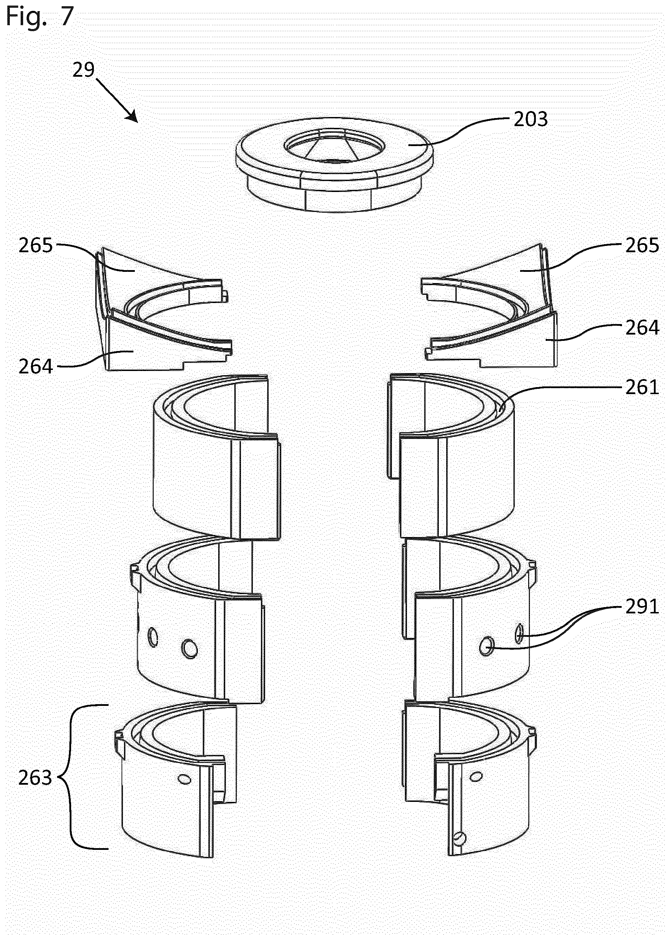

Die Fig. 6 zeigt eine dreidimensionale Schnittansicht (von schräg oben) auf die Primärverbrennungszone 26 der Brennkammer 24 mit dem Drehrost 25, und insbesondere auf die besondere Ausgestaltung der Brennkammersteine 29. Die Fig. 7 zeigt entsprechend zur Fig. 6 eine Explosionsdarstellung der Brennkammersteine 29. Die Ansichten der Fig. 6 und 7 können bevorzugt mit den vorstehend aufgeführten Abmessungen der Fig. 4 und 5 ausgeführt sein. Dies ist jedoch nicht zwingend der Fall.

Die Kammerwand der Primärverbrennungszone 26 der Brennkammer 24 ist mit einer Mehrzahl von Brennkammersteinen 29 in einem modularen Aufbau vorgesehen, was unter anderem die Fertigung und die Wartung erleichtert. Die Wartung wird insbesondere durch die Möglichkeit der Entnahme einzelner Brennkammersteine 29 erleichtert.

An den Auflageflächen 260 der Brennkammersteine 29 sind formschlüssige Nuten 261 und Vorsprünge 262 (in Fig. 6 sind zur Vermeidung von Redundanzen in den Figuren exemplarisch nur jeweils ein paar dieser bezeichnet) vorgesehen, um eine mechanische und weitgehend luftdichte Verbindung zu schaffen, um wiederum das Eindringen von störender Fremdluft zu vermeiden. Bevorzugt bilden je zwei zumindest weitgehend symmetrische Brennkammersteine (mit Ausnahme eventuell der Öffnungen für das Rezi-Gas) einen vollständigen Ring aus. Weiter sind bevorzugt drei Ringe aufeinandergestapelt, um die oval-zylindrische oder alternativ auch zumindest annähernd kreisförmige (letzteres ist nicht dargestellt) Primärverbrennungszone 26 der Brennkammer 24 auszubilden.

Als oberer Abschluss sind drei weitere Brennkammersteine 29 vorgesehen, wobei die ringförmige Düse 203 durch zwei Halterungssteine 264 gelagert wird, die formschlüssig auf den oberen Ring 263 aufgesetzt werden. Bei allen Auflageflächen 260 sind Nuten 261 entweder für passende Vorsprünge 262 und/oder zur Einfügung von geeignetem Dichtmaterial vorgesehen.

Die Halterungssteine 264, welche bevorzugt symmetrisch ausgebildet sind, können bevorzugt eine nach innen geneigte Schräge 265 aufweisen, um ein Abkehren von Flugasche auf den Drehrost 25 zu vereinfachen.

Der untere Ring 263 der Brennkammersteine 29 liegt auf einer Bodenplatte 251 des Drehrosts 25 auf. An der Innenkannte zwischen diesem unteren Ring 263 der Brennkammersteine 29 lagert sich vermehrt Asche ab, was somit diesen Übergang vorteilhaft im Betrieb der Biomasse-Heizanlage 1 selbstständig und vorteilhaft abdichtet.

Im mittleren Ring der Brennkammersteine 29 sind die (optionalen) Öffnungen für die Rezirkulationsdüsen 291 vorgesehen.

Vorliegend sind drei Ringe von Brennkammersteinen 29 vorgesehen, da dies den effizientesten Weg der Herstellung und auch der Wartung darstellt. Alternativ können auch 2, 4 oder 5 solcher Ringe vorgesehen sein.

Die Brennkammersteine 29 bestehen vorzugsweise aus Hochtemperatur-Siliziumkarbid, wodurch diese sehr verschleißfest sind.

Die Brennkammersteine 29 sind als Formsteine vorgesehen. Die Brennkammersteine 29 sind derart geformt, dass das Innenvolumen der Primärverbrennungszone 26 der Brennkammer 24 einen ovalen Horizontalquerschnitt aufweist, womit durch eine ergonomische Formgebung Totecken bzw. Toträume vermieden werden, die üblicherweise von der Primärluft nicht optimal durchströmt werden, wodurch der dort vorhandene Brennstoff nicht optimal verbrannt wird. Aufgrund der vorliegenden Formgebung der Brennkammersteine 29 wird die Durchströmung mit Primärluft und folglich die Effizienz der Verbrennung verbessert.

Der ovale Horizontalquerschnitt der Primärverbrennungszone 26 der Brennkammer 24 ist bevorzugt ein punktsymmetrisches und/oder regelmäßiges Oval mit dem kleinsten Innendurchmesser BK3 und dem größten Innendurchmesser BK11. Diese Maße waren das Ergebnis der Optimierung der Primärverbrennungszone 26 der Brennkammer 24 mittels CFD-Simulation und von praktischen Versuchen.

### (Drehrost)

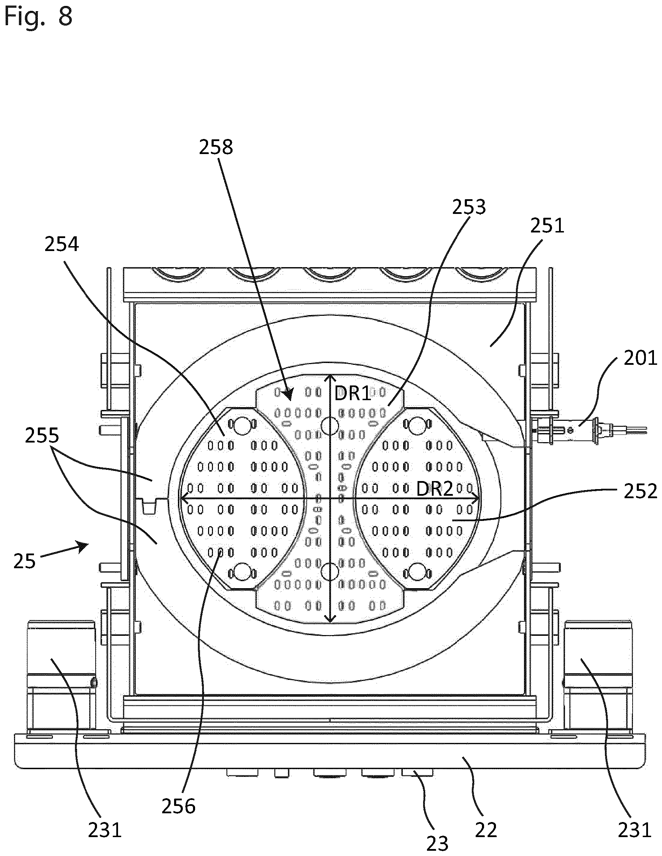

Fig. 8 zeigt eine Aufsicht auf den Drehrost 25 von oben aus Sicht der Schnittlinie A1 der Fig. 2.

Die Aufsicht der Fig. 8 kann bevorzugt mit den vorstehend aufgeführten Abmessungen ausgeführt sein. Dies ist jedoch nicht zwingend der Fall.

Der Drehrost 25 weist die Bodenplatte 251 als Basiselement auf. In einer grob ovalförmigen Öffnung der Bodenplatte 251 ist ein Übergangselement 255 vorgesehen, welches einen Zwischenraum zwischen einem ersten Drehrostelement 252, einem zweiten Drehrostelement 253 und einem dritten Drehrostelement 254 überbrückt, welche drehbar gelagert sind. Damit ist der Drehrost 25 als Drehrost mit drei Einzelelementen vorgesehen, d.h., dieser kann auch als 3-fach Drehrost bezeichnet werden. In den Drehrostelementen 252, 253 und 254 sind Luftlöcher zur Durchströmung mit Primärluft vorgesehen.

Die Drehrostelemente 252, 253 und 254 sind flache und hitzebeständige Metallplatten, beispielsweise aus einem Metallguss, die auf deren Oberseite eine zumindest weitgehend eben konfigurierte Oberfläche aufweisen und an deren Unterseite mit den Lagerachsen 81 beispielsweise über Zwischenhalterungselemente verbunden sind. Von oben betrachtet weisen die Drehrostelemente 252, 253 und 254 gekrümmte und komplementäre Seiten bzw. Umrisse auf.

Insbesondere können die Drehrostelemente 252, 253, 254 zueinander komplementäre und gekrümmte Seiten aufweisen, wobei vorzugsweise das zweite Drehrostelement 253 jeweils zu dem benachbarten ersten und dritten Drehrostelement 252, 254 konkave Seiten aufweist, und vorzugsweise das erste und dritte Drehrostelement 252, 254 jeweils zu dem zweiten Drehrostelement 253 hin eine konvexe Seite aufweist. Damit wird die Brecherfunktion der Drehrostelemente verbessert, da die Länge des Bruchs vergrößert wird, und die zum Brechen wirkenden Kräfte (ähnlich wie bei einer Schere) gezielter angreifen.

Die Drehrostelemente 252, 253 und 254 (sowie deren Umfassung in Form des Übergangselements 255) weisen gemeinsam betrachtet in der Aufsicht eine annähernd ovale Außenform auf, womit hier wiederum Totecken bzw. Toträume vermieden werden, in denen eine nicht optimale Verbrennung stattfinden könnte oder sich Asche unerwünscht ansammeln könnte. Die optimalen Abmessungen dieser Außenform der Drehrostelemente 252, 253 und 254 sind in Fig. 8 mit den Doppelpfeilen DR1 und DR2 bezeichnet. Bevorzugt, aber nicht ausschließlich, sind DR1 und DR2 wie folgt definiert:
DR1 = 288 mm +- 40 mm, bevorzugt +-20 mm
DR2 = 350 mm +- 60 mm, bevorzugt +- 20 mm

Diese Werte haben sich bei den CFD-Simulationen und dem folgenden Praxistest als Optimalwerte (-bereiche) herausgestellt. Diese Maße korrespondieren mit denen der Fig. 4 und 5. Diese Maße sind insbesondere für die Verbrennung von unterschiedlichen Brennstoffen bzw. den Brennstoffarten Hackgut und Pellets (Hybridfeuerung) in einem Leistungsbereich von 20 bis 200 kW vorteilhaft.

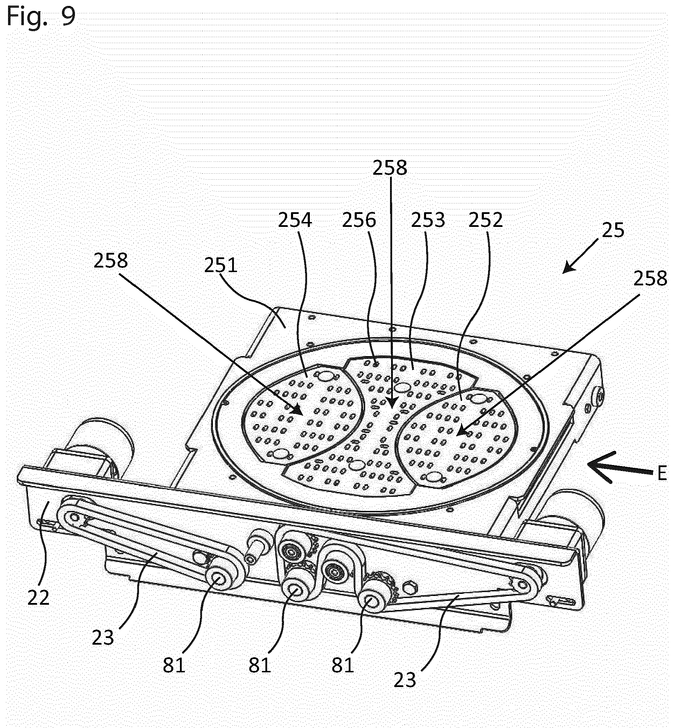

Dabei weist der Drehrost 25 eine ovale Verbrennungsfläche auf, die für die Brennstoffverteilung, die Luftdurchströmung des Brennstoffs und den Abbrand des Brennstoffs günstiger ist als eine übliche rechteckige Verbrennungsfläche. Die Verbrennungsfläche 258 wird im Kern durch die Oberflächen der Drehrostelemente 252, 253 und 254 (im horizontalen Zustand) gebildet. Die Verbrennungsfläche ist somit die nach oben zeigende Oberfläche der Drehrostelemente 252, 253 und 254. Diese ovale Verbrennungsfläche entspricht vorteilhaft der Brennstoffauflagefläche, wenn diese seitlich auf den Drehrost 25 aufgebracht bzw. aufgeschoben wird (vgl. der Pfeil E der Fig. 9, 10 und 11). Insbesondere kann die Brennstoffzufuhr aus einer Richtung erfolgen, die parallel zu einer längeren Mittelachse (Hauptachse) der ovalen Verbrennungsfläche des Drehrosts 25 liegt.

Das erste Drehrostelement 252 und das dritte Drehrostelement 254 können bevorzugt in deren Verbrennungsfläche 258 identisch ausgebildet sein. Weiter können das erste Drehrostelement 252 und das dritte Drehrostelement 254 identisch oder baugleich zueinander sein. Dies ist beispielsweise in Fig. 9 zu sehen, wobei das erste Drehrostelement 252 und das dritte Drehrostelement 254 die gleiche Form auf weisen.

Weiter ist das zweite Drehrostelement 253 zwischen dem ersten Drehrostelement 252 und dem dritten Drehrostelement 254 angeordnet.

Bevorzugt ist der Drehrost 25 mit einer annähernd punktsymmetrischen ovalen Verbrennungsfläche 258 vorgesehen.

Ebenso kann der Drehrost 25 eine annähernd elliptische Verbrennungsfläche 258 ausbilden, wobei DR2 die Maße von deren Hauptachse und DR1 die Maße von deren Nebenachse ist.

Weiter kann der Drehrost 25 eine annähernd ovale Verbrennungsfläche 258 aufweisen, welche achsensymmetrisch in Bezug auf eine Mittenachse der Verbrennungsfläche 258 ist.

Weiter kann der Drehrost 25 eine annähernd kreisförmige Verbrennungsfläche 258 aufweisen, wobei dies geringfügige Nachteile bei der Brennstoffzuführung und der -verteilung nach sich zieht.

Weiter sind zwei Motoren bzw. Antriebe 231 der Drehmechanik 23 vorgesehen, mit denen die Drehrostelemente 252, 253 und 254 entsprechend gedreht werden können. Näheres zur besonderen Funktion und zu den Vorteilen des vorliegenden Drehrosts 25 wird später mit Bezug auf die Figuren 9, 10 und 11 beschrieben.

Insbesondere bei Pelletheizungen kann es vermehrt zu Ausfällen durch SchlackeBildung in der Brennkammer 24, insbesondere auf dem Drehrost 25, kommen. Schlacke entsteht bei einem Verbrennungsvorgang immer dann, wenn in der Glut Temperaturen über dem Ascheschmelzpunkt erreicht werden. Die Asche wird dann weich, verklebt und bildet nach dem Abkühlen feste, dunkel gefärbte Schlacke. Dieser auch als Versinterung bezeichnete Vorgang ist bei der Biomasse-Heizanlage 1 unerwünscht, da es durch die Anreicherung von Schlacke in der Brennkammer 24 zu einer Funktionsstörung kommen kann: sie schaltet sich ab. Die Brennkammer 24 muss üblicherweise geöffnet werden und die Schlacke muss entfernt werden.

Der Ascheschmelzunkt hängt ganz wesentlich von dem verwendeten Brennmaterial ab. Fichtenholz hat beispielsweise einen Ascheschmelzpunkt von ca. 1200 °C. Doch auch der Ascheschmelzpunkt eines Brennstoffes kann starken Schwankungen unterliegen. Je nach Menge und Zusammensetzung der im Holz enthaltenen Mineralien ändert sich das Verhalten der Asche im Verbrennungsprozess.

Ein weiterer Faktor, der die Schlackebildung beeinflussen kann, sind Transport und Lagerung der Holzpellets oder der Hackschnitzel. Diese sollten nämlich möglichst unbeschädigt in die Brennkammer 24 gelangen. Sind die Holzpellets bereits zerbröselt, wenn sie in den Verbrennungsprozess gelangen, so erhöht sich dadurch die Dichte des Glutbetts. Stärkere Schlackebildung ist die Folge. Insbesondere der Transport vom Lagerraum zur Brennkammer 24 ist hier von Bedeutung. Besonders lange Wege, sowie Bögen und Winkel, führen zu einer Beschädigung der Holzpellets.

Ein weiterer Faktor betrifft die Führung des Verbrennungsvorgangs. Bislang war man bestrebt, die Temperaturen eher hoch zu halten, um einen möglichst hohen Ausbrand und niedrige Emissionen zu erzielen. Durch eine optimierte Brennkammergeometrie und Geometrie der Verbrennungszone 258 des Drehrosts 25 ist es möglich, die Verbrennungstemperatur niedriger zu halten, und somit die Schlackebildung zu verringern.

Zudem kann entstehende Schlacke (und auch die Asche) durch die besondere Formgebung und die Funktionalität des vorliegenden Drehrosts 25 vorteilhaft entfernt werden. Dies wird nun mit Bezug auf die Figuren 9, 10 und 11 näher erläutert.

Die Figuren 9, 10 und 11 zeigen eine dreidimensionale Ansicht des Drehrosts 25 mit der Bodenplatte 251, dem ersten Drehrostelement 252, dem zweiten Drehrostelement 253 und dem dritten Drehrostelement 254. Die Ansichten der Fig. 9, 10 und 11 können bevorzugt mit den vorstehend aufgeführten Abmessungen korrespondieren. Dies ist jedoch nicht zwingend der Fall.

Diese Ansicht zeigt den Drehrost 25 als freigestelltes Einschubteil mit Drehrostmechanik 23 und Antrieb(en) 231. Der Drehrost 25 ist mechanisch derart vorgesehen, dass er nach Art des Baukastensystems einzeln vorgefertigt werden kann, und als Einschubteil in eine vorgesehene längliche Öffnung des Kessels 11 eingeführt und eingebaut werden kann. Dies erleichtert zudem die Wartung dieses verschleißanfälligen Teils. Damit kann der Drehrost 25 bevorzugt modular ausgebildet sein, wobei dieser als Komplettteil mit Drehrostmechanik 23 und Antrieb 231 schnell und effizient entnommen und wieder eingesetzt werden kann. Der modularisierte Drehrost 25 kann damit auch mittels Schnellverschlüssen montiert und demontiert werden. Im Gegensatz dazu sind die Drehroste des Stands der Technik regelmäßig fest montiert, und somit schwer zu warten oder zu montieren.

Der Antrieb 231 kann zwei getrennt ansteuerbare Elektromotoren aufweisen. Diese sind vorzugsweise seitlich an der Drehrostmechanik 23 vorgesehen. Die Elektromotoren können Untersetzungsgetriebe aufweisen. Weiter können Endanschlagsschalter vorgesehen sein, die Endanschläge jeweils für die Endpositionen der Drehrostelemente 252, 253 und 254 vorsehen.

Die Einzelkomponenten der Drehrostmechanik 23 sind austauschbar vorgesehen. Beispielsweise sind die Zahnräder aufsteckbar vorgesehen. Dies erleichtert die Wartung und auch einen Seitenwechsel der Mechanik bei der Montage, falls erforderlich.

In den Drehrostelementen 252, 253 und 254 des Drehrosts 25 sind die schon erwähnten Öffnungen 256 vorgesehen. Die Drehrostelemente 252, 253 und 254 können über deren jeweilige Lagerachsen 81, die über die Drehmechanik 23 von dem Antrieb 231, vorliegend den beiden Motoren 231, angetrieben werden, jeweils zumindest um 90 Grad, bevorzugt zumindest um 120 Grad, noch mehr bevorzugt um 170 Grad um die jeweilige Lager- bzw. Drehachse 81 gedreht werden. Dabei kann der maximale Drehwinkel 180 Grad, oder auch etwas weniger als 180 Grad sein, so wie das die Rostlippen 257 zulassen. Dabei ist die Drehmechanik 23 derart eingerichtet, dass das dritte Drehrostelement 254 einzeln und unabhängig vom ersten Drehrostelement 252 und vom zweiten Drehrostelement 243 gedreht werden kann, und dass das erste Drehrostelement 252 und das zweite Drehrostelement 243 gemeinsam und unabhängig von dem dritten Drehrostelement 254 gedreht werden können. Die Drehmechanik 23 kann beispielsweise mittels Laufrädern, Zahn- oder Antriebsriemen und/oder Zahnrädern entsprechend vorgesehen sein.

Die Drehrostelemente 252, 253 und 254 können bevorzugt als Gussrost mit einem Laserzuschnitt hergestellt werden, um eine exakte Formhaltigkeit sicherzustellen. Dies insbesondere um die Luftführung durch das Brennstoffbett 28 so genau wie möglich zu definieren, und störende Luftströmungen, beispielsweise Luftsträhnen an den Rändern der Drehrostelemente 252, 253 und 254, zu vermeiden.

Die Öffnungen 256 in den Drehrostelementen 252, 253 und 254 sind derart eingerichtet, dass diese für das übliche Pelletmaterial und/oder die üblichen Hackschnitzel klein genug sind, dass diese nicht hindurchfallen, und dass diese groß genug sind, dass der Brennstoff gut mit Luft beströmt werden kann.

Fig. 9 zeigt nun den Drehrost 25 in geschlossener Position, wobei alle Drehrostelemente 252, 253 und 254 horizontal ausgerichtet bzw. geschlossen sind. Dies ist die Position im Regelbetrieb. Durch die gleichmäßige Anordnung der Vielzahl der Öffnungen 256 wird eine gleichmäßige Durchströmung des Brennstoffbetts 28 (dieses ist in Fig. 9 nicht dargestellt) auf dem Drehrost 25 sichergestellt. Insofern kann hier der optimale Verbrennungszustand hergestellt werden. Der Brennstoff wird aus Richtung des Pfeiles E auf den Drehrost 25 aufgebracht; insofern wird der Brennstoff von der rechten Seite der Fig. 9 auf den Drehrost 25 hinaufgeschoben.

Im Betrieb sammelt sich Asche und oder Schlacke auf dem Drehrost 25 und insbesondere auf den Drehrostelementen 252, 253 und 254 an. Mit dem vorliegenden Drehrost 25 kann eine effiziente Abreinigung des Drehrosts 25 (zur später erläuterten Ascheabfuhr 7) erfolgen.

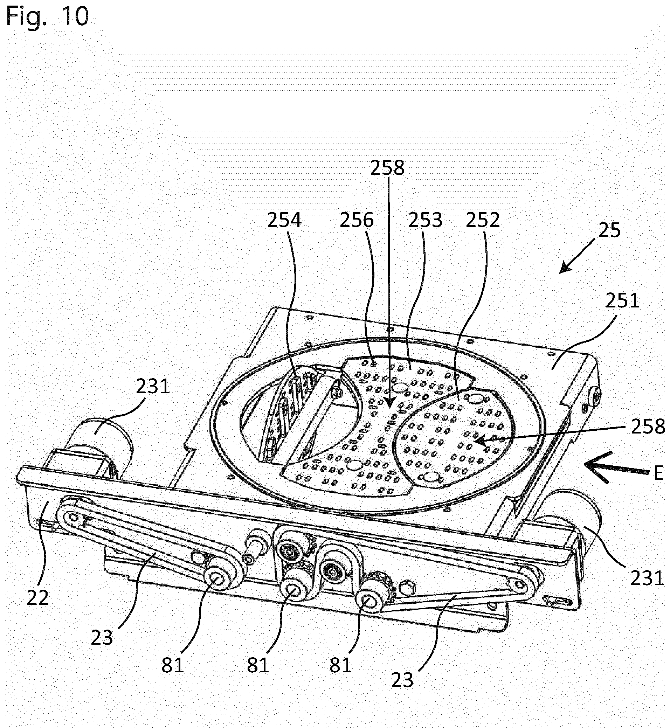

Fig. 10 zeigt den Drehrost in dem Zustand einer Teilabreinigung des Drehrosts 25 im Gluterhaltungsbetrieb. Dazu wird nur das dritte Drehrostelement 254 gedreht. Dadurch, dass nur eines der drei Drehrostelemente gedreht wird, erhält sich die Glut auf dem ersten und dem zweiten Drehrostelement 252, 253, während zugleich die Asche und Schlacke nach unten aus der Brennkammer 24 hinausfallen kann. In der Folge ist keine externe Zündung zur Wiederaufnahme des Betriebs erforderlich (dies spart bis zu 90% Zündenergie). Eine weitere Folge sind eine Verschleißminderung der Zündeinrichtung (beispielsweise eines Zündstabes) und eine Stromersparnis. Weiter kann vorteilhaft eine Aschereinigung im Betrieb der Biomasse-Heizanlage 1 erfolgen.

Fig. 10 zeigt ebenso einen Zustand der Gluterhaltung während einer (oft schon ausreichenden) Teilabreinigung. Damit kann der Betrieb der Anlage 1 vorteilhaft kontinuierlicher erfolgen, womit im Gegensatz zur üblichen Vollabreinigung eines herkömmlichen Rostes keine langwierige vollständige Zündung erfolgen muss, die einige zehn Minuten in Anspruch nehmen kann.

Zudem wird eine potentielle Schlacke an den beiden Außenkanten des dritten Drehrostelements 254 bei der Drehung dessen (auf-)gebrochen, wobei aufgrund der kurvenförmigen Außenkanten des Drehrostelements dritten 254 nicht nur die Abscherung über eine größere Gesamtlänge als bei herkömmlichen rechteckigen Elementen des Stands der Technik erfolgt, sondern auch mit einer ungleichmäßigen Bewegungsverteilung in Bezug auf die Außenkante (in der Mitte erfolgt eine größere Bewegung als an den unteren und oberen Rändern). Damit ist die Brecherfunktion des Drehrosts 25 deutlich verstärkt.

In Fig. 10 sind (beidseitige) Rostlippen 257 des zweiten Drehrostelements 253 erkennbar. Diese Rostlippen 257 sind derart eingerichtet, dass das erste Drehrostelement 252 und das dritte Drehrostelement 254 im geschlossenen Zustand dieser auf der Oberseite der Rostlippen 257 aufliegen, und somit die Drehrostelemente 252, 253 und 254 zueinander spaltfrei vorgesehen und damit dichtend vorgesehen sind. Damit werden Luftsträhnen und unerwünschte Primärluftströmungen durch das Glutbett vermieden. Vorteilhaft wird damit die Effizienz der Verbrennung verbessert.

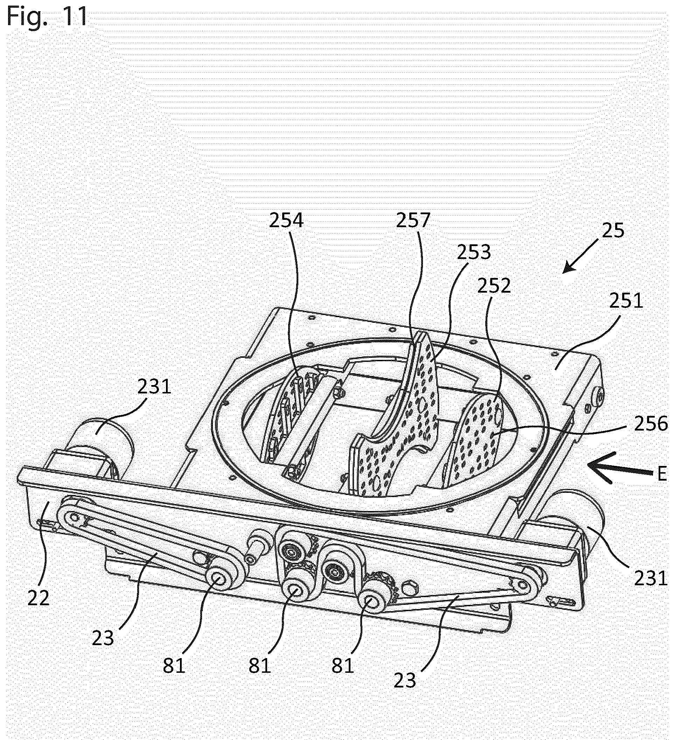

Fig. 11 zeigt den Drehrost 25 im Zustand der Universalabreinigung, welche bevorzugt während eines Anlagenstillstands durchgeführt wird. Dabei werden alle drei Drehrostelemente 252, 253 und 254 gedreht, wobei das erste und zweite Drehrostelement 252, 253 bevorzugt in die entgegengesetzte Richtung gedreht werden wie das dritte Drehrostelement 254. Realisiert wird damit einerseits eine vollständige Entleerung des Drehrosts 25, und andererseits wird die Schlacke nunmehr an vier ungeraden Außenkanten aufgebrochen. Mit anderen Worten wird eine vorteilhafte 4-fache Brecherfunktion realisiert. Das vorstehend in Bezug auf Fig. 9 zu der Geometrie der Außenkanten Erläuterte gilt auch in Bezug auf Fig. 10.

Zusammengefasst realisiert der vorliegende Drehrost 25 neben dem Normalbetrieb (vgl. Fig. 9) vorteilhaft zwei unterschiedliche Arten der Abreinigung (vgl. Fig. 10 und 11), wobei die Teilabreinigung eine Abreinigung während des Betriebs der Anlage 1 erlaubt.

Im Vergleich dazu sind marktübliche Drehrostsysteme nicht ergonomisch und haben durch ihre rechteckige Geometrie nachteilige Totecken, in welchen die Primärluft den Brennstoff nicht optimal durchströmen kann. An diesen Ecken kommt es gehäuft zu einer Schlackenbildung. Dies sorgt für eine schlechtere Verbrennung mit einem schlechteren Wirkungsgrad.

Der vorliegende einfache mechanische Aufbau des Drehrosts 25 gestaltet diesen robust, zuverlässig und langlebig.

### (Rezirkulationseinrichtung)

Zur Optimierung der vorstehend kurz erwähnten Rezirkulationseinrichtung 5 wurden wiederum CFD-Simulationen, weitere Überlegungen und Praxistests durchgeführt. Dabei wurde die nachstehend beschriebene Rauchgasrezirkulation für eine Biomasse-Heizanlage vorgesehen.

Bei den Berechnungen wurden beispielsweise ein 100 kW Kessel im Nennlastbetriebsfall mit einem Lastbereich von 20 bis 500 kW mit verschiedenen Brennstoffen (beispielsweise Hackgut mit 30% Wasseranteil) simuliert. Vorliegend wurde zudem für alle mit Rauchgas in Berührung stehenden Flächen eine leichte Verschmutzung oder Verrußung (sogenanntes Fouling mit einer Dicke von 1 mm) berücksichtigt. Die Emissivität einer derartigen Fouling-Schicht wurde mit 0,6 angesetzt.

Das Ergebnis dieser Optimierung und der einhergehenden Überlegungen ist in den Fig. 12 bis 17 dargestellt. Die Figuren 12 bis 14 zeigen verschiedene Ansichten der Rezirkulationseinrichtung 5, welche in den Figuren 1 bis 3 ersichtlich ist.

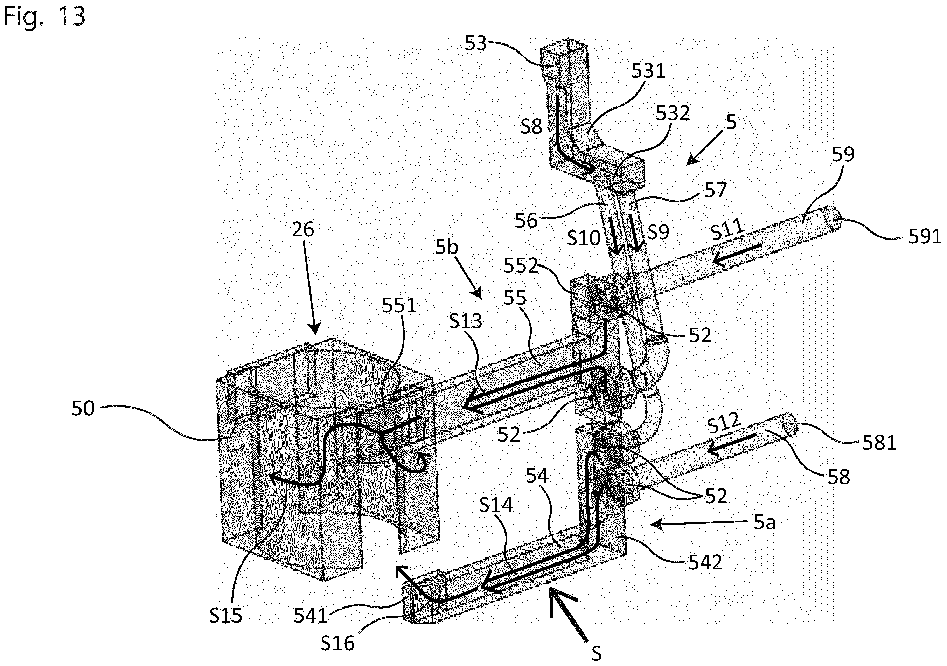

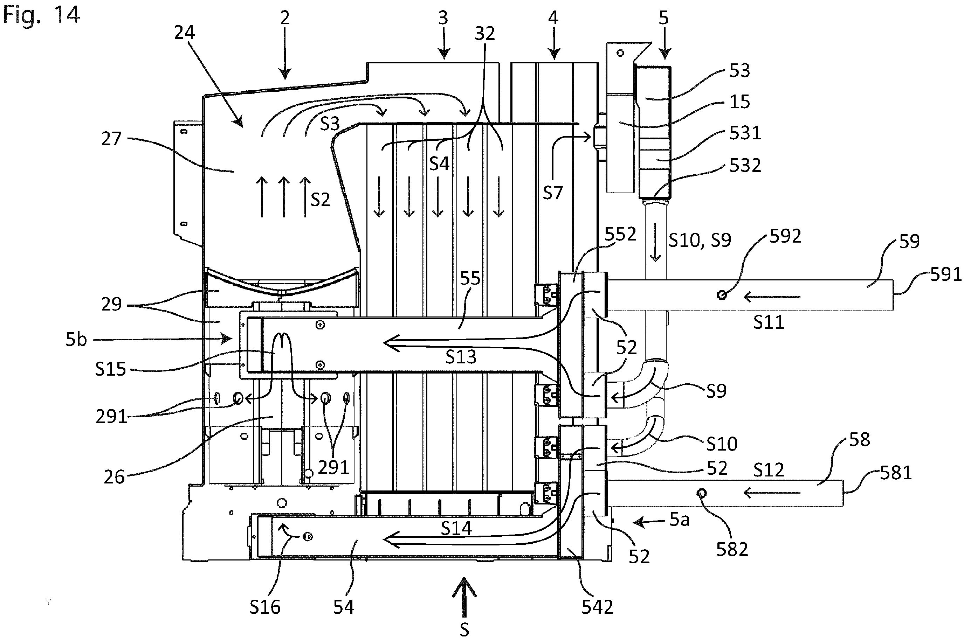

Fig. 12 zeigt eine herausgestellte Schrägansicht der Rezirkulationseinrichtung 5 mit den Brennkammersteinen 29, die die Primärverbrennungszone 26 umgeben. Fig. 13 zeigt eine herausgestellte semitransparente Schrägansicht der Rezirkulationseinrichtung 5 der Fig. 12. Die Fig. 14 zeigt eine Seitenansicht der Rezirkulationseinrichtung 5 der Figuren 12 und 13. Der Pfeil S der Figuren 12 bis 14 entspricht jeweils dem Pfeil S der Fig. 1, welcher die Richtung der Seitenansicht auf die Biomasse-Heizanlage 1 angibt.

Die Rezirkulationseinrichtung 5 wird nachstehend anhand der Figuren 12, 13, 14 und 15 näher beschrieben.

Die Rezirkulationseinrichtung 5 weist einen Rezirkulationseintritt 53 mit einem Rezirkulationseintrittskanal 531 und einem Rezirkulationseintrittskanalteiler 532 auf. Der Rezirkulationseintritt 53 und der Rezirkulationseintrittskanal 531 sind stromabwärts eines Gebläses 15 (vgl. Fig. 3) am Rauchgasausgang der Biomasse-Heizanlage 1 nach dem Wärmetauscher 3 oder nach der (optionalen) Filtereinrichtung 4 vorgesehen. Der Rezirkulationseintrittskanalteiler 532 kann das zu rezirkulierende Rauchgas beziehungsweise das Rezi-Gas in einen Primärrezirkulationskanal 56 und einen optionalen Sekundärrezirkulationskanal 57 verzweigen. Ist keine Sekundärrezirkulation vorhanden, ist auch kein Rezirkulationseintrittskanalteiler 532 erforderlich.

Der Primärrezirkulationskanal 56 mündet über ein Luftventil 52, vorliegend beispielhaft ein Drehschieberventil 52, in einer Primärmischkammer 542. In die Primärmischkammer 542 mündet über ein weiteres Luftventil 52, vorliegend beispielhaft ein Drehschieberventil 52, zudem ein Primärluftkanal 58, welcher wiederum einen Primärlufteintritt 581 für beispielsweise Raum- oder Frischluft, entsprechend als Primärfrischluft bezeichnet, aufweist. Der Primärluftkanal 58 kann einen Primärluftsensor 582 (beispielsweise zum Erfassen der Temperatur und/oder des Sauerstoffgehalts der Primärfrischluft) aufweisen.

Über den Primärlufteintritt 581 und den Primärluftkanal 58 sowie das Luftventil 52 gelangt noch unvermischte Primärluft, d. h. Frischluft oder Umgebungsluft, in die Primärmischkammer 542, in der die Umgebungsluft entsprechend der Ventilstellung der Luftventile 52 mit dem rezirkulierten Rauchgas aus dem Primärrezirkulationskanal 56 gemischt wird. Stromabwärts anschließend an die Primärmischkammer 542 ist ein Primärmischkanal 54 vorgesehen, in welchem das Gemisch aus Primär(-frisch)luft und Rauchgas weiter vermischt wird. Die Primärmischkammer 542 mit deren Ventilen 52 und der Primärmischkanal 54 bilden zusammen eine Primärmischeinheit 5a aus.

Der Sekundärrezirkulationskanal 57 mündet über ein Luftventil 52, vorliegend beispielhaft ein Drehschieberventil 52, in einer Sekundärmischkammer 552. In die Sekundärmischkammer 552 mündet über ein weiteres Luftventil 52, vorliegend beispielhaft ein Drehschieberventil 52, zudem ein Sekundärluftkanal 59, welcher wiederum einen Sekundärlufteintritt 591 für Sekundärfrischluft aufweist. Der Sekundärluftkanal 59 kann einen Sekundärluftsensor 592 (beispielsweise zum Erfassen der Temperatur und/oder des Sauerstoffgehalts der Sekundärluft) aufweisen.

Über den Sekundärlufteintritt 591 und den Sekundärluftkanal 59 sowie das Luftventil 52 gelangt die Sekundärfrischluft, d. h. Umgebungsluft, in die Sekundärmischkammer 552, in der die Umgebungsluft entsprechend der Ventilstellung der Luftventile 52 mit dem rezirkulierten Rauchgas aus dem Sekundärrezirkulationskanal 57 gemischt wird. Stromabwärts anschließend an die Sekundärmischkammer 552 ist ein Sekundärmischkanal 55 vorgesehen, in welchem das Gemisch aus Sekundärfrischluft und Rauchgas weiter vermischt wird. Die Sekundärmischkammer 552 mit deren Ventilen 52 und der Sekundärmischkanal 55 bilden die Sekundärmischeinheit 5b aus.

Die Stellung der vier Luftventile 52 wird jeweils mittels eines Ventilstellaktors 521, der beispielsweise ein Elektromotor sein kann, eingestellt. In der Fig. 12 ist aus Gründen der Übersichtlichkeit nur einer der vier Ventilstellaktoren 521 bezeichnet.

Der Primärmischkanal 54 weist eine Mindestlänge L1 auf. Die Mindestlänge L1 beträgt beispielsweise zumindest 700 mm von Beginn des Primärmischkanals 54 am Durchtritt aus der Primärmischkammer 542 bis zu dem Ende des Primärmischkanals 54. Es hat sich gezeigt, dass die Länge L1 des Primärmischkanals 54, für eine gute Durchmischung auch länger, vorzugsweise zumindest 800 mm, idealerweise 1200 mm betragen sollte. Die Länge L1 sollte zudem aus konstruktiven und drucktechnischen Gründen beispielsweise 2000 mm nicht überschreiten.

Der (optionale) Sekundärmischkanal 55 weist eine Mindestlänge L2 auf. Die Mindestlänge L2 beträgt beispielsweise zumindest 500 mm von Beginn des Sekundärmischkanals 55 am Durchtritt aus der Sekundärmischkammer 552 bis zu dem Ende des Sekundärmischkanals 55. Es hat sich gezeigt, dass die Länge L2 des Sekundärmischkanals 55, für eine gute Durchmischung auch länger, vorzugsweise zumindest 600 mm, idealerweise 1200 mm betragen sollte. Die Länge L2 sollte zudem aus konstruktiven und drucktechnischen Gründen beispielsweise 2000 mm nicht überschreiten.

Der Primärmischkanal 54 und der (optionale) Sekundärmischkanal 55 können mit einem rechteckigen Querschnitt mit einer jeweiligen Innenbreite von 160 mm +-30 mm (vertikal) / 120 mm +- 30 mm (vertikal) und einer Innendicke (horizontal) von 50 mm +-15 mm ausgeführt sein. Aufgrund dieser Ausgestaltung des Primärmischkanals 54 und des Sekundärmischkanals 55 jeweils als langer, flacher und an dem Wärmetauscher 3 und der Brenneinrichtung anliegender Kanal, werden mehrere vorteilhafte Effekte erzielt. Zum einen wird das Gemisch aus Rauchgas und Primär(-frisch)luft/Sekundär(-frisch)luft vorteilhaft vorerwärmt, bevor es zur Verbrennung gelangt. Beispielsweise kann ein Gemisch, das nach der Primärmischkammer 542 eine Temperatur von +25 Grad Celsius aufweist, am stromabwärtigen Ende des Primärmischkanals 54 eine im Nennlastfall um 15 Grad Celsius höhere Temperatur aufweisen. Zum anderen ist der Querschnitt und die Längsausdehnung so groß gewählt, dass die Vermischung auch nach den Mischkammern 542, 552 fortgesetzt wird, womit eine Verbesserung der Homogenisierung der Strömung verursacht wird. Dabei wird der Strömung genügend Weg zu einer weiteren Vermischung der eh schon zu Beginn des Weges turbulent vorliegenden Strömung bereitgestellt.

In anderen Worten wird mit dem länglichen Primärmischkanal 54 eine Wegstrecke zur weiteren Vermischung nach der Primärmischkammer 542 bereitgestellt, wobei die Primärmischkammer 542 gezielt zur Schaffung von erheblichen Turbulenzen zu Beginn der Wegstrecke vorgesehen ist.

Es können vorzugsweise die beiden Längen L1 und L2 im Rahmen einer gewissen Toleranz (+- 10 mm) übereinstimmen.

Über einen Primärdurchtritt 541 wird das rezirkulierte Rauchgas, welches vorausgehend mit "frischer" Primärluft gut vermischt wurde, von unten zum Drehrost 25 zugeführt. Durch dessen Öffnungen 256 tritt dieses Gemisch aus rezirkuliertem Rauchgas und Primärfrischluft (d.h. die Primärluft für die Brennkammer 24) in die Primärverbrennungszone 26 der Brennkammer 24 ein. Insofern ist die Primärrezirkulation zum Rezirkulieren des Rauchgas-Primärfrischluft Gemischs derart vorgesehen, dass dieses von unten in die Primärverbrennungszone 26 eintritt.

Über einen (optionalen) Sekundärdurchtritt 551 und einen anschließenden Ringkanal 50 (vgl. Fig. 13) um die Brennkammersteine 29 wird das rezirkulierte Rauchgas, welches vorausgehend mit "frischer" Sekundärluft d.h., Sekundärfrischluft (oder bei Entfall der Sekundärrezirkulation mit Primär(-frisch)luft) gut vermischt wurde, zu den (ebenso optionalen) Rezirkulations- bzw. Sekundärluftdüsen 291 zugeführt. Die Sekundärluftdüsen 291 sind dabei, wie erläutert, nicht auf die Mitte der Primärverbrennungszone 26 ausgerichtet, sondern sind diese azentrisch ausgerichtet, um einen Drall der nach oben aus der Primärverbrennungszone 26 in die in die Sekundärverbrennungszone 27 verlaufende Strömung zu bewirken (d. h. eine nach oben gerichtete Wirbelströmung mit einer vertikalen Drallachse). Insofern kann die Sekundärrezirkulation zum Rezirkulieren des Rauchgas-Sekundärfrischluft-Gemischs zumindest teilweise in die Sekundärverbrennungszone 27 vorgesehen sein.

Die Figuren 13 und 14 zeigen entsprechend zu der Fig. 12 den Verlauf der Strömungen der Luft, des rezirkulierten Rauchgases und der Rauchgas-Luft-Gemische in der Rezirkulationseinrichtung 5 anhand der (schematischen) Strömungspfeile S8 bis S16. Die Pfeile S1 bis S16 geben die strömungstechnische Konfiguration an, d.h., den Verlauf des Flusses der diversen Gase oder bewegten Massen in der Biomasse-Heizanlage 1. Viele der vorliegenden Komponenten oder Merkmale sind dabei strömungstechnisch verbunden, wobei dies mittelbar (d.h., über andere Komponenten) oder unmittelbar erfolgen kann.

Wie in der Fig. 13 und der Fig. 14 jeweils ersichtlich ist, tritt das Rauchgas, das nach dem Wärmetausch aus dem Wärmetauscher 3 und aus der optionalen Filtereinrichtung 4 ausströmt, durch den Rezirkulationseintritt 5 in den Rezirkulationseintrittskanal 531 der Rezirkulationseinrichtung 5 ein (vgl Pfeil S8). Nach einer (optionalen) Aufteilung der Rauchgasströmung durch einen (optionalen) Rezirkulationseintrittskanalteiler 532 strömt das Rauchgas der Primärrezirkulation durch den Primärrezirkulationskanal 56 (vgl. Pfeil S10), abhängig von der Stellung eines der einstellbaren Luftventile 52 in die Primärmischkammer 541, in der das Rauchgas mit der Primärfrischluft vermischt wird, die durch den Primärluftkanal 58, abhängig von der Stellung eines weiteren der einstellbaren Luftventile 52, ebenso in die Primärmischkammer 541 einströmt (vgl. Pfeil S12).

In der Folge entsteht eine Mischströmung (vgl. Pfeil S14) in dem Primärmischkanal 54 aus Rauchgas und Primärfrischluft, in der sich diese beiden Komponenten aufgrund der Turbulenzen und der Länge des Primärmischkanals 54 vorteilhaft vermischen. Am Ende des Primärmischkanals 54 ist ein homogenes Gemisch aus Rauchgas und Primärfrischluft entstanden, welches durch den Primärdurchtritt 541 zur Primärverbrennungszone 26 strömt (vgl. Pfeil S16).

Sollte eine (strömungstechnisch ähnlich der Primärrezirkulation vorgesehene) Sekundärrezirkulation vorhanden sein, strömt das Rauchgas nach dessen Aufteilung im Rezirkulationseintrittskanalsteiler 532 durch den Sekundärrezirkulationskanal 57 über ein weiteres einstellbares Luftventil 52 in die Sekundärmischkammer 552 (vgl. Pfeil S9), in welcher das Rauchgas mit der über den Sekundärluftkanal 59 und ein weiteres einstellbares Ventil 52 ebenso in die Sekundärmischkammer 552 einströmenden Sekundärfrischluft (vgl. Pfeil S11) vermischt wird. Diese Vermischung des Rauchgases und der Sekundärfrischluft setzt sich im Sekundärmischkanal fort (vgl. Pfeil S13), womit die Durchmischung beider Komponenten verbessert wird. Das entstandene vorteilhaft homogene Gemisch strömt durch den Sekundärdurchtritt 551 in den Ringkanal 50 um die Brennkammersteine 29 und durch die Rezirkulationsdüsen 291 in die Brennkammer 24 (vgl. Pfeil S15).

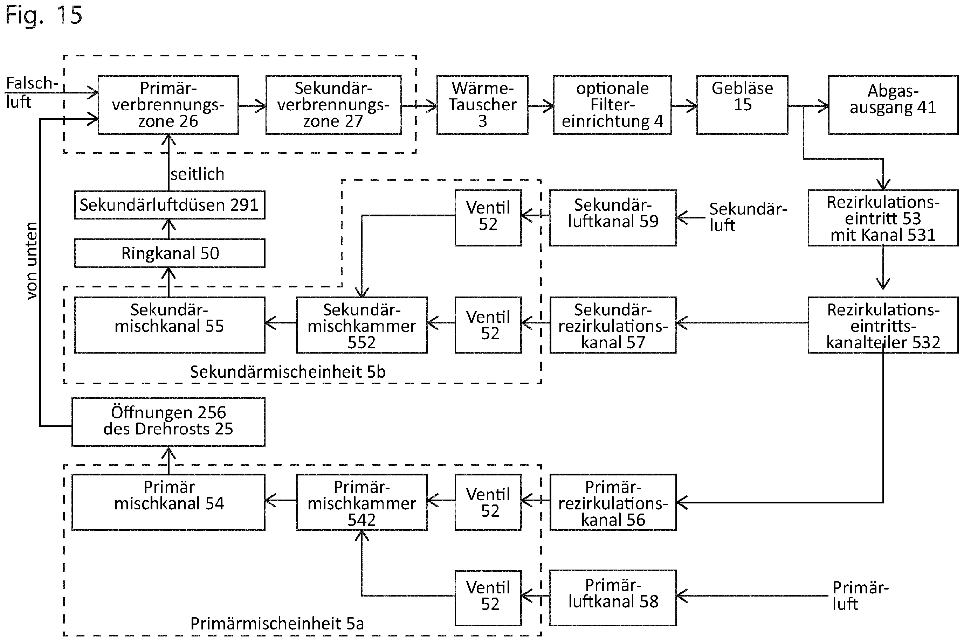

Das schematische Blockdiagramm der Fig. 15 zeigt den vorstehend mit Bezug auf die Figuren 12 bis 14 erläuterten Strömungsverlauf in den jeweiligen Einzelkomponenten der Rezirkulationseinrichtung 5, sowie der der Biomasse-Heizanlage 1. In dem Blockdiagramm der Fig. 15 sind sowohl die Primärrezirkulation als auch die optionale Sekundärrezirkulation als vollständiger Kreislauf dargestellt. Die Rezirkulationseinrichtung 5 kann auch nur eine Primärrezirkulation aufweisen.

Mittels der Rezirkulation des Rauchgases wird dieses im Grundsatz nach der Verbrennung mit Frischluft vermischt, wobei insbesondere der Sauerstoffgehalt erhöht wird, und einer erneuten Verbrennung zugeführt. Damit können brennbare Reste im Rauchgas, die ansonsten ungenutzt durch den Kamin abgeführt werden würden, nun doch noch einen Beitrag zur Verbrennung leisten.

Die jeweiligen Ventile 52 mit der Primärmischkammer 541 und dem (sich vorzugsweise annähernd horizontal erstreckenden) Primärmischkanal 54 bilden die Primärmischeinheit 5a aus. Die jeweiligen Ventile 52 mit der Sekundärmischkammer 552 und dem Sekundärmischkanal 55 können die Sekundärmischeinheit 5b ausbilden. Betreffend der in Fig. 14 verdeckten Teile der Strömungsführung, wird auf die Fig. 3 und die zugehörigen Erläuterungen verwiesen.

Weiter ist in Fig. 15 ergänzend der sogenannte Falschlufteintrag berücksichtigt, der vorliegend als Störfaktor berücksichtigt wurde. Dabei gelangt Falschluft aus der Umgebung über Undichtigkeiten und insbesondere auch die Brennstoffzufuhr in die Brennkammer 24, wobei dies eine zusätzliche Luftquelle für die Verbrennung darstellt, die bei der Einstellung des Mischungsverhältnisses des Gemischs oder der Gemische zu berücksichtigen ist. Deshalb ist die Biomasse-Heizanlage 1 vorliegend vorzugsweise derart eingerichtet, dass der Falschlufteintrag im Nennlastbetriebsfall auf weniger als 6%, vorzugsweise weniger als 4%, der Luftmenge des Gemischs aus Primärfrischluft und rezirkuliertem Rauchgas (und bei vorhandener Sekundärrezirkulation der Luftmenge des Gemischs aus Sekundärfrischluft und rezirkuliertem Rauchgas und des Gemischs aus Primärfrischluft und rezirkuliertem Rauchgas) beträgt.

Falschluft könnte im Übrigen auch Nachteilhaft von dem weiteren Strömungsweg des Rauchgases nach der Verbrennung zurück in die Brennkammer 24 gelangen, beispielsweise über die übliche Ascheabfuhr. Eine Lösung für dieses Problem bietet die später näher beschriebene Übergangsschnecke 73, womit diese die Rauchgasrezirkulation 5 und damit die Rauchgasbehandlung verbessern kann.

### (Primär- und Sekundärmischkammer mit Ventilen)

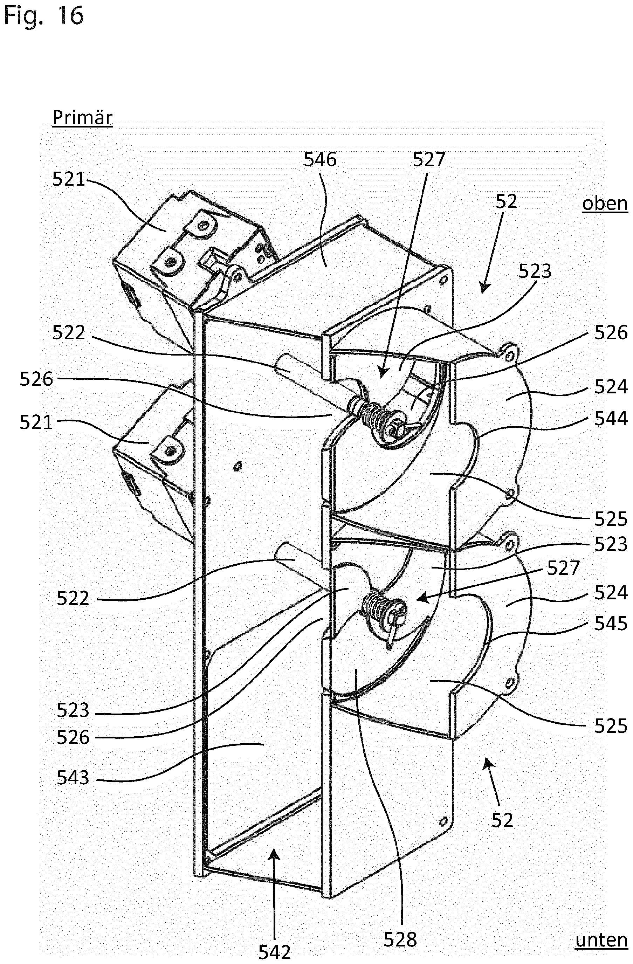

Die Fig. 16 zeigt eine Schnittansicht der Primärmischkammer 542, sowie der zwei eingangsseitigen (Primär-) Luftventile 52 mit deren (Primär-) Ventilvorkammern 525 aus einem schrägen Sichtwinkel (vgl. in der Außenansicht entsprechend die Fig. 12 und die Fig. 13).

Das rezirkulierte Rauchgas strömt über den rohrförmigen Primärrezirkulationskanal 56 durch einen Primärreziventileintritt 544 in die optional vorgesehene und vorliegend lediglich beispielhaft oben angeordnete (Primär-) Ventilvorkammer 525, welche durch ein Ventilgehäuse 524 des oberen (Primär-) Luftventils 52 umfasst ist. Anstelle der Ventilvorkammer 525 kann beispielsweise auch der Primärrezirkulationskanal 56 derart eingerichtet sein, dass sich dessen Querschnitt kontinuierlich zum Luftventil 52 hin erweitert, womit eine eigene Vorkammer entfallen könnte.

Über den Primärluftkanal 58 strömt Primärfrischluft durch einen Primärlufteintritt 545 in eine optional vorgesehene und vorliegend lediglich beispielhaft unten angeordnete (Primär-) Ventilvorkammer 525, welche durch ein weiteres Ventilgehäuse 524 des unteren (Primär-) Luftventils 52 umfasst ist.

Alternativ kann das rezirkulierte Rauchgas auch der unteren Ventilvorkammer 525 zugeführt werden, während die Primärfrischluft der oberen Ventilvorkammer zugeführt werden kann.

Die (Primär-) Ventilvorkammern 525 der (Primär-) Luftventile 52 sind annähernd kegelstumpfförmig oder zylindrisch ausgebildet, und erweitern die Querschnittsfläche des, vorliegend beispielhaft oberen, Luftventils 52 für die Strömung des Rauchgases im Vergleich zu dem Querschnitt des Primärrezirkulationskanals 56. Damit kann einerseits Material und Platz gespart werden, da der Primärrezirkulationskanal 56 mit geringerem Querschnitt vorgesehen sein kann, und andererseits kann für die Steuerung (oder Regelung) der Strömung durch das Luftventil 52 eine größere effektive Ventilfläche vorgesehen werden. Eine solche größere Ventilfläche weist insbesondere die Vorteile auf, dass diese verschmutzungsunempfindlicher (u. A. gegenüber Verrußung) ist und aufgrund des größeren Querschnitts im offenen Zustand einen geringeren Druckverlust aufweist.

Die Luftventile 52 sind vorliegend beispielhaft Drehschieberventile 52.

Das obere und das untere (Primär-) Luftventil 52 können übereinstimmend ausgeführt sein.

Die beiden Luftventile 52 als Drehschieberventile 52 umfassen jeweils einen Ventilstellaktor 521, beispielsweise einen Elektromotor, der eine drehbar gelagerte Ventilstellachse 522 drehen kann, sowie einen an der Ventilstellachse 522 angebrachten Ventilkörper 527 mit einem Stellachsenbefestigungselement und zumindest einem Ventilflügel 523. Der zumindest eine Ventilflügel 523 des Ventilkörpers 527 des jeweiligen Luftventils 52 ist am stromabwärtigen Ende der Ventilvorkammer 525 vorgesehen. Die Ventilstellachse 522 tritt durch die Primärmischkammer 542 hindurch. Damit ist der Ventilstellaktor 521 des jeweiligen Luftventils 52 an einer Seite der Primärmischkammer 542 vorgesehen, und der Ventilkörper 527 ist an der dem Ventilstellaktor 521 gegenüberliegenden Seite der Primärmischkammer 542 vorgesehen.

Der zumindest eine Ventilflügel 523 ist derart angeordnet, dass dieser in zumindest zwei unterschiedliche Stellungen bewegt bzw. gedreht werden kann, um die Durchlässigkeit des Luftventils 52 einzustellen.

Beispielsweise ist in einer ersten der Stellungen zumindest ein Teilbereich zumindest einer Ventildurchtrittsöffnung 526 mittels einer Sperrfläche, die durch den Ventilflügel 523 vorgesehen ist, fluidisch versperrt, so dass das Rauchgas den Teilbereich der zumindest einen Ventildurchtrittsöffnung 526 in die Primärmischkammer 542 nicht durchströmen kann. In der zweiten der Stellungen gibt die Sperrfläche den Teilbereich zumindest teilweise frei, so dass der Teilbereich von dem Rauchgas durchströmt werden kann.

Es kann in der ersten Stellung das Luftventil 52 vorzugsweise vollständig geschlossen sein, wobei die Sperrfläche des zumindest einen Ventilflügels 523 die Durchgangsfläche der entsprechenden zumindest einen Ventildurchtrittsöffnung 526 vollständig abdeckt. In Fig. 16 ist diese geschlossene Ventilstellung beispielhaft durch das untere Luftventil 52 dargestellt.

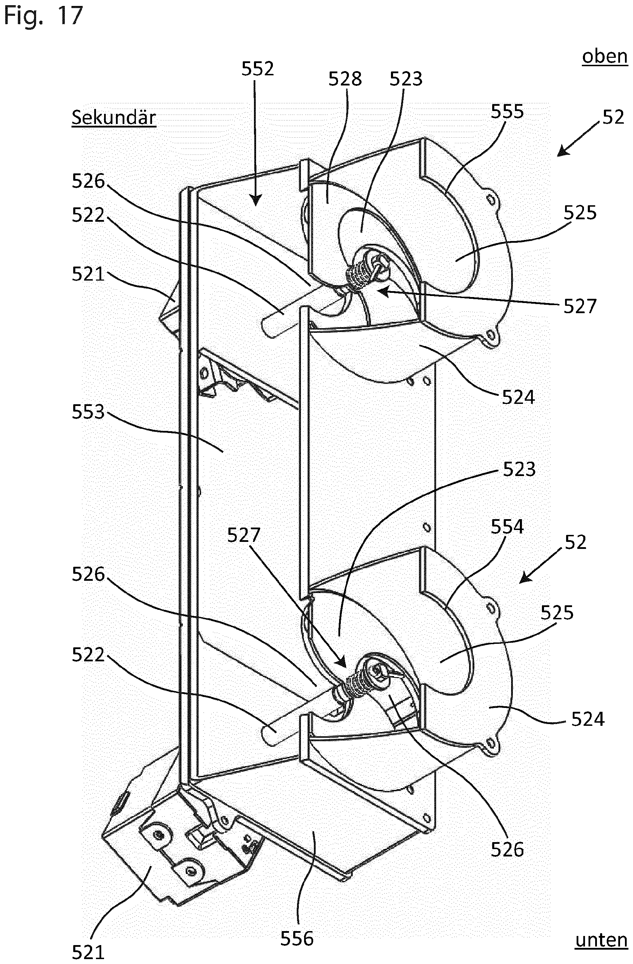

Weiter kann in der zweiten Stellung das Luftventil 52 vorzugsweise vollständig geöffnet sein, wobei die Sperrfläche des zumindest einen Ventilflügels 523 die Durchgangsfläche der entsprechenden zumindest einen Ventildurchtrittsöffnung 526 vollständig freigibt. In Fig. 17 ist diese offene Ventilstellung beispielhaft durch das obere Luftventil 52 dargestellt. Im vollständig geöffneten Zustand kann die Durchgangsfläche des Luftventils beispielsweise 5300 mm² +- 500 mm² betragen. Das Luftventil 52 kann vorzugsweise frei zwischen dem vollständig geöffneten Zustand und dem vollständig geschlossenen Zustand eingestellt werden.

Vorliegend sind bei jeweils einem Luftventil 52 beispielhaft zwei Ventilflügel 523 mit jeweils zwei Ventildurchtrittsöffnungen 526 in die Primärmischkammer 542 vorgesehen (d. h. der Ventilkörper bildet einen Fächerschieber aus). Allerdings können auch nur ein oder auch eine Vielzahl von Ventilflügeln und eine korrespondierende Anzahl von Ventildurchtrittsöffnungen 526 vorgesehen sein.

Weiter ist in Fig. 16 eine Ventilfläche 528 erkennbar, in der die Ventildurchtrittsöffnungen 526 vorgesehen sind und die durch das Primärmischkammergehäuse 546 ausgebildet ist. Die Ventilflügel 523 können vorzugsweise auf der Ventilfläche 528 in jeder Stellung des Ventilkörpers 527 auf- bzw. anliegen.

Vorzugsweise ist das Luftventil 52 derart eingerichtet, dass die Öffnungsfläche der Ventildurchtrittsöffnung 526 größer ist als die Querschnittsfläche des Primärreziventileintritts 544 (und des Primärluft(ventil)eintritts 545), um den Druckverlust durch das Ventil zu optimieren.

Die beiden Ventilflügel 523 sind spiegelsymmetrisch (punktsymmetrisch) zur Mittelachse der Ventilstellachse 522 vorgesehen. Weiter sind die beiden Ventilflügel 523 sichelförmig ausgestaltet. Dementsprechend können die beiden korrespondierenden Ventildurchtrittsöffnungen 526 ebenso sichelförmig ausgestaltet sein. Die Sichelform kann dabei beispielsweise derart vorgesehen sein, dass diese am äußeren Ende der Sichel spitz zuläuft.

Diese Sichelform des zumindest einen Ventilflügels 523 bedingt, dass die Strömung, die durch die zumindest eine Ventildurchtrittsöffnung 526 durchfließt, ein noch unregelmäßigeres Querschnittsprofil aufweist, ohne jedoch den Druckverlust zu stark zu erhöhen. Dies verbessert die Durchmischung in der Primärmischkammer 542.

Die vorstehende Ausgestaltung des Luftventils 52 als Drehschieberventil ist zudem in einem sogenannten Schwachlastbetrieb oder auch einem Einschaltbetrieb der Biomasse-Heizanlage 1 relevant, d. h. wenn diese nur mit nur geringen Temperaturen betrieben wird. Durch die geringen Temperaturen können die herkömmlichen Klappenventile durch Ruß im Rauchgas besonders stark verschmutzt werden. Infolge dieser Verschmutzung sind die üblichen Ventile nur noch schwergängig zu betätigen, was deren Belastung und folglich den Verschleiß nachteilhaft vergrößert. Die vorliegende Ausgestaltung des Luftventils 52 verringert diese Problematik.

Mittels des (beispielhaft oberen) Luftventils 52, vorliegend ebenso beispielhaft das Drehschieberventil 52, ist es möglich, die Menge des rezirkulierten Rauchgases vor dessen Mischung mit (frischer) Primärluft bedarfsgerecht einzustellen. Das weitere Luftventil 52 für die Primärfrischluft ermöglicht entsprechend eine Regelung der Menge der zugeführten Primärfrischluft. Damit kann das Mischungsverhältnis aus Primärfrischluft und rezirkuliertem Rauchgas vorteilhaft eingestellt werden. Somit kann das Mischungsverhältnis an unterschiedliche Betriebspunkte oder den optimalen Betriebspunkt der Verbrennung angepasst werden.

Das obere Drehschieberventil 52 kann auch als ein Primärrauchgasrückfuhrventil bezeichnet werden.

Das untere Drehschieberventil 52 kann auch als ein Primärfrischluftzufuhrventil bezeichnet werden.

Die den beiden Luftventilen 52 strömungstechnisch nachgelagert angeordnete Primärmischkammer 542 dient der Zusammenführung des rezirkulierten Rauchgases mit Primärfrischluft, welche für die Primärverbrennungszone 26 der Brennkammer 24 vorgesehen ist. Die Primärmischkammer 542 und die beiden (Primär-) Ventile 52 sind Teil der Primärmischeinheit 5a und dienen der einstellbaren Vermischung von Rauchgas mit Primärfrischluft.

Die Primärmischkammer 542 ist durch ein Primärmischkammergehäuse 546 ausgebildet. Das Primärmischkammergehäuse 546 ist in etwa quader- oder kastenförmig vorgesehen und weist einen Primärmischkammeraustritt 543 auf. Der Primärmischkammeraustritt 543 ist stromabwärts zu den beiden Ventildurchtrittsöffnungen 526 vorgesehen. Der Primärmischkammeraustritt 543 ist weiter auf einer der Seite der beiden Ventildurchtrittsöffnungen 526 gegenüberliegenden Seite des Primärmischkammergehäuses 546 vorgesehen.

Das Primärmischkammergehäuse 546 mit dessen Ventildurchtrittsöffnungen 526 und dem Primärmischkammeraustritt 543 kann derart eingerichtet sein, dass sich diese nicht durch das Kammervolumen hindurch unmittelbar gegenüberliegen. In anderen Worten sind die Eintrittsöffnungen 526 der Primärmischkammer 542 und die Austrittsöffnung 543 aus der Primärmischkammer 542 derart vorgesehen, dass die sich vereinigenden Strömungen des Rauchgases und der Primärfrischluft besser vermischen können, da die Strömungen zusammengeführt werden.

Bei der Primärmischkammer 542 der Fig. 16 wird beispielsweise die (Gesamt-) Strömung des Rauchgases durch das obere Luftventil 52 erzwungenermaßen nach unten direkt vor den Eintritt der Primärfrischluft in die Primärmischkammer 542 abgelenkt. Damit werden die beiden Strömungen vorteilhaft zusammengeführt und können sich besser vermischen.

Zudem prallen sowohl die Strömung des Rauchgases durch das obere Luftventil 52 als auch die Strömung der Primärfrischluft durch das untere Luftventil 52 (die beispielsweise in Fig. 16 nach links gerichtet sind) gegen eine Wand des Primärmischkammergehäuses 546, womit diese zwangsweise auch bei geringen Strömungsgeschwindigkeiten Luftverwirbelungen ausbilden. Dies fördert eine gleichmäßige Vermischung des Rauchgases mit der Primärfrischluft.

Zudem sind die Eintrittsströmungen der Primärfrischluft und des Rauchgases in die Primärmischkammer 542 sichelförmig ausgestaltet, womit diese ein zusätzliches Element darstellen, das Verwirbelungen schon beim Eintritt in die Primärmischkammer 542 schafft.

Eine gute beziehungsweise homogene Vermischung des rezirkulierten Rauchgases mit der Primärfrischluft ist wichtig, da es sonst zur Strähnenbildung (d. h. zu dauerhaften Inhomogenitäten) in der der Verbrennung zugeführten Luft kommen kann, womit der Verbrennungsprozess nachteilhaft beeinflusst wird. Beispielsweise erhöht sich der Schadstoffausstoß der Biomasse-Heizanlage 1 bei einem inhomogenen Gemisch aus Primär(-frisch)luft und rezirkuliertem Rauchgas.

Im Ergebnis verbessert die vorstehend dargestellte Konfiguration vorteilhaft die Vermischung des Rauchgases mit der Primärfrischluft mit einem einfachen Aufbau.

Die Fig. 17 zeigt betreffend der Sekundärrezirkulation eine Schnittansicht der Sekundärmischkammer 552, sowie der zwei eingangsseitigen (Sekundär-) Luftventile 52 mit deren (Sekundär-) Ventilvorkammern 525 aus einem schrägen Sichtwinkel (vgl. in der Außenansicht entsprechend die Fig. 12 und die Fig. 13). Gleiche oder ähnliche Merkmale der Fig. 17 entsprechen strukturell und funktionell denjenigen der Fig. 16, weshalb zur Vermeidung von Wiederholungen auf die vorstehenden Ausführungen zu der weitgehend analogen Fig. 16 verwiesen wird.

Das rezirkulierte Rauchgas strömt über den rohrförmigen Sekundärrezirkulationskanal 57 durch einen Sekundärreziventileintritt 554 in die optional vorgesehene und vorliegend beispielhaft unten angeordnete (Sekundär-) Ventilvorkammer 525, welche durch ein Ventilgehäuse 524 des oberen (Sekundär-) Luftventils 52 umfasst ist.

Über den Sekundärluftkanal 58 strömt Sekundärfrischluft (Frischluft) durch einen Sekundärluft(ventil)eintritt 555 in eine optional vorgesehene und vorliegend beispielhaft oben angeordnete (Sekundär-) Ventilvorkammer 525, welche durch ein weiteres Ventilgehäuse 524 des unteren (Sekundär-) Luftventils 52 umfasst ist.

Vorliegend wurde die Lage der Eintritte der Rezirkulationskanäle 56, 57 in die Ventilvorkammern 525 (und damit die Lage der für das Rauchgas vorgesehenen Ventile 52) derart eingerichtet, dass die Rezirkulationskanäle 56, 57 über eine möglichst lange Strecke parallel geführt werden können. Damit kann eine gemeinsame Isolation der Rezirkulationskanäle 56, 57 vorgesehen sein, und es kann der thermische Verlust über die Strecke der Rezirkulationskanäle 56, 57 vorteilhaft verringert werden.

Alternativ kann das rezirkulierte Rauchgas auch der oberen (Sekundär-) Ventilvorkammer 525 zugeführt werden, während die Sekundärfrischluft der unteren (Sekundär-) Ventilvorkammer 525 zugeführt wird.

Die Sekundärmischkammer 552 weist ein Sekundärmischkammergehäuse 556 mit einem Mischkammervolumen und einen Sekundärmischkammeraustritt 553 analog zur Primärmischkammer 542 auf.

Die beiden Luftventile 52 der Fig. 17 sind ebenso wie bei der Fig. 16 als Drehschieberventile ausgeführt. Das obere und das untere (Sekundär-) Luftventil 52 können übereinstimmend ausgeführt sein.

Das untere Drehschieberventil 52 kann auch als ein Sekundärrauchgasrückführventil bezeichnet werden. Das untere Drehschieberventil 52 der Fig. 17 ist in einem vollständig geöffneten Zustand dargestellt.

Das obere Drehschieberventil 52 kann auch als ein Sekundärfrischluftzufuhrventil bezeichnet werden. Das obere Drehschieberventil 52 der Fig. 17 ist in einem nur teilweise geöffneten Zustand dargestellt.

Die beiden Sekundärdrehschieberventile 52 sind annähernd identisch zu den beiden Primärdrehschieberventilen 52 der Fig. 16 vorgesehen. Dies gilt insbesondere für die sichelförmige Form der Ventilflügel 523.

Die den beiden Luftventilen 52 nachgelagert angeordnete Sekundärmischkammer 552 dient der Zusammenführung des rezirkulierten Rauchgases mit Primärfrischluft, welche für die Primärverbrennungszone 26 der Brennkammer 24 vorgesehen ist. Die Primärmischkammer 542 und die beiden (Primär-) Ventile 52 sind Teil der Primärmischeinheit 5a und dienen der einstellbaren Vermischung von Rauchgas mit Primärfrischluft.

Die Sekundärmischkammer 552 ist durch ein Sekundärmischkammergehäuse 556 ausgebildet. Das Sekundärmischkammergehäuse 556 ist in etwa quader- oder kastenförmig vorgesehen und weist einen Sekundärmischkammeraustritt 553 auf. Der Sekundärmischkammeraustritt 553 ist stromabwärts zu den beiden Ventildurchtrittsöffnungen 526 vorgesehen. Der Sekundärmischkammeraustritt 553 ist weiter auf einer der Seite der beiden Ventildurchtrittsöffnungen 526 gegenüberliegenden Seite des Sekundärmischkammergehäuses 556 vorgesehen.

Das Sekundärmischkammergehäuse 556 mit dessen Ventildurchtrittsöffnungen 526 und dem Sekundärmischkammeraustritt 553 kann zudem derart eingerichtet sein, dass sich diese nicht durch das Kammervolumen hindurch unmittelbar gegenüberliegen. In anderen Worten sind die Eintrittsöffnungen 526 der Sekundärmischkammer 552 und die Austrittsöffnung 553 aus der Sekundärmischkammer 552 derart vorgesehen, dass die sich vereinigenden Strömungen des Rauchgases und der Primärfrischluft besser vermischen können, da die Strömungen zusammengeführt werden.

Im Unterschied zu der Konfiguration der Primärmischkammer 542 der Fig. 16 ist bei der Sekundärmischkammer 552 eine alternative Konfiguration der Eintrittsöffnungen 526 der Sekundärmischkammer 552 und der Austrittsöffnung 553 aus der Sekundärmischkammer 552 dargestellt. Dabei liegt die Austrittsöffnung 553 zwischen den beiden Eintrittsöffnungen 526 (bzw. den Ventildurchtrittsöffnungen 526). Damit werden die Sekundärfrischluftströmung aus der oberen Eintrittsöffnung 526 und die Rauchgasströmung aus der unteren Eintrittsöffnung 526 derart abgelenkt, dass diese in etwa in der Mitte der der Sekundärmischkammer 552 zusammentreffen, sich dort unter Wirbelbildung vermischen und als gemeinsame Strömung aus der Austrittsöffnung 553 austreten. Durch den mehrmaligen Richtungswechsel und diese Art der Zusammenführung der beiden Strömungen kann ebenso wie bei der Primärmischkammer 542 vorteilhaft eine homogene Vermischung der Sekundärfrischluft und der Primärfrischluft erfolgen.

Die Effekte der Konfiguration der Sekundärmischkammer 552 der Fig. 17 sind somit analog denjenigen der Konfiguration der Primärmischkammer 542 der Fig. 16, worauf verwiesen wird.

Eine gute (homogene) Vermischung der Primärfrischluft bzw. der Sekundärfrischluft mit dem rezirkulierten Rauchgas leistet einen wichtigen Beitrag zur Optimierung der Verbrennungsvorgänge in der Biomasse-Heizanlage 1. Beispielsweise weisen die Primärfrischluft und die Sekundärfrischluft im Regelfall ca. 21% Sauerstoffanteil auf, und es weist das rezirkulierte Rauchgas im Nennlastbetriebsfall beispielsweise einen Sauerstoffanteil von nur ca. 4 bis 5% auf. Würde nun eine inhomogene Vermischung bei der Rezirkulation erfolgen, so würde das Brennstoffbett 28 von unten und auch die Primärverbrennungszone 26 inhomogen mit Sauerstoff versorgt. Im schlimmsten Fall würde bei einer starken Strähnenausbildung bei der Rezirkulation Luft mit nur einem sehr geringen Sauerstoffanteil zur Verbrennung zu einem Teil des Brennstoffs zugeführt. Der Verbrennungsvorgang dieses Teils würde damit deutlich verschlechtert.

Mittels der Primärmischeinheit 5a und der (optionalen) Sekundärmischeinheit 5b wird jedoch eine homogene Vermischung der Primärfrischluft bzw. der Sekundärfrischluft mit dem rezirkulierten Rauchgas bereitgestellt. Weitere Vorteile einer homogenen Vermischung sind die Reduktion von Temperaturspitzen (welche Fouling und Verschlackung verursachen können), sowie die Reduktion von Rauchgas-Geschwindigkeitsspitzen (welche die Materialbeanspruchung und Erosion der Anlage erhöhen).

Die Gestaltung der Sekundärluft- bzw. Rezirkulationsdüsen 291 für die Sekundärrezirkulation erfolgte vorliegend unter den gleichen Gesichtspunkten wie vorstehend dargelegt.

Die Sekundärluft- bzw. Rezirkulationsdüsen 291 sind derart angeordnet, dass eine turbulente Durchmischung und Homogenisierung der Strömung über den Querschnitt der Brennkammer 24 erfolgt. Insbesondere sind die Sekundärluft- bzw. Rezirkulationsdüsen 291 derart angeordnet und ausgerichtet, dass diese in der Brennkammer 24 eine Drallströmung herbeiführen können.

Insbesondere führt die vorstehend erläuterte Ausgestaltung der Sekundärluftdüsen 291 zu einer Minimierung des Feuerungsvolumens sowie zu einer Reduktion der Emissionen.

Ist nur eine Primärrezirkulation vorgesehen, können mittels der beiden (Primär-) Luftventile 52 sowohl der Massestrom (kg/h) als auch das Mischungsverhältnis des Gemischs aus rezirkuliertem Rauchgas und Primärfrischluft vorteilhaft derart geregelt werden, dass ein optimaler Betriebspunkt der Verbrennung in der Biomasse-Heizanlage 1 erreicht wird oder dieser zumindest annähern erreicht wird.

Sollte eine Sekundärrezirkulation und eine Primärrezirkulation vorgesehen sein, so kann beides vorteilhaft unabhängig voneinander geregelt werden. D. h., es können der Massestrom (kg/h) und das Mischungsverhältnis des Gemischs der Primärrezirkulation und der Massestrom (kg/h) und das Mischungsverhältnis des Gemischs der Sekundärrezirkulation jeweils unabhängig voneinander eingestellt werden.

Damit kann die Verbrennung vorteilhaft flexibel und optimiert im Betriebspunkt, auch unter Berücksichtigung eines vorbekannten Falschlufteintrags, eingestellt werden. In anderen Worten führt insbesondere der Einsatz von zwei (nur Primärrezirkulation) oder vier (Primär- und Sekundärrezirkulation) unabhängig einstellbaren Luftventilen 52 dazu, dass ein größerer Regelungsbereich für die Rezirkulationseinrichtung 5 als üblich vorgesehen ist.

Im Betriebsfall kann insbesondere der Primär- und optional auch der Sekundär-Luftstrombereich vollautomatisch über eine Steuerung geregelt werden. Damit erreicht man eine optimierte Leistungs- und Verbrennungsoptimierung, verringert Schlackenbildung durch Unterschreitung der Ascheschmelzpunkte in der Brennkammer und sorgt für hohe Wirkungsgrade, sehr geringe Feinstaubwerte mit geringen NOx-Emissionen; und dies bei unterschiedlichen Brennstoffen und Brennstoffqualitäten, da die Rezirkulationseinrichtung 5 somit insbesondere für eine hybride Feuerung mit unterschiedlichen Brennstoffen geeignet ist.

### (Rauchgaskondensator)

Weiter kann an der Biomasse-Heizanlage 1 ein Rauchgaskondensator vorgesehen sein, um Brennwerttechnologie vorzusehen. Ein Rauchgaskondensator ist eine besondere Art eines Wärmetauschers.

Je nach Zusammensetzung von Brennstoff und Zuluft, deren beider Feuchte und dem Gehalt an chemisch gebundenen Wasserstoffatomen im Brennstoff, bilden sich bei einer Verbrennung unterschiedliche Mengen Wasserdampf sowie sonstige kondensierbare Stoffe im Rauchgas. Wird dieses in einem Rauchgaskondensator unter den Taupunkt abgekühlt, so können Wasserdampf und Begleitstoffe kondensieren und die frei werdende Kondensationswärme kann an das Wärmeübertragermedium übertragen werden. Da dadurch der latente Wärmeinhalt des Rauchgases genutzt wird, können infolgedessen der Brennstoffeinsatz und CO₂-Emissionen reduziert werden.

Bei der meist unvollständig ablaufenden Verbrennung biologischer Materialien (insbesondere bei Hackgut-Heizungen und Pelletheizungen) scheiden sich bei Abkühlung des Rauchgases Glanzruß, Flugasche, Flugstaub, Holzteer oder Teer und gegebenenfalls unverbrannte Kohlenwasserstoffe ab. Diese verunreinigen die Oberflächen des Wärmetauschers stark und führen üblicherweise zu - den Abgas- oder Kaminzug behindernden oder verstopfenden - Anbackungen. Darum werden beispielsweise Kaminöfen und Kachelöfen ohne Rauchgaskondensationsanlage mit Abgastemperaturen größer 120 °C betrieben, was nachteilig ist, da energieineffizient. Die dadurch nicht abgesonderten Schadstoffe und der Wasserdampf (deren Kondensationswärme und Restenergiegehalte rund 70 % des Brennwerts ausmachen können) werden nachteilhaft in die Umwelt emittiert.

Bei einem Rauchgaskondensator für die Biomasse-Heizanlage 1 in Hybridtechnologie stellt sich damit die Aufgabe, einen optimierten Rauchgaskondensator mit hohem Wirkungsgrad vorzusehen, der trotzdem verschmutzungsunempfindlich ist.

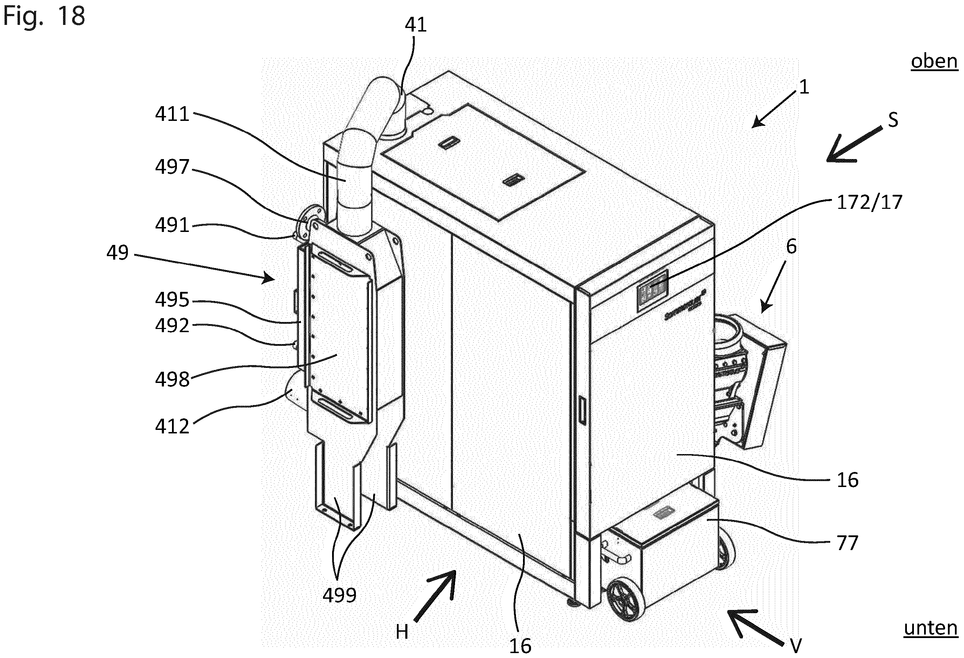

Die Fig. 18 zeigt eine dreidimensionale Überblicksansicht der Biomasse-Heizanlage 1 aus Fig. 1 mit einer zusätzlichen Außenverkleidung 16 (beispielsweise eine Isolation 16) und einem zusätzlichen Rauchgaskondensator 49.

An einer Außenseite, vorliegend der Vorderseite die mit dem Pfeil V angegeben ist, ist in der Außenverkleidung 16 des Kessels 11 eine Steuereinrichtung 17 mit einem Speicher 171 (nicht dargestellt) und mit einem Display 172 vorgesehen.

Der Rauchgaskondensator 49 ist neben dem Kessel 11 mittels einer Halterungseinrichtung 499 aufgestellt und über eine Rauchgas- oder Abgaszuleitung 411 mit dem Rauch- bzw. Abgasausgang 41 des Kessels 11 verbunden. Das Rauchgas strömt durch den Rauchgaskondensator 49 hindurch und aus diesem durch einen Rauchgasausgang 412 hinaus. Der Rauchgaskondensator 49 weist eine Seitenfläche 498 mit einer vorliegend verschlossenen Wartungsöffnung auf.

Weiter ist ein Flansch 497 mit einer Öffnung vorgesehen, um einen nach innen in den Rauchgaskondensator 49 hineinragenden Spritzbalken (dieser ist nicht dargestellt) zu haltern. Dieser horizontal aus dem Flansch herausragende Spritzbalken weist nach unten gerichtete (Spritz-) Düsen auf und ist an eine Wasserzufuhr angeschlossen. Bei Aktivierung der Wasserzufuhr kann der Innenraum des Abgaskondensators 49 gereinigt werden.

Bei dem Rauchgaskondensator 49 der Fig. 18 sind weiter ein erster Fluidanschluss 491 und ein zweiter Fluidanschluss 492 für ein Wärmetauschermedium an einem Kopfelement 495 des Rauchgaskondensators 49 vorgesehen. Einer der Anschlüsse ist dabei ein Einlauf und der andere ein Auslauf. Üblicherweise wird das Wärmetauschermedium in einem Kreislauf zirkuliert, womit die vom Wärmetauschermedium aufgenommene Wärme nutzbar gemacht wird.

An der Unterseite des Rauchgaskondensators 49 ist ein Kondensataustritt 496 vorgesehen, durch den das im Inneren des Rauchgaskondensators 49 erzeugte Kondensat abfließen kann.

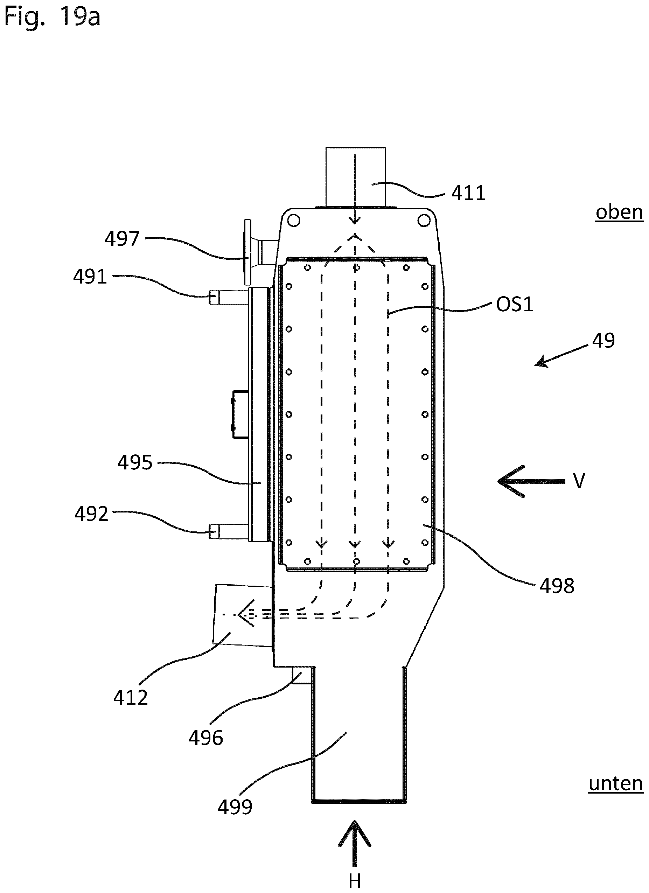

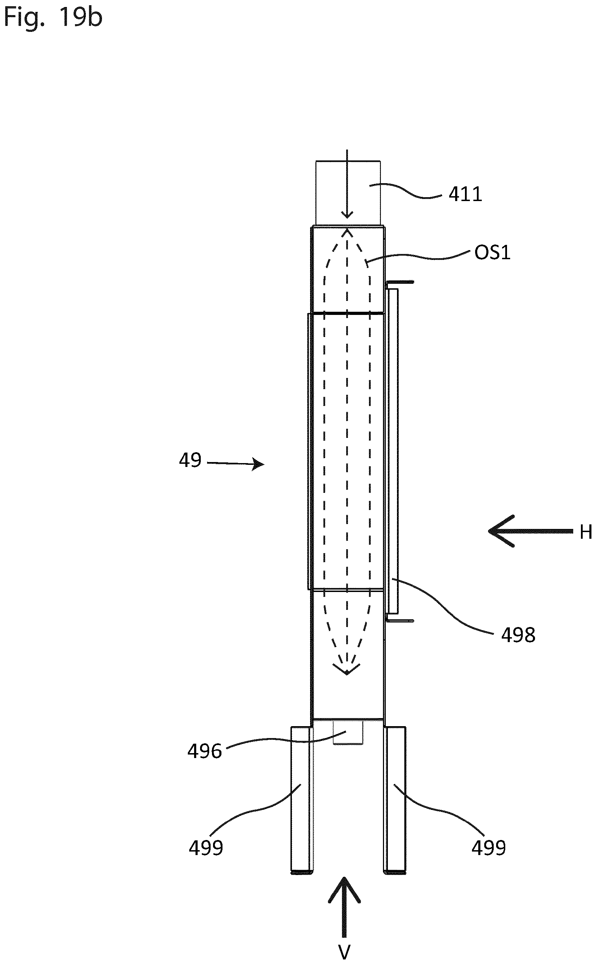

Die Fig. 19a zeigt den Rauchgaskondensator 49 der Fig. 18 in einer Seitenansicht aus der Richtung des Pfeils H der Fig. 18. Die Fig. 19b zeigt den Rauchgaskondensator 49 der Fig. 18 in einer Seitenansicht aus der Richtung des Pfeils V der Fig. 18.

Der Pfeil OS1 zeigt schematisch den Fluss bzw. die Strömung des Rauchgases im Inneren des Rauchgaskondensators 49 weitgehend von oben nach unten, d. h. von der Rauchgaszuleitung 411 bis zu dem Rauchgasausgang 412. Die Strömung des Rauchgases ist dabei weitgehend nach unten ausgerichtet und verteilt sich nach dem Eintritt in den Rauchgaskondensator 49 über dessen Innenvolumen.

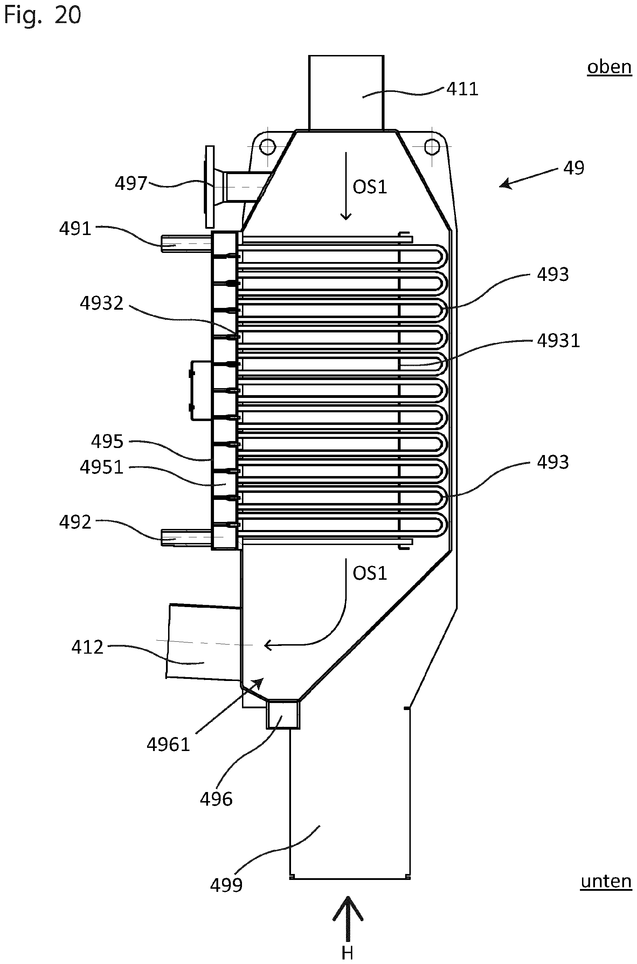

Die Fig. 20 zeigt eine Innenansicht des Rauchgaskondensators 49 der Fig. 19a und der Fig. 18.

Im Inneren des Rauchgaskondensators 49 sind quer zur Hauptströmungsrichtung eine Vielzahl von Wärmetauscherrohren 493 angeordnet. Diese U-förmigen Wärmetauscherrohre 493 werden von dem Wärmetauschermedium durchströmt und werden von dem Rauchgas umströmt. Dabei findet ein Wärmeaustausch statt. Insbesondere kann eine Kondensation des Rauchgases an den Wärmetauscherrohren 493 stattfinden, womit Bestandteile des Rauchgases (insbesondere Wasser) im Rauchgaskondensator abgeschieden werden. Die Vielzahl von Wärmetauscherrohren 493 kann auch als Wärmetauscher-Rohrbündel 493 bezeichnet werden.

Für das Kondensat ist im unteren Teil des Rauchgaskondensators 49 ein Kondensatsammeltrichter 4961 vorgesehen, der das Kondensat einfängt und zu dem Kondensataustritt 496 ausleitet. Von dort aus kann das Kondensat entsorgt werden. Der Kondensatsammeltrichter 4961 ist zudem derart eingerichtet, dass dieser die Strömung des Rauchgases im unteren Teil des Rauchgaskondensators 49 seitlich bzw. horizontal in Richtung des Rauchgasausgangs 412 ablenkt.

Durch die nach unten gerichtete Strömung des Rauchgases in Richtung des Kondensataustritts 496 wird der Austrag des Kondensats vorteilhaft beschleunigt.

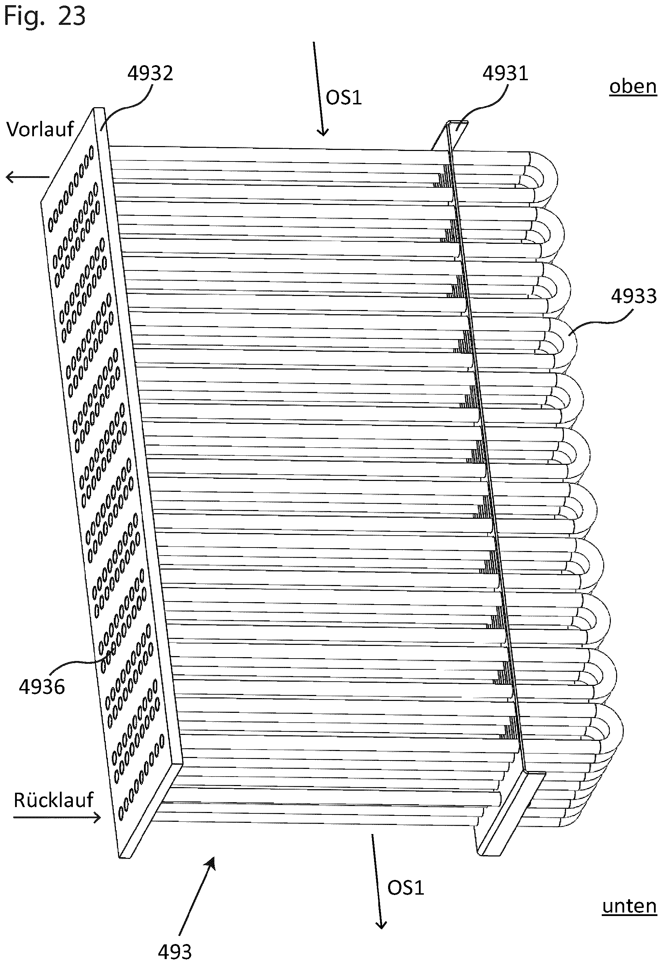

Die Vielzahl der U-förmigen Wärmetauscherrohre 493 ist mittels eines Rohrhaltelements 4931 an einer Seite gehaltert. Die Enden der Vielzahl der U-förmigen Wärmetauscherrohre 493 sind weiter an einem Rohrbodenelement 4932 angebracht, beispielsweise verschweißt. Das Rohrbodenelement 4932 ist ein plattenförmiges Element mit einer Vielzahl von Durchbrüchen für die Wärmetauscherrohre 493. Das Rohrbodenelement 4932 bildet ein innenseitiges Teil des Kopfelements 495 aus. Das Kopfelement 495 beinhaltet eine kammerartig ausgebildete Strömungsführung zwischen dem ersten Fluidanschluss 491 und dem zweiten Fluidanschluss 492 derart, dass die Vielzahl der U-förmigen Wärmetauscherrohre 493 gruppenweise jeweils in Serie miteinander verbunden sind. Beispielsweise kann eine vorbestimmte Anzahl von U-förmigen Wärmetauscherrohren 493 fluidisch parallel verbunden sein, um eine Gruppe von U-förmigen Wärmetauscherrohren 493 auszubilden, und die Gruppen können wiederum miteinander strömungstechnisch seriell miteinander verbunden sein. Diese Strömungsführung kann unter anderem durch eine Kopfelementströmungsführung 4951, aufweisend Teilerplatten 4951, vorgesehen sein, die einen Hohlraum im Kopfelement 495 in einzelne strömungstechnische Abschnitte unterteilt. Dies wird insbesondere aus der Zusammenschau der Figuren 20 und 23 deutlich.

Es sind die Wärmetauscherrohre 493 in einer 1-zügig gruppierten Ausführung vorgesehen. Diese 1-zügige Ausführung lässt sich leichter abreinigen, da nur ein Satz Reinigungsdüsen erforderlich ist, und sieht vorteilhaft eine homogenere Anströmung und Durchströmung des Rauchgases vor.

Es strömt das Wärmetauschermedium durch einen der Fluidanschlüsse 491, 492 in den Abgaskondensator 49, in Folge aufgrund der Teilerplatten 4951 abwechselnd durch das Kopfelement 495 und die U-förmigen Wärmetauscherrohre 493 und dann wieder durch den anderen der Fluidanschlüsse hinaus. Dabei nimmt das durch den Rauchgaskondensator 49 strömende Wärmetauschermedium Wärme aus dem Rauchgas auf.

Der Rauchgaskondensator 49 bildet mit den Wärmetauscherrohren 493 einen Glattrohr-Wärmetauscher aus. Dabei befindet sich das Wärmetauschermedium in den Wärmetauscherrohren 493 und das Rauchgas umströmt die Wärmetauscherrohre 493.

Die Wärmetauscherrohre 493 können beispielsweise aus dem Werkstoff 1.4462 oder 1.4571 bestehen. Der Edelstahl-Werkstoff 1.4462 (vorzugsweise X2CrNiMoN22-5-3) hat sich vorliegend als beständiger und besser als Werkstoff 1.4462 (V4A) erwiesen. Im Detail weist 1.4462 eine besonders hohe Korrosionsbeständigkeit (insbesondere gegen Spannungsrisskorrosion und chemische Korrosion) und sehr gute mechanische Eigenschaften (z. B. Festigkeit) auf, ist für den Einsatz bei Temperaturen von 100°C bis 250°C geeignet, ist gut schweißbar und polierbar. Der im Gegensatz zum konventionellen Austenit verringerte Nickelgehalt gestaltet die Verwendung des Stahls 1.4462 auch vom ökonomischen Standpunkt her vorteilhaft, da dieser trotz der besseren Werkstoffeigenschaften nicht erheblich teurer ist.

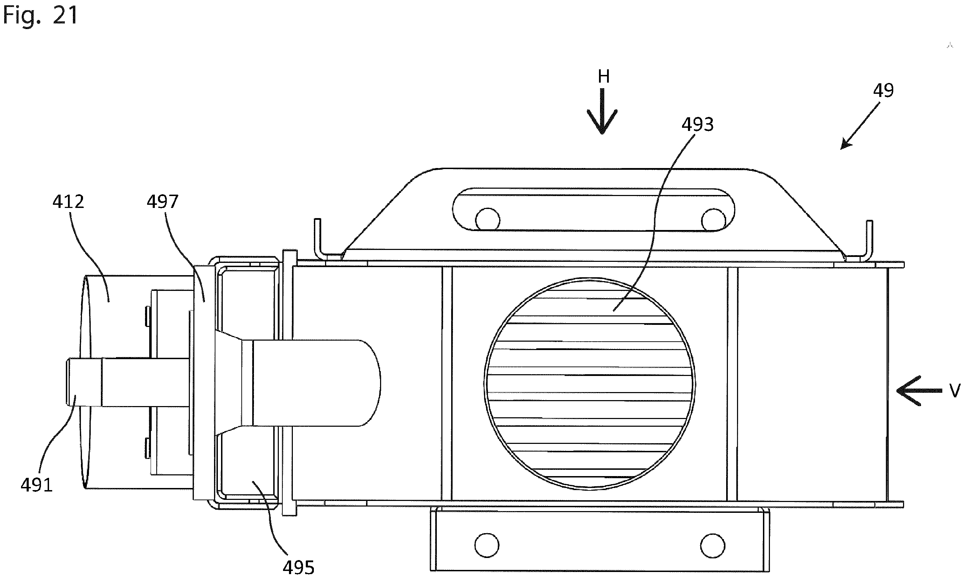

Ein wichtiger Faktor bei der Optimierung der Effizienz des Wärmetauschvorgangs ist die Optimierung der Flächen und deren Beströmung der Vielzahl der U-förmigen Wärmetauscherrohre 493. Dies wird nachstehend mit Bezug auf die Figuren 21 bis 26 näher erläutert.

Fig. 21 zeigt den Rauchgaskondensator 49 aus einer Ansicht von oben mit einem Blick in die Öffnung für die Rauchgaszuleitung 411 des Rauchgaskondensators. Zu erkennen ist, dass die Vielzahl der Wärmetauscherrohre 493 eine die Rauchgasströmung kreuzende Struktur ausbilden, bei der die Vielzahl der Wärmetauscherrohre 493 vertikal miteinander fluchten. Damit weist der vorliegende Rauchgaskondensator 49 einen Kreuzstrom betreffend der Strömung des Wärmetauschermediums (beispielsweise Wasser) relativ zu der Strömungsrichtung des Rauchgases (OSl) auf. Zwischen den Wärmetauscherrohren 493 sind Zwischenräume (Spalte) mit einer gleichbleibenden Breite vorgesehen.

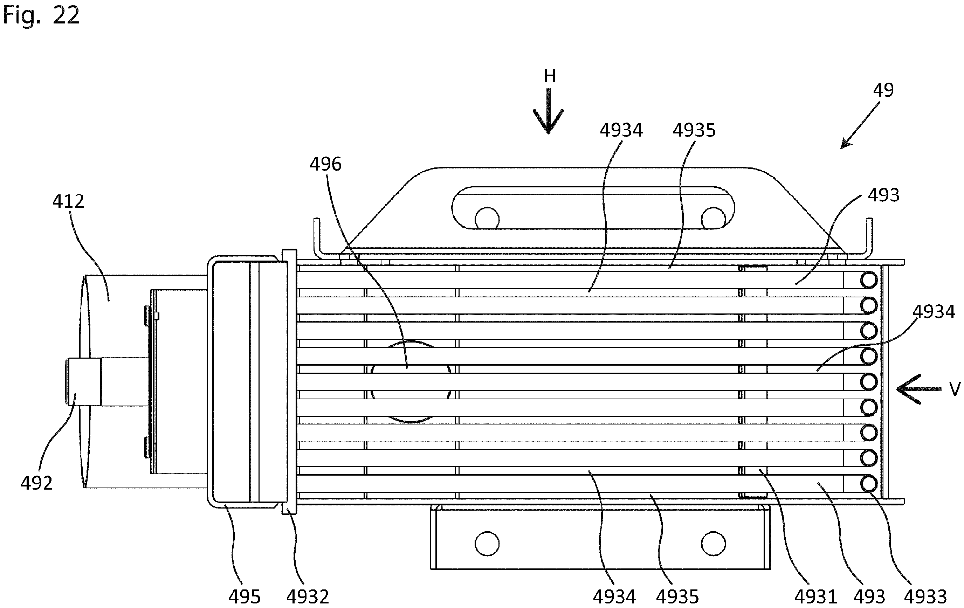

Die Fig. 22 zeigt den Rauchgaskondensator 49 der Fig. 18 aus einer horizontalen Schnittansicht von oben. Die Wärmetauscherrohre 493 sind dabei über die gesamte Querschnittsfläche des Rauchgaskondensators 49 derart angeordnet, dass erste (horizontale) Zwischenräume 4934 zwischen den Wärmetauscherrohren 493 zueinander und zweite (horizontale) Zwischenräume 4935 zwischen den Wärmetauscherrohren 493 und den Außenwänden des Rauchgaskondensators 49 eine zumindest weitgehende konstante Breite aufweisen. Geringfügige Ausnahmen davon können an den von den Schlaufen der Wärmetauscherrohre 493 gebildeten Umkehrstellen 4933 vorhanden sein, da hier zwangsläufig variierende und teils größere Zwischenräume vorhanden sind. Ein U-förmiges Wärmetauscherrohr 493 weist somit zwei gerade Einzelrohre mit einer Umkehrstelle 4933 dazwischen auf.

Die ersten Zwischenräume 4934 bilden aus der Sicht der Fig. 22 aus betrachtet eine Art vertikal und geradlinig verlaufender "Gasse" zwischen den Wärmetauscherrohren 493, durch die das Rauchgas vertikal durchströmen kann. Damit ist der Druckverlust verringert, während mit dem vorliegenden Aufbau mit glatten Rohren ein effizienter Wärmeaustausch sichergestellt werden kann.

Weiter können die ersten Zwischenräume 4934 zwischen den Wärmetauscherrohren 493 und die zweiten Zwischenräume 4935 zwischen den Wärmetauscherrohren 493 und den Außenwänden des Rauchgaskondensators 49 zudem mit einer Breite derart vorgesehen sein, dass die ersten Zwischenräume 4934 eine größere Horizontalbreite als die zweiten Zwischenräume 4935 aufweisen.

Die vorstehende Anordnung der Zwischenräume 4934, 4935 führt vorteilhaft zu einer gleichmäßigen Verteilung der Rauchgasströmung und damit zu einem homogeneren und effizienteren Wärmeaustausch.

Fig. 23 zeigt eine dreidimensionale Ansicht der Vielzahl der Wärmetauscherrohre 493 mit dem Rohrbodenelement 4932 und dem Rohrhalteelement 4931. Das Rohrhalteelement 4931 kann beispielsweise aus einem Blech mit ausgestanzten Öffnungen für die U-förmigen Wärmetauscherrohre 493 ausgebildet sein. Das Rohrhalteelement 4931 dient der Halterung der Wärmetauscherrohre 493 und verringert die mechanische Belastung an den Enden der Wärmetauscherrohre 493 an dem Rohrbodenelement 4932. Das plattenförmige Rohrbodenelement 4932 ist mir den Wärmetauscherrohren 493 derart verbunden, dass mit den Wärmetauscherrohren 493 korrespondierende Durchlässe 4936 in dem Rohrbodenelement 4932 vorgesehen sind und das Wärmetauschermedium durch das Rohrbodenelement 4932 entsprechend hindurchströmen kann.

Die Außenabmessungen der Vielzahl der Wärmetauscherrohre 493 (des Rohrbündels) und des Rohrbodenelements 4932 können beispielsweise 642 x 187 x 421 mm betragen, womit ein sehr kompakter Aufbau vorliegt.

Die Wärmetauscherrohre 493 sind mit deren U-Form vertikal angeordnet, womit vertikal übereinander jeweils zwei einzelne Rohre (bzw. Rohrabschnitte) pro U-förmigem Wärmetauscherrohr 493 vorgesehen sind.

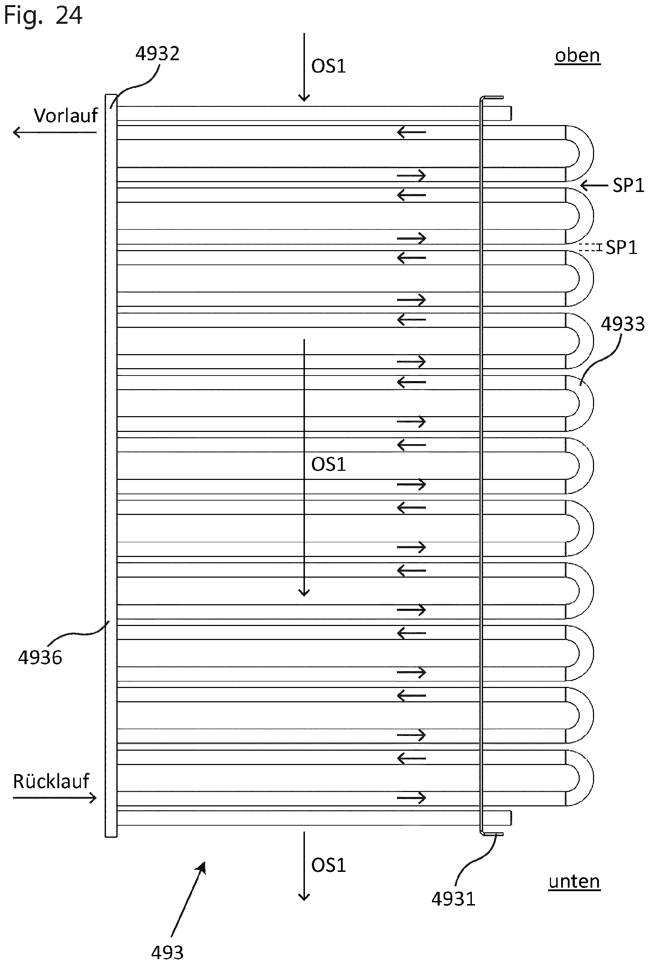

Fig. 24 zeigt eine Seitenansicht der Vielzahl der Wärmetauscherrohre 493 der Fig. 23. Vorzugsweise kann der zweite Fluidanschluss 492 der Einlass für das Wärmetauschermedium sein, und es kann der erste Fluidanschluss 491 der Auslass für das Wärmetauschermedium sein. Für diesen Fall ist die Strömung des Wärmetauschermediums in Fig. 24 mit den Pfeilen an und in den Wärmetauscherrohren 493 angegeben. Die drei mit OS1 bezeichneten Pfeile zeigen schematisch die Strömung des Rauchgases. Die Strömung des Wärmetauschermediums führt abwechselnd von links nach rechts und umgekehrt, und schlängelt sich dabei zudem mäanderförmig von unten nach oben entgegen der Strömungsrichtung. Insofern weist der vorliegende Rauchgaskondensator 49 eine Kreuz-Gegenstrom-Konfiguration auf. Diese Konfiguration hat sich als ideal für eine Wärmerückgewinnung erwiesen. Der Rauchgaskondensator 49 ist zudem vorteilhaft ein Glattrohrkondensator, der sich einfach abreinigen lässt.

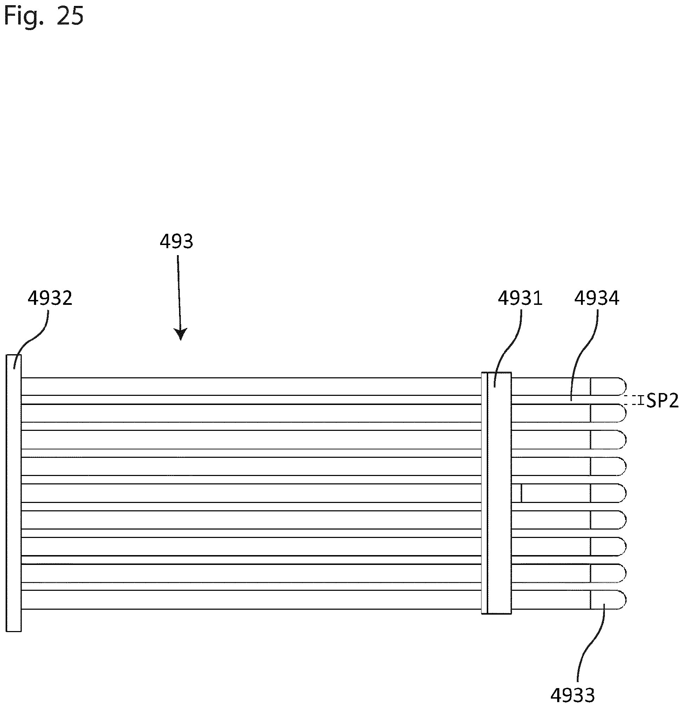

Fig. 25 zeigt eine Draufsicht auf die Vielzahl der Wärmetauscherrohre 493 der Fig. 23 zur Verdeutlichung der Gesamtgeometrie der Vielzahl der Wärmetauscherrohre 493 der Fig. 23.

Das Rauchgas durchdringt die Wärmetauscherrohre 493 ebenso von oben, d. h. aus Sicht der Fig. 25 sind die Passagen für das Rauchgas erkennbar. Diese Passagen sind längliche Spalte bzw. Gassen, durch die das Rauchgas verteilt und mit großer Flächenbestreichung der Rohre 493 durchtreten muss.

Die ersten Zwischenräume 4934 können dabei eine (beispielsweise horizontale) Breite SP2 (eine Spalt- bzw. Gassenbreite für das Rauchgas in der ersten Richtung) aufweisen, die vorzugsweise 6,0 mm +- 0,5 mm betragen kann. Diese Breite SP2 ist damit kleiner als üblich, was die Effizienz verbessert.

Die Breite SP2 kann beispielsweise gleich oder kleiner der Breite SP1 (ein Minimalabstand) sein.

Der Rohraußendurchmesser der Wärmetauscherrohre 493 kann beispielsweise 12,0 mm +- 1 mm betragen. Der Abstand der Querteilung des Rauchgaskondensators 49 kann damit beispielsweise 12,0mm + 6 mm = 18 mm +- 1,5 mm betragen.

Der Gesamtaufbau und insbesondere die Breite SP2 sind dabei derart vorteilhaft dimensioniert, dass sich vorliegend hohe Wärmeübertragungsraten und somit Gesamtwirkungsgrade (>107%) mit sehr geringem Volumenbedarf erzielen lassen. Die Breite SP2 kann als Gasse vorteilhaft für alle der Vielzahl der Wärmetauscherrohre 493 übereinstimmend vorgesehen sein.

Bei der der Vielzahl der Wärmetauscherrohre 493 sind in Fig. 23 vertikal elf (11) Rohrbündel und horizontal neun (9) Rohrbündel vorgesehen, was sich als guter Kompromiss zwischen Kompaktheit des Aufbaus, Effizienz des Wärmetauschers, Druckverlust des Rauchgases, Druckverlust des Wärmetauschermediums und Komplexität des mechanischen Aufbaus erwiesen hat. Es können somit beispielsweise insgesamt 99 U-förmige Wärmetauscherrohre 493 vorgesehen sein.

Die horizontalen Rohrbündel der Wärmetauscherrohre 493 sind damit gruppenweise in einer ersten Richtung (vorliegend beispielhaft der horizontalen Richtung) und parallel zueinander angeordnet. Eine solche Gruppe ist in Fig. 25 dargestellt.

Die Gruppen der horizontalen Rohrbündel sind zudem parallel nebeneinander in einer zweiten Richtung (vorliegend beispielsweise vertikal übereinander) angeordnet, wie dies beispielhaft in Fig. 24 dargestellt ist. Die erste und die zweite Richtung können vorzugsweise orthogonal zueinander sein.

Nach Berechnungen und Praxistest hat sich als vorteilhaft herausgestellt, dass folgende Bereiche der Rohranzahl vertikal und horizontal zu dem in vorstehendem Sinne optimierten Wärmetauscher führen können:
- 8 bis 14, vorzugsweise 10 bis 12, vertikale U-förmige Wärmetauscherrohre 493, sowie
- 7 bis 12, vorzugsweise 8 bis 10, horizontale U-förmige Wärmetauscherrohre 493.

Auf Einzelrohre bezogen können folgende Anzahlbereiche vorgesehen sein:
- 16 bis 28, vorzugsweise 20 bis 24, vertikale (Einzel-) Rohre; und
- 7 bis 12, vorzugsweise 8 bis 10, horizontale (Einzel-) Rohre.

Ein U-förmiges Wärmetauscherrohr 493 beinhaltet vorliegend aus der vertikalen Sicht 2 Einzelrohre, und aus der horizontalen Sicht 1 Einzelrohr.

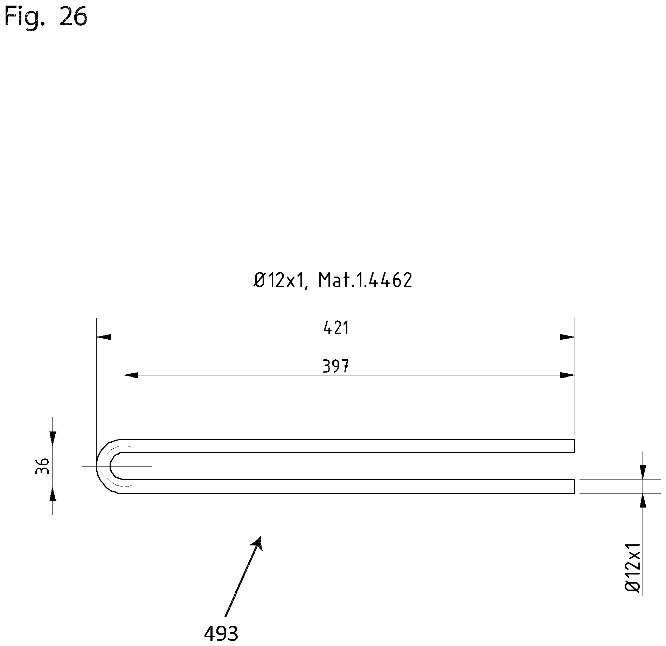

Fig. 26 zeigt ein einzelnes (herausgestelltes) beispielhaftes U-förmiges Wärmetauscherrohr 493 der Fig. 23 und dessen Dimensionierung. Allerdings kann die Dimensionierung des Wärmetauscherrohrs 493 auch davon abweichen. Beispielsweise kann auch mit einer anderen Dimensionierung des Wärmetauscherrohrs 493 eine Gassenbreite SP2 von 6 mm +- 0,5 mm eingehalten werden.

Die auf der linken Seite der Fig. 26 angedeutete Mittellinie stellt die Mittelachse des U-förmigen Wärmetauscherrohrs 493 dar. Vorzugsweise sind alle Mittellinien der Vielzahl der U-förmigen Wärmetauscherrohr 493 parallel zueinander angeordnet.

Ein weiterer Vorteil des Aufbaus ist, dass eine Vielzahl gleich oder identischer U-förmiger Wärmetauscherrohre 493 in Massenanfertigung hergestellt werden kann. Die einzeln hergestellten Wärmetauscherrohre 493 werden dann mit dem Rohrbodenelement 4932 verschweißt, bevor oder nachdem diese in das Rohrhaltelement 4931 eingefügt worden sind.

Die recht geringe Gassenbreite SP2 wird insbesondere deshalb ermöglicht, da die oben beschriebene Biomasse-Heizanlage 1 aufgrund dessen Effizienz und "sauberer" Verbrennung nur zu einer sehr geringfügigen Verschmutzung der Wärmetauscherrohre 493 beiträgt. Dazu kann insbesondere die Filtereinrichtung 4 sorgen.

Mit der vorstehend dargelegten Konfiguration ist es nach Berechnungen möglich, den rauchgasseitigen Druckverlust geringer als 100 Pa (eher ca. 60 Pa) zu halten, während eine Grädigkeit von rechnerisch ca. 14 Kelvin erreichbar ist. Die Wärmetauschleistung ist mit obenstehend dargelegter beispielhafter Dimensionierung auf ca. 19,1 kW ausgelegt. Der vorliegende Rauchgaskondensator 49 ist dabei insbesondere und im Unterschied zum Stand der Technik für Biomasse-Heizanlagen mit einem weiten Leistungsbereich von 20 bis 500 kW Kesselnennleistung ausgelegt und dafür auch geeignet.

Damit sieht der Rauchgaskondensator 49 eine verbesserte Rauchgasbehandlung vor.

### (Übergangsschnecke)

Im unteren Teil der Biomasse-Heizanlage 1 der Figuren 2 und 3 ist eine Ascheabfuhreinrichtung 7 dargestellt, welche eine Ascheaustragungsschnecke 71 (eine Förderschnecke) mit einer Übergangsschnecke 73 in einem Ascheaustragungskanal aufweist, die von einem Motor 72 betrieben, d. h. gedreht wird.

Die Ascheaustragungsschnecke 71 der Ascheabfuhr 7 dient der effizienten Entfernung der Verbrennungsreste aus dem Unterteil des Kessels 11 in einen Aschebehälter 74, der beispielhaft in Fig. 18 dargestellt ist. Die Übergangsschnecke 73 der Ascheaustragungsschnecke 71 dient zudem der Trennung der einzelnen Strömungsbereiche des Kessels 11 (vgl. Pfeile S1 und S 5), mithin trennt diese die Brennkammer 24 von der Wendekammer 35. Hierbei soll kein Rauchgas nach dem Durchtritt durch den Wärmetauscher 3 unkontrolliert zurück zur Verbrennung gelangen.

Eine beispielhafte Aufgabe ist es, eine Ascheaustragungsschnecke 71 vorzusehen, die eine effiziente Trennung für das Rauchgas im Kessel bereitstellt, und dabei verschleißarm und kostengünstig ist.

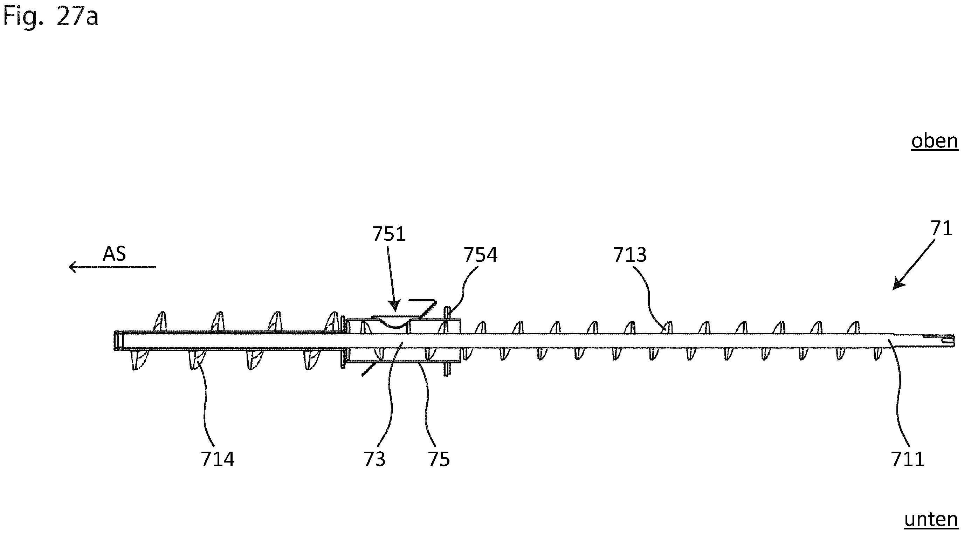

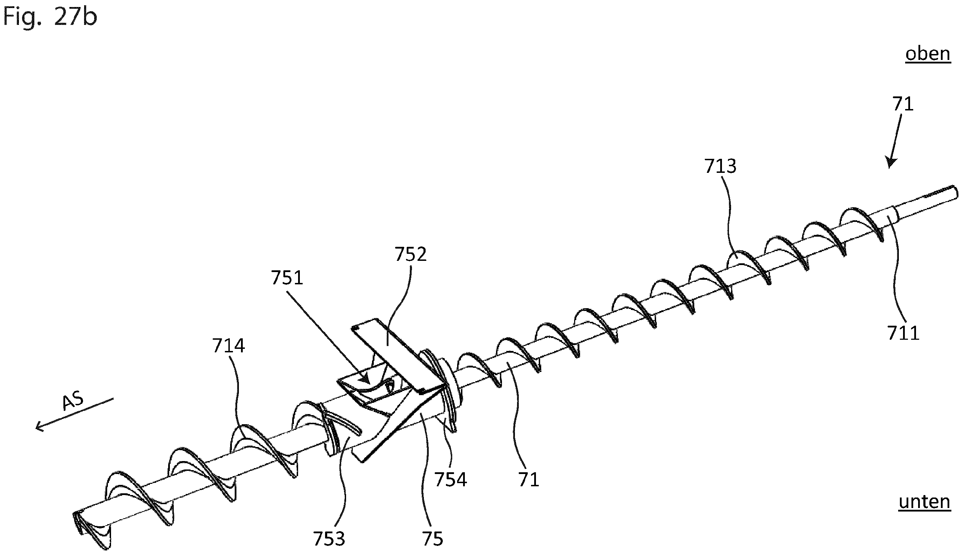

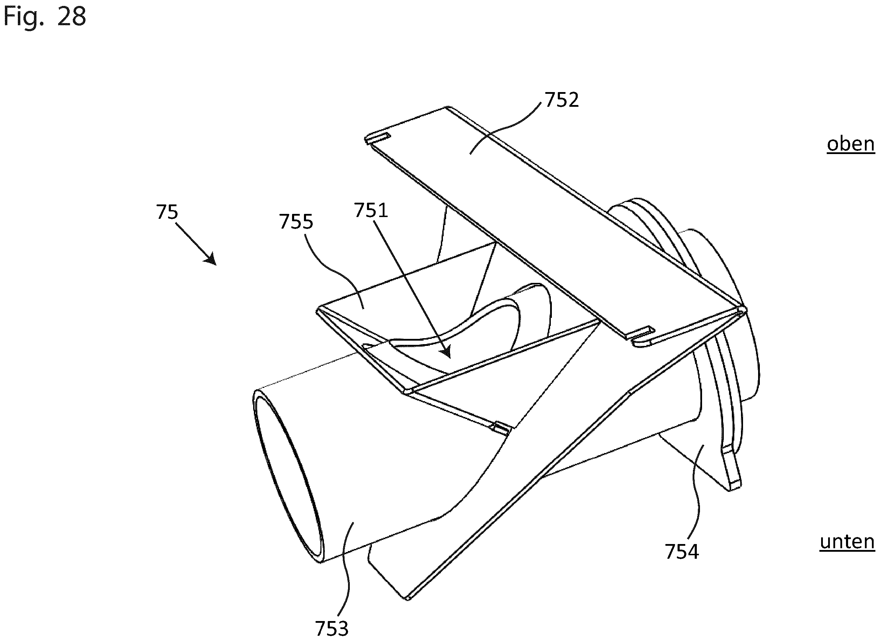

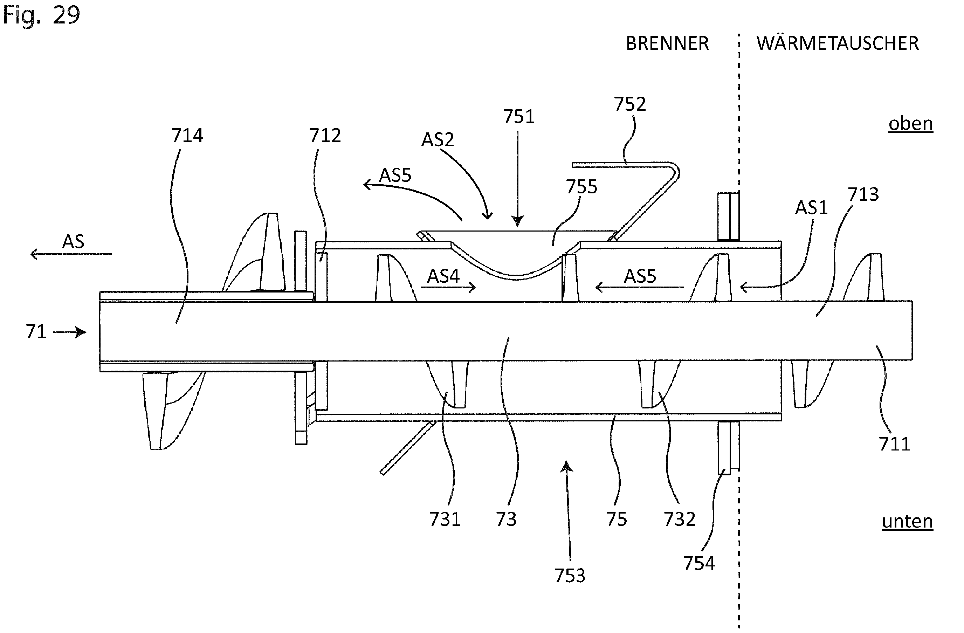

Die Fig. 27a zeigt eine aus den Figuren 2 und 3 herausgestellte Schnittansicht der Ascheaustragungsschnecke 71 mit der Übergangsschnecke 73. Die Fig. 27b zeigt eine dreidimensionale Schrägansicht der Ascheaustragungsschnecke 71 der Fig. 27a. Die Fig. 28 zeigt eine dreidimensionale Schrägansicht eines Gehäuses 75 der Übergangsschnecke 73. Die Fig. 29 zeigt eine Detailansicht der Ascheaustragungsschnecke 71 mit der Übergangsschnecke 73 der Fig. 27a.

Die Ascheaustragungsschnecke 71 ist über deren Achse 711 an deren rechtem Ende (bzw. dem hinteren Ende des Kessels 11) durch den (in den Fig. 27a, 27b, 28 und 29 nicht dargestellten) Motor 72 drehend angetrieben und dient dazu, Verbrennungsrückstände, wie beispielsweise Asche, nach links in den Aschebehälter 74 zu befördern. Diese allgemeine Förderrichtung ist in den Fig. 27a, 27b und 29 mit dem Pfeil AS angegeben.

Die Ascheaustragungsschnecke 71 der Figuren 27a, 27b, 28 und 29 weist weiter einen Abschnitt die Übergangsschnecke 73 auf. Als Übergangsschnecke 73 ist der Abschnitt der Ascheaustragungsschnecke 71 bezeichnet, der sich in dem Übergangsschneckengehäuse 75 befindet.

Es weist die Ascheaustragungsschnecke 71 im Detail drei Abschnitte auf:
1) einen Brennerabschnitt 714 bzw. ein im Brennerbereich gelegener Teil 714 der der Ascheaustragungsschnecke 71 (in den Figuren 27a, 27b und 29 ist dieser links dargestellt),
2) einen Wärmetauscherabschnitt 713 bzw. einen im Wärmetauscherabschnitt gelegener Teil 713 der Ascheaustragungsschnecke 71 (in den Figuren 27a, 27b und 29 ist dieser rechts dargestellt), und
3) zwischen diesen beiden Abschnitten den Abschnitt der Übergangsschnecke 73 bzw. die Übergangsschnecke 73 im Übergangsschneckengehäuse 75.

Die Steigungsrichtungen bzw. die Gängigkeit des Wärmetauscherabschnitts 713 und des Brennerabschnitts 714 stimmen überein, d. h. es sind beide Abschnitte entweder rechtsdrehend oder linksdrehend vorgesehen. Dreht folglich der (in den Fig. 27a, 27b, 28 und 29 nicht dargestellte) Motor 72 die Ascheaustragungsschnecke 71, ist die Förderrichtung für die Verbrennungsrückstände im Wärmetauscherabschnitt 713 und im Brennerabschnitt 714 jeweils die gleiche. Die Übergangsschnecke 73 ist in einem Teil davon jedoch abweichend vorgesehen. Dies wird später mit Bezug auf die Figuren 28 und 29 näher erläutert.

Die Ascheaustragungsschnecke 71 der Figuren 27a, 27b, 28 und 29 weist links der Übergangsschnecke 73 einen größeren Durchmesser auf als rechts der Übergangsschnecke. Dazu kann beispielsweise auf der für alle drei Abschnitte der Ascheaustragungsschnecke 71 gemeinsam oder auch einstückig oder mehrstückig (zusammensteckbar) vorgesehenen Schneckenachse 711 ein Schneckenteil mit größerem Durchmesser vorgesehen oder aufgesteckt sein. Mittels der Durchmesserunterschiede wird der Abtransport der Verbrennungsrückstände optimiert, da in der Brennkammer 24 mehr Verbrennungsrückstände anfallen.

Das Übergangsschneckengehäuse 75 der Fig. 27a, 27b, 28 und 29 weist an dessen Oberseite eine Öffnung 751 auf. Das Übergangsschneckengehäuse 75 weist weiter ein Begrenzungsblech 752, einen zylindrischen Hauptkörperabschnitt 75, ein Befestigungs- und Trennelement 754 und ein Trichterelement 755 auf.

Das Befestigungs- und Trennelement 754 haltert den zylindrischen Hauptkörperabschnitt 753 und trennt zugleich die beiden Strömungsbereiche des Kessels 11 am Außenbereich des Gehäuses 75. Die beiden Bereiche sind in Fig. 29 mit den Begriffen "Brenner" und "Wärmetauscher" angegeben, und die gestrichelte Linie dazwischen soll die Trennung der beiden Bereiche schematisch darstellen. Alternativ können jeweils ein Befestigungselement und ein Trennelement gesondert zueinander vorgesehen sein. Ebenso alternativ kann auch kein Trennelement vorgesehen sein, beispielsweise wenn der Hauptkörperabschnitt 753 vollständig integriert in einer Trennwand des Kessels 11 vorgesehen ist. In jedem Falle ist der Hauptkörperabschnitt 753 derart in dem Kessel 11 eingerichtet, dass dieser zwar zwei Strömungsbereiche für Rauchgas und/oder Frischluft trennt, jedoch eine Verbindung in Bezug auf die Ascheaustragung schafft.

Der zylindrische Hauptkörperabschnitt 753 nimmt die Übergangsschnecke 73 auf. Dabei kann sich die Übergangsschnecke 73 in dem Hauptkörperabschnitt 753 frei drehen. Entsprechend ist der Innendurchmesser des Hauptkörperabschnitts 753 derart eingerichtet, dass dieser dem (maximalen) Außendurchmesser der Übergangsschnecke 73 zuzüglich eines Abstandsmaßes entspricht. Das Abstandmaß ist derart eingerichtet, dass dieses eine freie Drehung der Übergangsschnecke 73 ermöglicht, jedoch zugleich ein übermäßiger Freiraum vermieden wird.

Weiter ist auf der Schneckenachse 711 eine Zentrierungsscheibe 712 vorgesehen, die die Achse 711 in dem Hauptkörperabschnitt 753 zentriert und optional auch lagert. Zudem kann die Zentrierungsscheibe 712 einen Abschluss für das Innenvolumen des Hauptkörperabschnitts 753 darstellen.

Das Trichterelement 755 ist derart vorgesehen, dass dieses die oben vorgesehene Öffnung 751 umfasst. Das Trichterelement 755 verjüngt seine horizontale Querschnittsfläche nach unten in Richtung der Öffnung 751. Das Trichterelement 755 ist in anderen Worten sich nach oben öffnend um die Öffnung 751 (herum) vorgesehen.

Die Übergangsschnecke 73 weist weiter zwei Unterabschnitte auf, die jeweils eine entgegengesetzte Steigungsrichtung bzw. Gängigkeit aufweisen. In anderen Worten weist die Übergangsschnecke 73 zwei Unterabschnitte 731, 732 auf, von denen einer eine nach links steigende Schnecke und der andere eine nach rechts steigende Schnecke aufweist.

Im Detail kann die Steigung des Wärmetauscherabschnitts 713 der Ascheaustragungsschnecke 71 beim Übergang auf die Übergangsschnecke 73 im rechten Unterabschnitt 732 unverändert fortgesetzt werden. Vorliegend ist im Unterabschnitt 732 eine nach rechts steigende Schnecke vorgesehen. Umgekehrt dazu ist im linken Unterabschnitt 731 eine nach links steigende Schnecke vorgesehen.

Die Übergangsschnecke 73 weist allgemeiner formuliert zwei Unterabschnitte mit Schnecken 731, 732 mit einander entgegengesetzter Gängigkeit auf. Damit weist die Übergangsschnecke 73 einen integrierten Gegenlauf 731 auf.

Die vorstehend dargelegte Konstruktion bewirkt das Folgende:
Es werden Verbrennungsrückstände aus dem Raum unter dem Wärmetauscher 3 bzw. aus der Wendekammer 35 und eventuell aus der optionalen Filtereinrichtung 4 durch die Drehung der Schnecke des Wärmetauscherabschnitts 713 in den durch das Gehäuse 73 gebildeten Hauptkörperabschnitt 753 befördert. Dies ist in Fig. 29 durch den Pfeil AS1 schematisch dargestellt.

Diese Verbrennungsrückstände AS1 und auch in den Trichter fallende Verbrennungsrückstände aus der Brennkammer 24, was in Fig. 29 mit dem Pfeils AS2 schematisch dargestellt ist, gelangen so in etwa zur Mitte der Übergangsschnecke 73 und darüber hinaus in den linken Unterabschnitt 731 der Übergangsschnecke 73 (vgl. Pfeil AS3). Aufgrund der entgegengesetzten Gängigkeit der Schnecke des Unterabschnitts 731 werden jedoch die Verbrennungsrückstände wieder in die entgegengesetzte Richtung getrieben, was durch den Pfeil AS4 schematisch dargestellt ist.

Damit werden die Verbrennungsrückstände zwischen den beiden Unterabschnitten 731, 732 der Übergangsschnecke 73 zusammengeführt. So sind die Unterabschnitte mit den Schnecken 731, 732 derart eingerichtet, dass Verbrennungsrückstände bei Drehung der Achse 711 entlang dieser aufeinander zugetrieben werden.

In anderen Worten sorgt der Gegenlauf 731 der Übergangsschnecke 73 für eine Zusammenführung (und Kompaktierung) der Verbrennungsrückstände im Inneren des Übergangsschneckengehäuses 75.

Aufgrund des begrenzten Volumens verdichten sich die Verbrennungsrückstände unterhalb der Öffnung 751 und bilden einen in seinen Einzelbestandteilen (beispielsweise mit dessen Aschepartikeln) beweglichen aber dennoch dichten Pfropfen. Mit der Zeit und zunehmendem Volumen werden die Verbrennungsrückstände in Richtung der Öffnung 751 zwangsweise nach oben hinausgedrückt bzw. hinausgetrieben. Insofern entsteht im Übergangsschneckengehäuse 75 ein Pfropfen aus beweglichen Feststoffen, der gegenüber Gas abdichtet. Dieser Pfropfen erlaubt jedoch einen Materialabtransport.

Das Begrenzungsblech 752 lenkt diese Verbrennungsrückstände seitlich ab, wie dies in Fig. 29 schematisch durch den Pfeil AS5 angegeben ist. Diese aus dem Gehäuse 75 hinausgedrückten Verbrennungsrückstände fallen in Folge linksseitig auf oder in den Brennerabschnitt der Wärmeaustragungsschnecke 71 und werden damit endgültig aus dem Kessel 11 hinausbefördert (vgl. Pfeil AS).

Im Ergebnis sind die Strömungsbereiche "Brenner" und "Wärmetauscher" betreffend Rauchgas- oder Frischluftströmungen voneinander getrennt, während trotzdem betreffend der Verbrennungsrückstände eine Verbindung vorgesehen ist und ein Austrag der Verbrennungsrückstände erfolgen kann.

Im Stand der Technik üblich ist entweder, dass mit nachteilhaftem Mehraufwand zwei gesonderte Ascheaustragungsschnecken für die einzelnen Strömungsbereiche im Kessel vorgesehen sind, oder dass die Achse der Ascheaustragungsschnecke über ein Übergangsstück und mittels eines Gleitlagers durch eine abdichtende Zwischenwand des Kessels geführt wird. Das Gleitlager muss dabei derart ausgeführt sein, dass dieses zumindest weitgehend dichtet. Das Gleitlager ist nachteilhaft verschleißanfällig, da dieses Fremdkörpern im Brennstoff, Schlacke, Glut, Wasser und hohen Temperaturen ausgesetzt ist. Ein solches Gleitlager verursacht somit erhebliche Kosten bei der Herstellung, bei der Integration in den Kessel und auch bei der Wartung.

Der vorstehend beschriebene Aufbau vermeidet ein solches Gleitlager vollständig, und ist zudem einfach (mithin kostengünstig) und effizient.

Zudem wird die Rauchgasbehandlung verbessert, da fehlerhaft Luftströme bei der Rauchgasrezirkulation vermieden werden, da eine gute Dichtung in Bezug auf das Rauchgas gegenüber einer potentiellen Rückströmung in die Brennkammer 24 vorgesehen wird.

### (Verfahren zur Inbetriebnahme)

Wie in Fig. 18 dargestellt, ist an der Außenseite des Kessels 11, vorliegend der Vorderseite, die mit dem Pfeil V angegeben ist, in der Außenverkleidung 16 des Kessels 11 eine Steuereinrichtung 17 mit einem Speicher 171 (nicht dargestellt) und mit einem Display 172 vorgesehen.

Die Steuereinrichtung 17 kann beispielsweise einen Prozessor in EDGE2 Technologie (eine CPU), ein RAM, ein ROM, einen Flash-Speicher (beispielsweise 512 MB), sowie eine Mehrzahl von Schnittstellen (beispielsweise USB, CAN-Bus, RS-232, MODBUS, Ethernet, WLAN, dies kann insbesondere IP basiert sein) aufweisen, und als ein übliches Embedded-System als programmierbare Computereinheit vorgesehen sein. Die beschreibbaren und nicht-flüchtigen Speichermöglichkeiten der Steuereinrichtung 17 werden vorliegend kurz als Speicher 171 bezeichnet.

Die Steuereinrichtung 17 weist weiter ein Display 172 (einen Bildschirm 172) auf, welches beispielsweise als Flüssigkristall-Anzeige (beispielsweise ein TFT-, ein LCD- oder ein monochromes Display) mit einer Bildschirmoberfläche ausgestaltet ist. Das Display 172 kann beispielsweise eine Diagonale von 7 Zoll oder 11 Zoll aufweisen, und ist fähig, eine grafische Anzeige mit einer vorzugsweise vordefinierten Auflösung (beispielsweise 800x480 Pixel) wiederzugeben.

Das Display 172 wiederum kann eine Bedieneinheit aufweisen, die beispielsweise eine Touch-Eingabe ermöglicht. Eine solche Bedieneinheit kann ein herkömmlicher kapazitiver oder resistiver Touch-Sensor sein, dessen Signale als Eingabe für die Steuereinrichtung 17 verwendet werden.

Mittels der Bedieneinheit kann die Steuereinrichtung 17 von einem Nutzer/Bediener bedient werden, und es können an dem Display beispielsweise durch Drücken mit dem Finger oder Auflegen des Fingers Eingaben getätigt werden. Dies ist eine Benutzerantwort. Bei Abfragen, ob etwas vorhanden ist, kann entsprechend ein Fenster mit der Frage angezeigt werden, welches durch Druck auf einen "Ja" oder einen "Nein" - Button beantwortet werden kann.

Insbesondere bei der Inbetriebnahme einer neuen oder umgebauten Biomasse-Heizanlage ist ein erhöhter Bedienaufwand erforderlich, da recht viele Einzelparameter der Biomasse-Heizanlage 1 eingestellt werden müssen. Herkömmliche Inbetriebnahmen sind dabei auch unübersichtlich und fehlerbehaftet. Dies kann auch seine Ursache darin haben, dass die Interaktion der einzelnen Anlagenkomponenten die Komplexität der Inbetriebnahme nochmals erhöht. Hinzu tritt vorliegend der besondere Umstand, dass eine Biomasse-Heizanlage 1 für eine hybride Brennstoffversorgung vorgesehen ist, d. h., die Anlage 1 muss deutlich flexibler funktionieren als übliche Heizanlagen. Dies spiegelt sich auch in der erforderlichen Parametrierung des Kessels 11 wieder.

Das nachstehend beschriebene Verfahren kann als (Computer-) Programm beispielsweise auf der vorstehend beschriebenen Hardware ausgeführt werden, ist jedoch nicht darauf beschränkt. Beispielsweise kann als Bedieneinheit auch ein herkömmliches Tastenfeld anstelle des Touch-Screens verwendet werden.

Ebenso kann das vorliegende Verfahren als Programm auf einem computerlesbaren Speichermedium vorgesehen sein.

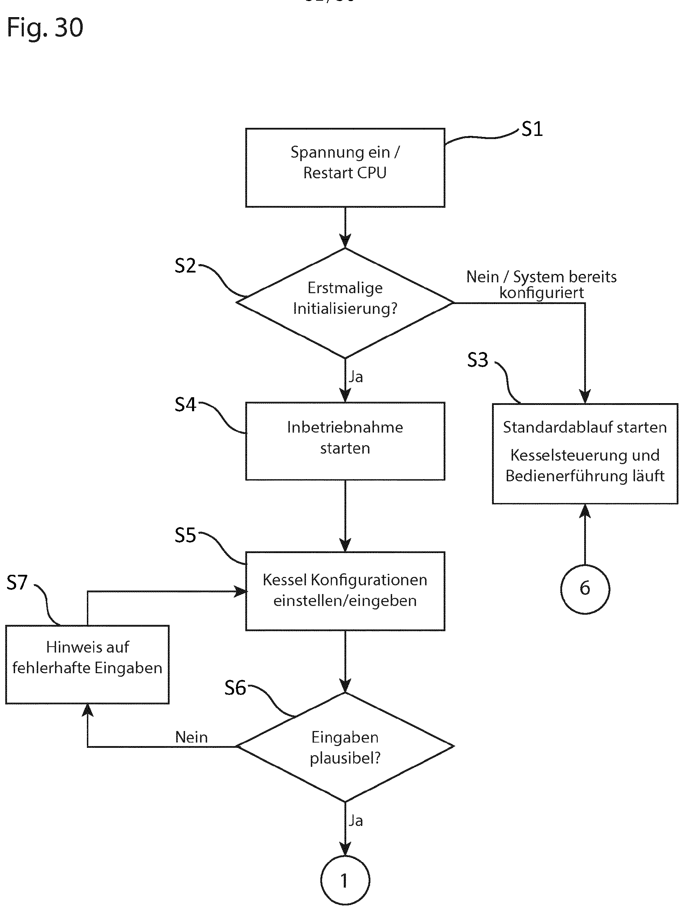

Fig. 30 zeigt das Verfahren zur Inbetriebnahme der Biomasse-Heizanlage 1 gemäß einer der Ausführungsformen der Fig. 1 bis 29 zur Verfeuerung von Brennstoff in Form von Pellets und/oder Hackgut.

Bei Schritt S1 wird die Steuereinrichtung 17 angeschaltet oder ein Neustart der CPU wird beispielsweise durch einen Reset bewirkt.

In der Folge wird bei Schritt S2 abgefragt bzw. ermittelt, ob die Biomasse-Heizanlage erstmalig initialisiert wird.

Diese Abfrage kann beispielsweise derart durchgeführt werden, dass eine Merkervariable aus dem nicht-flüchtigen Speicher der Steuereinrichtung 17 abgefragt wird, die angibt, ob bisher eine Initialisierung stattgefunden hat oder nicht. Eine solche Merkervariable kann beispielsweise bei Abschluss der Initialisierung gesetzt und eingespeichert werden (vgl. Schritt S38). Beispielsweise kann die Merkervariable ein Flag sein, das im Zustand "0" angibt, dass keine Initialisierung stattgefunden hat, und die im Zustand "1" angibt, dass eine Initialisierung stattgefunden hat. Dabei ist das Verfahren derart eingerichtet, dass die Merkervariable nur bei vollständiger Initialisierung auf "1" gesetzt werden kann, und durch den Benutzer vorzugsweise nicht mehr auf "0" zurückgesetzt werden kann. Alternativ kann die Abfrage derart durchgeführt werden, dass überprüft wird, ob bestimmte für die Speicherung der Systemkonfiguration immer erforderliche Parameter eingespeichert sind oder nicht.

Eine Initialisierung kann vorliegend als abgeschlossene Parametrierung der Steuereinrichtung 17 der Biomasse-Heizanlage 1 verstanden werden.

Damit ist vorliegend mit dem Verfahren ausschließlich eine vollständige "Urinitialisierung" der Biomasse-Heizanlage möglich, was vorteilhaft fehlerhafte Doppel- oder Teilinitialisierungen verhindert. Ebenso wird ein unautorisierter Zugriff auf die Initialisierungsroutine zumindest weitgehend verhindert, da eine Erstinitialisierung üblicherweise vom geschulten Techniker vorgenommen wird.

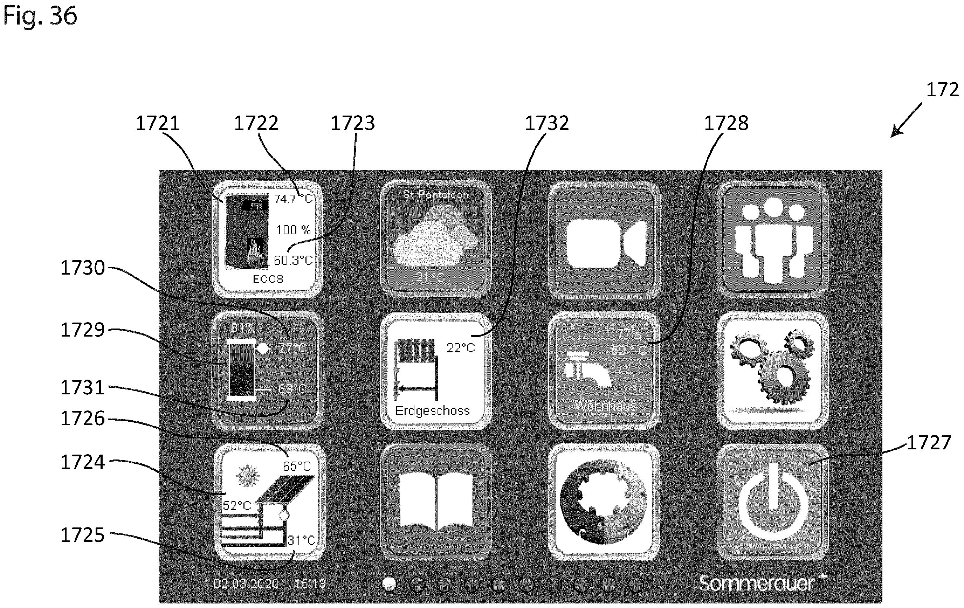

Ist das System bereits initialisiert, d. h., hat eine Konfiguration der Systemparameter stattgefunden (beispielsweise ist die Merkervariable noch auf 1" gesetzt), fährt das Verfahren mit Schritt S3 fort und geht in den "normalen" Betrieb über. Dabei erfolgt eine Kesselsteuerung bzw. - regelung und die übliche Bedienerführung über ein Userinterface kann erfolgen (vgl. Fig. 36). Ein Eintritt in die Verfahrensschritte zur Initialisierung der Biomasse-Heizanlage 1 und damit zum Einstellen diverser Parameter wird somit vermieden. Ein "Verstellen" der Anlagenparameter wird damit ebenso unterbunden.

Ist das System noch nicht initialisiert worden (beispielsweise ist die Merkervariable noch auf 0" gesetzt), wird die Inbetriebnahme der Biomasse-Heizanlage 1 gestartet (Schritt S4). In diesem Falle kann beispielsweise keine Anlagensteuerung bzw. -regelung erfolgen und es wird beispielsweise ein Startbildschirm angezeigt, der den Start der Inbetriebnahme der Biomasse-Heizanlage anzeigt. Dieser Schritt S4 ist optional und kann auch entfallen.

Bei Schritt S5 erfolgt eine Anzeige auf dem Display 172 derart, dass der Nutzer aufgefordert wird, diverse Konfigurationsinformationen für den Kessel 11, d. h. die Parametrierung des Kessels 11, einzugeben. Diese Konfigurationsinformationen werden auch als Wärmeerzeugungsparameter bezeichnet, mit denen grundsätzlich die Parameter des Kessels 11 eingestellt werden.

Bei den kesselspezifischen Parametern werden damit nur (ausschließlich) diejenigen Parameter eingestellt, die für die "Wärmeerzeugung" werkseitig je nach Kesseltyp benötigt werden.

Das Einstellen der Wärmeerzeugungsparameter, wie der anderen später beschriebenen Parameter auch, kann dabei beispielsweise derart erfolgen, dass diese Parameter manuell als numerische Werte eingetippt werden. Alternativ kann das Einstellen der Wärmeerzeugungsparameter derart erfolgen, dass dem Nutzer eine Auswahl aus einer vorgespeicherten (vordefinierten) Liste ermöglich wird, in der die erforderlichen Einzelwerte schon (werksseitig) vordefiniert sind. Beispielsweise kann der Nutzer einen bestimmten Gebläsetyp mittels dessen Namen zur Konfiguration des Gebläses 15 auswählen, und es werden in Folge die entsprechenden dem Gebläsetyp zugeordneten Werte als passende Wärmeerzeugungsparameter automatisch übernommen.

Die Wärmeerzeugungsparameter können insbesondere Arbeitsbereiche für die jeweiligen Einrichtungen der Biomasse-Heizanlage 1 angeben. Dabei kann zwischen sechs Unterkategorien an Wärmeerzeugungsparametern unterschieden werden, von denen die ersten zwei Kernparameter sind:

### 1) Zumindest einen Kesseltypparameter, der beispielhaft zumindest eines des Folgenden umfasst:

Zumindest ein Arbeitsbereich für das Gebläse 15, der ein Saugzugventilator sein kann; zumindest ein Arbeitsbereich des Primärfrischluftzufuhrventils; zumindest ein Arbeitsbereich des Sekundärfrischluftzufuhrventils, falls vorhanden; zumindest ein Arbeitsbereich des Primärrauchgasrückfuhrventils; zumindest ein Arbeitsbereich des Sekundärrauchgasrückfuhrventils, falls vorhanden; sowie Parameter der Leistungsregler und der Verbrennungsluftregelung, falls erforderlich; Kesselleistungswert oder - bereich.

Diese Parameter ermöglichen eine zielgerichtete Regelung der Verbrennung in der Biomasse-Heizanlage 1.

### 2) Zumindest einen Material- (bzw. Brennstoff-) parameter, der beispielhaft zumindest eines des Folgenden umfasst:

Zumindest eine Fördermenge zum Einschub des Brennstoffs auf den Drehrost 24; eine Art des Brennstoffs; der Brennwert des Brennstoffs.

Die Einstellung des Materialtyps hat grundsätzlichen Einfluss auf die zeitliche Ansteuerung der Schneckenantriebe: Bei Hackgut muss grundsätzlich mehr gefördert werden als bei Pellets. Werden diese Parameter nicht richtig eingestellt, kommt es zu Überfüllung und somit zu Fehlfunktionen des Kessels.

Der Materialparameter kann vom Nutzer beispielsweise aus einer Liste der üblichen Normbezeichnungen seines Brennstoffs ausgewählt werden. Die entsprechende Fördermenge ist als Wert oder Parameterset in der Liste derart vordefiniert, dass eine "ideale" Befüllung des Kessels 11 erfolgen kann. Der Wert oder das Parameterset ist dabei werksseitig durch Berechnungen und Experimente bestimmt worden.

### 3) Drehrostparameter, die zumindest eines des Folgenden umfassen:

Zumindest eine Ansteuerungsart der Motoren 231 der Drehrostmechanik; zumindest einen Ansteuerbereich für die Motoren der Drehrostmechanik; eine Einschubrichtung des Brennstoffs in die Brennkammer 24.

Die Drehrostparameter ermöglichen damit eine zielgerichtete Ansteuerung des Drehrosts 25, je nach Bauart und spezifischen Bedingungen des Antriebs 231,

### 4) Materialschnecken

Zumindest ein Konfigurationsparameter betreffend zusätzlicher Schneckenantriebe der Biomasse-Heizanlage 1.

Standardmäßig werden im System nur zwei Materialschnecken verwaltet. Werden weitere Materialschnecken aufgrund der örtlichen Gegebenheiten beim Nutzer benötigt, werden diese hier aktiviert und konfiguriert.

### 5) Filtereinrichtung

Sollte eine Filtereinrichtung 4 vorhanden sein, so müssen die Schnittstelle zu deren Elektronik sowie die Auswertung derer Signale aktiviert werden. Eine solche Schnittstelle kann beispielsweise eine MODBUS-RTU Schnittstelle sein.

### 6) Abgaskondensator

Sollte ein Abgaskondensator vorhanden sein, so müssen hier diverse Alarme und Steuerungsfunktionen aktiviert werden.

Sind die Eingaben des Nutzers erfolgt, so erfolgt bei Schritt S6 eine Plausibilitätsüberprüfung der eingegebenen Werte.

Die Plausibilitätsüberprüfung ist positiv, falls die eingegebenen Werte plausibel sind, und negativ, falls die Plausibilitätsüberprüfung erkennt, dass die Einstellungen nicht plausibel sind. Die Plausibilitätsüberprüfung kann softwaretechnisch nach technisch vorgespeicherten Grundlagen/Rahmenbedingungen und nach den Gesetzen der Logik erfolgen.

Bei der Plausibilitätsüberprüfung wird beispielsweise mittels voreingestellter Wertebereiche (Minimum-Maximum) überprüft, ob die eingegebenen Werte innerhalb zulässiger Grenzen liegen. Ebenso kann überprüft werden, ob beispielsweise ein Parameter unerlaubt doppelt definiert wird, wenn beispielsweise Eingaben wiederholt getätigt werden. Beispielsweise darf der Leistungsbereich des Kessels 11 nicht doppelt definiert sein, sondern muss dieser eindeutig sein. Ebenso wird überprüft, ob wesentliche Parameter überhaupt definiert wurden, wie zum Beispiel der Brennstoff. Ist damit beispielsweise der Brennstoff undefiniert (d. h. "vergessen" worden), so weist die Plausibilitätsüberprüfung daraufhin. Zudem kann verhindert werden, dass mehr Komponenten konfiguriert werden, als von der Steuereinrichtung 17 verwaltet oder angesteuert werden können. Das gleiche gilt analog für die Plausibilitätsüberprüfungen der Schritte S10, S17, S24 und S31.

Bei einem weiteren Beispiel der Plausibilitätsprüfung wird überprüft, ob der eingestellte Brennstoff mit dem gewählten Kesseltyp kompatibel ist. Dies kann beispielsweise mittels vordefinierter Vergleichslisten erfolgen, die im Speicher 171 hinterlegt sein können.

Ist die Plausibilitätsüberprüfung negativ, so wird der Nutzer bei Schritt S7 darauf hingewiesen und das Verfahren kehrt zu Schritt S5 zurück, damit der Nutzer korrekte Eingaben tätigen kann. Insofern ist eine nicht plausible Eingabe durch den Nutzer unmöglich.

Ist die Plausibilitätsüberprüfung positiv, so kann im einfachsten Fall das Verfahren bei der Ziffer 1 (siehe unten in Fig. 30) beendet werden.

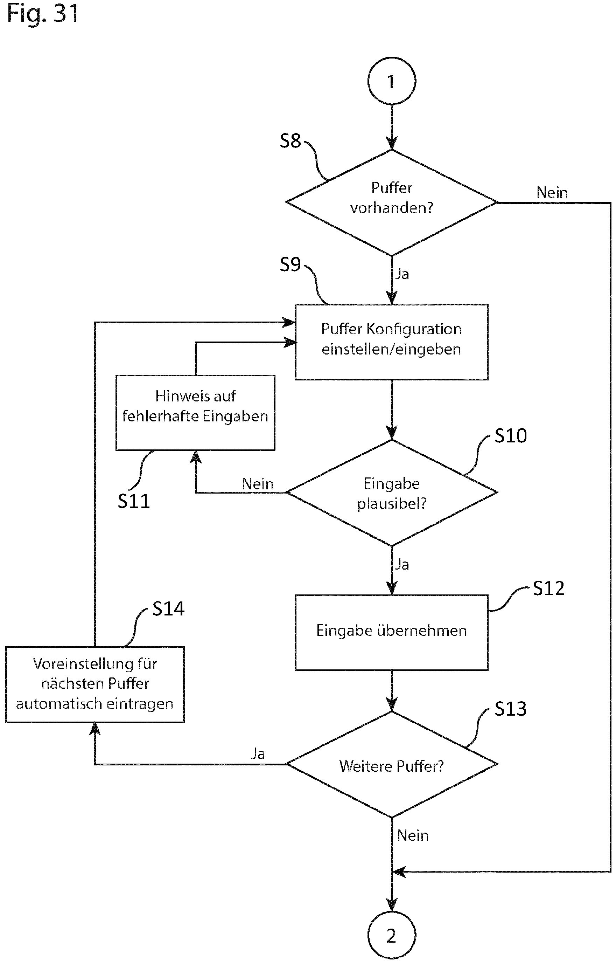

In einem weiteren Fall kann das Verfahren jedoch bei der Ziffer 1, oben in Fig. 31, weitergeführt werden.

Fig. 31 zeigt einen optionalen Teil des Verfahrens zur Inbetriebnahme der Biomasse-Heizanlage 1 in Fortführung des Verfahrens der Fig. 30.

Bei Schritt S8 der Fig. 31 wird abgefragt, ob Puffer, wie der Fachmann diese üblicherweise von Heizungen betreffend dessen Hydraulik kennt, vorhanden sind. Eine solche Abfrage kann beispielsweise mittels einer entsprechenden Anzeige auf dem Display und einer entsprechenden Eingabe durch den Nutzer erfolgen.

Ist das Ergebnis des Schrittes S8 negativ, so wird die Konfiguration der Puffer insgesamt übersprungen.

Ist das Ergebnis des Schrittes S8 positiv, so fährt das Verfahren mit dem Schritt S9 fort. Bei dem Schritt S9 kann der Nutzer aus einer vorgespeicherten Liste von Hardwarekomponenten (in diesem Schritt vordefinierten Puffern) auswählen, wobei zu jedem Eintrag in der Liste betreffend der Puffer ein entsprechender Parametersatz hinterlegt wird, der zur Regelung oder Steuerung der Heizung und insbesondere der Biomasse-Heizanlage 1 verwendet werden kann. Der entsprechende Parametersatz kann zudem vom Nutzer in den einzelnen Werten verändert werden, falls erforderlich.

Das Einstellen des Pufferparameters umfasst somit die Auswahl aus einer vorgespeicherten Liste (einem Array, einer Tabelle, einem Softwareobjekt oder ähnliches) durch den Nutzer, die die jeweilige (Puffer-Hardwarekomponente) und deren zugehörigen zumindest einen Parameter umfasst.

Danach wird bei Schritt S10 wiederum eine Plausibilitätsüberprüfung vorgenommen. Je nach ausgewählter Hardwarekomponente des Puffers wird die maximal verfügbare Anzahl der möglichen Auswahloptionen begrenzt und somit kann eine Fehleingabe verhindert werden.

Ist die Plausibilitätsüberprüfung negativ, so wird der Nutzer bei Schritt S11 auf den Fehler hingewiesen und kann eine Konfiguration erneut vornehmen.

Ist die Plausibilitätsüberprüfung positiv, so wird die Eingabe bei Schritt S12 übernommen, und es wird in Folge bei Schritt S13 abgefragt, ob eventuell weitere Puffer vorhanden sind. Ist dies der Fall, fährt das Verfahren mit Schritt S14 fort. Dabei werden die Voreinstellungen des aktuell eingestellten Puffers für den nächsten Puffer automatisch übertragen, was Fehler vermeiden hilft, da oft baugleiche Puffer verwendet werden. Nach dem Schritt S14 kehrt das Verfahren zu Schritt S9 zurück, und es kann ein weiterer Puffer konfiguriert werden.

Sind keine weiteren Puffer vorhanden, und der Nutzer gibt dies an, so kann in einem Fall das Verfahren bei der Ziffer 2 (siehe unten in Fig. 31) beendet werden.

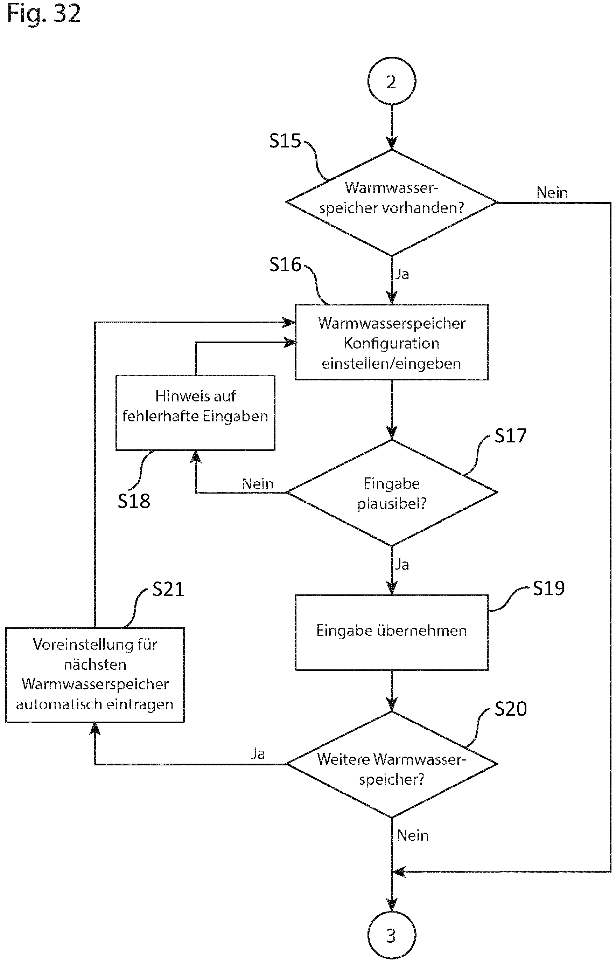

In einem weiteren Fall kann das Verfahren jedoch bei der Ziffer 2, oben in Fig. 32, weitergeführt werden.

Fig. 32 zeigt einen optionalen Teil des Verfahrens zur Inbetriebnahme der Biomasse-Heizanlage in Fortführung des Verfahrens der Fig. 30 oder der Fig. 31.

Der Ablauf des (optionalen) Verfahrensteils der Fig. 32 ist analog demjenigen der Fig. 31, worauf verwiesen wird. Schritt S8 entspricht Schritt S15, d. h. wird analog ausgeführt. Schritt S10 entspricht Schritt S17. Schritt S11 entspricht Schritt S18. Schritt S12 entspricht Schritt S19. Schritt S13 entspricht Schritt S20. Schritt S14 entspricht Schritt S21. Nachstehend werden deshalb nur die Unterschiede zur Fig. 31 erläutert.

Es wird in dem Verfahrensteil der Fig. 32 nunmehr bei Schritt S16 der Warmwasserspeicher der Hydraulik konfiguriert, falls dieser vorhanden ist. Bei dem Schritt S16 kann der Nutzer aus einer vorgespeicherten Liste von Hardwarekomponenten (in diesem Schritt vordefinierten Warmwasserspeichern) auswählen, wobei zu jedem Eintrag in der Liste betreffend der Warmwasserspeicher ein entsprechender Parametersatz hinterlegt wird, der zur Regelung oder Steuerung der Heizung und insbesondere der Biomasse-Heizanlage 1 verwendet werden kann. Der entsprechende Parametersatz kann zudem vom Nutzer in den einzelnen Werten verändert werden, falls erforderlich.

Sind keine weiteren Warmwasserspeicher vorhanden, und der Nutzer gibt dies an, so kann in einem Fall das Verfahren bei der Ziffer 3 (siehe unten in Fig. 32) beendet werden.

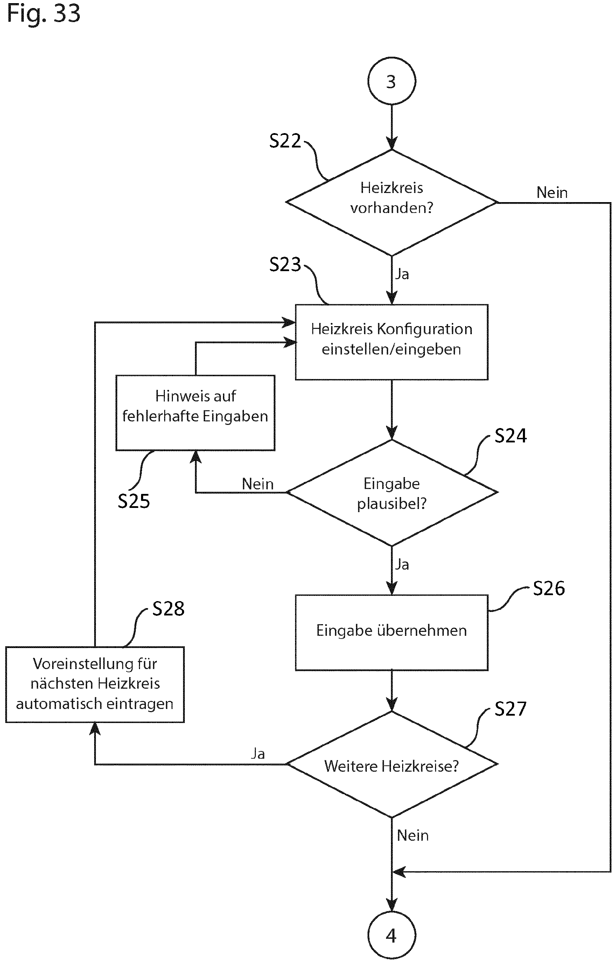

In einem weiteren Fall kann das Verfahren jedoch bei der Ziffer 3, oben in Fig. 33, weitergeführt werden.

Fig. 33 zeigt einen optionalen Teil des Verfahrens zur Inbetriebnahme der Biomasse-Heizanlage in Fortführung des Verfahrens der Fig. 30, der Fig. 31 oder der Fig. 32.

Der Ablauf des (optionalen) Verfahrensteils der Fig. 33 ist analog demjenigen der Fig. 31, worauf verwiesen wird. Schritt S8 entspricht Schritt S22. Schritt S10 entspricht Schritt S24. Schritt S11 entspricht Schritt S25. Schritt S12 entspricht Schritt S26. Schritt S13 entspricht Schritt S27. Schritt S14 entspricht Schritt S28. Nachstehend werden deshalb nur die Unterschiede zur Fig. 31 erläutert.

Es wird in dem Verfahrensteil der Fig. 33 nunmehr bei Schritt S23 der zumindest eine Heizkreis der Hydraulik konfiguriert, falls dieser vorhanden ist. Bei dem Schritt S16 kann der Nutzer aus einer vorgespeicherten Liste von Hardwarekomponenten (in diesem Schritt vordefinierten Heizkreisen) auswählen, wobei zu jedem Eintrag in der Liste betreffend der Warmwasserspeicher ein entsprechender Parametersatz hinterlegt wird, der zur Regelung oder Steuerung der Heizung und insbesondere der Biomasse-Heizanlage 1 verwendet werden kann. Der entsprechende Parametersatz kann zudem vom Nutzer in den einzelnen Werten verändert werden, falls erforderlich.

Sind keine weiteren Heizkreise vorhanden, und der Nutzer gibt dies an, so kann in einem Fall das Verfahren bei der Ziffer 4 (siehe unten in Fig. 33) beendet werden.

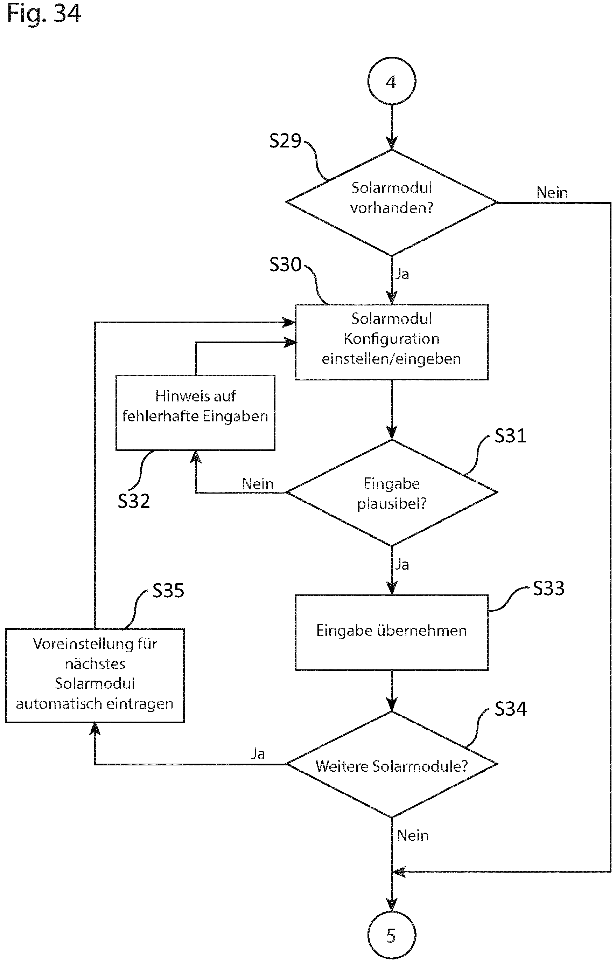

In einem weiteren Fall kann das Verfahren jedoch bei der Ziffer 4, oben in Fig. 34, weitergeführt werden.

Fig. 34 zeigt einen optionalen Teil des Verfahrens zur Inbetriebnahme der Biomasse-Heizanlage in Fortführung des Verfahrens der Fig. 30, der Fig. 31, der Fig. 32 oder der Fig. 33.

Der Ablauf des (optionalen) Verfahrensteils der Fig. 34 ist analog demjenigen der Fig. 31, worauf verwiesen wird. Schritt S8 entspricht Schritt S29. Schritt S10 entspricht Schritt S31. Schritt S11 entspricht Schritt S32. Schritt S12 entspricht Schritt S33. Schritt S13 entspricht Schritt S34. Schritt S14 entspricht Schritt S35. Nachstehend werden deshalb nur die Unterschiede zur Fig. 31 erläutert.

Es wird in dem Verfahrensteil der Fig. 34 nunmehr bei Schritt S23 das zumindest eine Solarmodul der Hydraulik konfiguriert, falls dieses vorhanden ist. Bei dem Schritt S16 kann der Nutzer aus einer vorgespeicherten Liste von Hardwarekomponenten (in diesem Schritt vordefinierten Solarmodulen) auswählen, wobei zu jedem Eintrag in der Liste betreffend der Warmwasserspeicher ein entsprechender Parametersatz hinterlegt wird, der zur Regelung oder Steuerung der Heizung und insbesondere der Biomasse-Heizanlage 1 verwendet werden kann. Der entsprechende Parametersatz kann zudem vom Nutzer in den einzelnen Werten verändert werden, falls erforderlich.

Sind keine weiteren Solarmodule vorhanden, und der Nutzer gibt dies an, so kann in einem Fall das Verfahren bei der Ziffer 5 (siehe unten in Fig. 34) beendet werden.

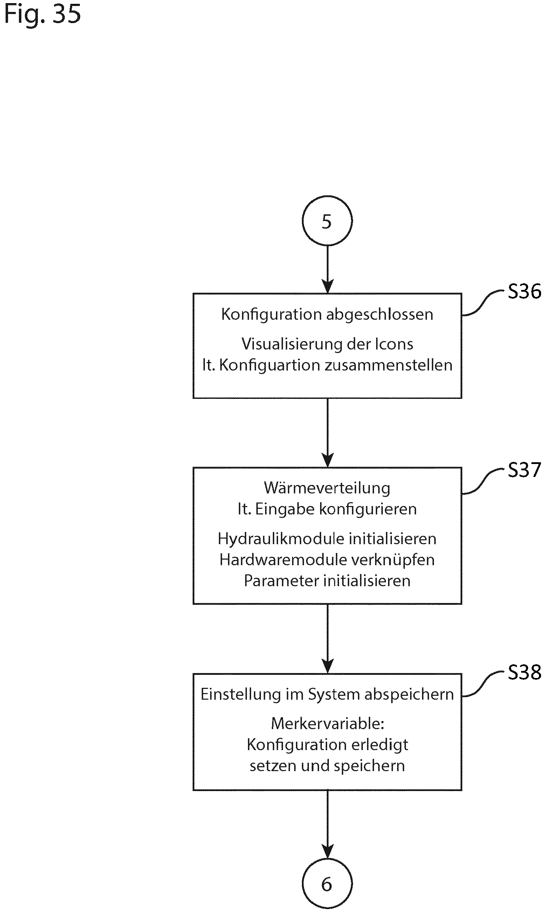

In einem weiteren Fall kann das Verfahren jedoch bei der Ziffer 5, oben in Fig. 35, weitergeführt werden. Zudem ist es möglich, dass jede einzelne der Ziffern 1 bis 5 der Figuren 30 bis 34 direkt zu der Ziffer 5 der Fig. 35 führt.

Fig. 35 zeigt einen optionalen Teil des Verfahrens zur Inbetriebnahme der Biomasse-Heizanlage in Fortführung des Verfahrens der Fig. 30, der Fig. 31, der Fig. 32, der Fig. 34 oder der Fig. 35.

Bei Schritt S36 der Fig. 35 wird die Konfiguration abgeschlossen. Dabei können auch die entsprechenden Icons der graphischen Anzeige auf dem Display 172 durch die Software erstellt bzw. generiert werden.

Beispiele hierfür sind in der Fig. 36 dargestellt.

Fig. 36 zeigt eine beispielhafte Darstellung der Anzeige eines Displays einer Steuereinrichtung der Biomasse-Heizanlage der Fig. 18.

Betreffend des Kessels 11 wird im Verfahren in Schritt S36 ein Kesselicon 1721, das in Fig. 36 beispielhaft dargestellt ist, erzeugt, der den Kessel und entsprechend erfasste Parameter des Kessels 11 darstellt. Ein Icon ist vorliegend eine graphisch definierte variable oder invariable Abbildung auf dem Display, die über einen Tastendruck oder einen Fingerdruck betätigbar ist, und damit (ähnlich wie bei einem herkömmlichen Smartphone) den Aufruf einer Programmroutine oder eine weitere Darstellung einer Menü- oder Bedienungsebene ermöglicht.

In Schritt S36 wird zur Erzeugung der entsprechenden Icons abgefragt, welche Parameter und Konfigurationen vom Nutzer in den vorausgegangenen Schritten S1 bis S15 aktiviert worden sind. Hat der Nutzer beispielsweise in Schritt S8 angegeben, dass ein Puffer vorhanden ist, so ist die Abfrage betreffend eines zugehörigen Puffericons positiv, und ein entsprechender Puffericon wird erzeugt. Dies gilt auch für eventuell weitere Puffer, die konfiguriert worden sind. Analoges gilt für den Warmwasserspeicher, den Heizkreis und die Solarmodule (vgl. die Schritte S15, S22 und S29, sowie S13, S20, S27 und S30). Softwaretechnisch können beispielsweise einzelne Flags für den Kessel, den oder die Puffer, den oder die Warmwasserspeicher, den Heizkreis oder die Heizkreise und das Solarmodul oder die Solarmodule, im flüchtigen oder nichtflüchtigen Speicher gesetzt werden, wenn diese als vorhanden angegeben werden. Bei Schritt S36 werden diese Flags dann der Reihe nach abgefragt, und die entsprechenden Icons können beispielsweise aus einer Formatvorlage heraus oder dynamisch generiert werden.

Die mit dem Kesselicon 1721 automatisch angezeigten erfassten Parameter können beispielsweise Temperaturparameter 1722, 1723 des Kessels 11 sein. Alternativ können andere Zustandsparameter des Kessels mit angezeigt werden. Damit hat der Nutzer mit einem Blick eine gute Übersicht über den Zustand des Kessels, hier der Temperatur des Vor- und des Nachlaufs des Kessels 11. Eine Prozentanzeige kann die leistungsbezogene Auslastung des Kessels 11 darstellen.

Als weiteres Beispiel ist in Fig. 36 ein Solarpanelicon 1724 mit dessen Einlauftemperatur 1725 und dessen Auslauftemperatur 1724 dargestellt. Dieser Icon 1724 kann automatisch durch das Verfahren erstellt werden, indem eine vordefinierte/vorgespeicherte Abbildung für das Display 172 mit den zugehörigen (ebenso vordefinierten erfassten und anzuzeigenden) Werten auf dem Display 172 als betätigbares Element angezeigt wird.

Als weiteres Beispiel ist in Fig. 36 ein Warmwasserspeichericon 1729 dargestellt, der ebenso Einlauf- und Auslauftemperatur 1731, 1730, sowie dessen Innentemperatur darstellt.

Weiter kann im Display ein An-/Aus Icon 1727 zum Aktivieren und Deaktivieren der Steuereinrichtung 17 vorgesehen sein.

Zudem kann im Display 172 auch zumindest ein Messwerticon 1728 mit erfassten Messwerten dargestellt werden.

Ebenso kann im Display ein Heizkreisicon 1732 dargestellt werden, das automatisch durch das vorliegende Verfahren aufgrund der Konfiguration des Heizkreises erstellt wurde.

Der Vorteil der automatischen Iconerzeugung ist, dass zum einen alle zur Bedienung erforderlichen Bedienmöglichkeiten automatisch erstellt werden, und zum anderen auch diejenigen Icons nicht erzeugt werden, die mangels passender Hardware überflüssig wären. Damit ist die Anzeige übersichtlicher, es wird Speicherplatz gespart und die Software ist schlanker.

Bezugnehmend auf Schritt S36 der Fig. 35 wird dort die Konfiguration der (Regelungs-) Parameter der Steuereinrichtung abgeschlossen.

Danach wird in Schritt S37 die Wärmeverteilung nach Eingabe konfiguriert und berechnet. Dabei werden die diversen Hardwarekomponenten initialisiert, beispielsweise die Hydraulikkomponenten. Ebenso können die Parameter initialisiert werden und es können die Hardwaremodule mit ihren gegenseitigen Abhängigkeiten steuerungstechnisch verknüpft werden.

Im folgenden Schritt S38 werden die Parameter, Einstellungen und weiteren Berechnungsergebnisse des bisherigen Verfahrens im nicht-flüchtigen Speicher der Steuereinrichtung 17 abgespeichert.

Als letztes im Verfahren wird die Merkervariable derart eingestellt, dass die Biomasse-Heizanlage 1 als initialisiert gekennzeichnet wird. Beispielsweise wird das Flag dauerhaft auf "1" gesetzt. Die Merkervariable wird ebenso im nicht-flüchtigen Speicher abgespeichert.

Als letztes im Verfahren wird die Merkervariable deshalb gesetzt, damit die Merkervariable unter besonderen Umständen nicht fehlerhaft gesetzt werden kann. Sollte die Merkervariable beispielsweise zu Beginn des Verfahrens gesetzt werden, wäre die Konfiguration bei einem Stromausfall mitten im Verfahren schon als abgeschlossen gekennzeichnet, aber tatsächlich noch nicht fertiggestellt, womit die Merkervariable mithin fehlerhaft gesetzt wäre.

Mit der Ziffer 6 kehrt das Verfahren zu der Ziffer 6 der Fig. 30 zurück und verlässt somit den Teil der Inbetriebnahme der Biomasse-Heizanlage 1.

Das vorstehend erläuterte Verfahren kann auch als ein Software-Inbetriebnahme-Assistent (Wizard) bezeichnet werden. Dieser erleichtert die Inbetriebnahme und Bedienung deutlich und gestaltet diese prozesssicherer. Es werden die Software und Hardware von z. B. Puffer, Boiler und Heizkreisen mittels der Abfrage mit Plausibilitätsprüfung durch den Wizard vollautomatisch miteinander "verheiratet" bzw. softwaretechnisch verknüpft. Insofern findet mittels des Assistenten eine fehlersichere Verknüpfung der vorhandenen Hardware der Biomasse-Heizanlage 1 mit der Software der Steuereinrichtung 17 statt. Praxistests haben ergeben, dass somit vorteilhaft eine um bis zu 60% schnellere Inbetriebnahme ermöglicht wird, und dass eine einfache und vor allem fehlerlose Konfiguration der Hardware erfolgen kann.

### (Weitere Ausführungsformen)

Die Erfindung lässt neben den erläuterten Ausführungsformen und Aspekten weitere Gestaltungsgrundsätze zu. So können einzelne Merkmale der verschiedenen Ausführungsformen und Aspekte auch beliebig miteinander kombiniert werden, solange dies für den Fachmann als ausführbar ersichtlich ist.

Vorliegend wird die Rezirkulationseinrichtung 5 mit einer Primärrezirkulation und einer Sekundärrezirkulation beschrieben. Die Rezirkulationseinrichtung 5 kann jedoch in deren Basiskonfiguration auch nur eine Primärrezirkulation und keine Sekundärrezirkulation aufweisen. Bei dieser Basiskonfiguration der Rezirkulationseinrichtung können entsprechend die für die Sekundärrezirkulation erforderlichen Komponenten vollständig entfallen, beispielsweise können der Rezirkulationseintrittskanalteiler 532, der Sekundärrezirkulationskanal 57 und eine zugehörige Sekundärmischeinheit 5b, welche später erläutert wird, sowie die Rezirkulationsdüsen 291 entfallen.

Es kann wiederum alternativ auch nur eine Primärrezirkulation derart vorgesehen sein, dass zwar die Sekundärmischeinheit 5b und die zugehörigen Kanäle entfallen, und das Gemisch der Primärrezirkulation jedoch nicht nur unter den Drehrost 25 zugeführt wird, sondern dieses auch (beispielsweise über einen weiteren Kanal) zu den in dieser Variante vorgesehenen Rezirkulationsdüsen 291 zugeführt wird. Diese Variante ist mechanisch einfacher und damit kostengünstiger und weist jedoch trotzdem die Rezirkulationsdüsen 291 zur Drallbildung der Strömung in der Brennkammer 24 auf.

Am Eingang der Rauchgasrezirkulationseinrichtung 5 können ein Luftmengensensor, eine Unterdruckdose, ein Temperatursensor, ein Abgassensor und/oder ein Lambda-Sensor vorgesehen sein.

Weiter können anstatt von nur drei Drehrostelementen 252, 253 und 254 auch zwei, vier oder mehr Drehrostelemente vorgesehen sein. Beispielsweise fünf Drehrostelemente könnten mit der gleichen Symmetrie und Funktionalität angeordnet sein, wie bei den vorgestellten drei Drehrostelementen. Zudem können die Drehrostelemente auch unterschiedlich zueinander geformt oder ausgebildet sein. Mehr Drehrostelemente haben den Vorteil, dass die Brecherfunktion verstärkt wird.

Zu den angegebenen Maßen ist anzumerken, dass auch abweichend von diesen andere Maße bzw. Maßkombinationen vorgesehen werden können.

Anstelle der konvexen Seiten der Drehrostelemente 252 und 254 können auch konkave Seiten dieser vorgesehen sein, wobei die Seiten des Drehrostelements 253 in Folge komplementär konvex geformt sein können. Dies ist funktional annähernd gleichwertig.

Als Brennstoffe der Biomasse-Heizanlage können auch andere Brennstoffe als Hackgut oder Pellets verwendet werden.

Die vorliegend offenbarte Biomasse-Heizanlage kann auch ausschließlich mit einer Art eines Brennstoffs befeuert werden, beispielsweise nur mit Pellets.

Die Brennkammersteine 29 können auch ohne die Rezirkulationsdüsen 291 vorgesehen sein. Dies kann insbesondere für den Fall gelten, bei welchem keine Sekundärrezirkulation vorgesehen ist.

### (Bezugszeichenliste)

- 1: Biomasse-Heizanlage
- 11: Kessel
- 12: Kesselfuß
- 13: Kesselgehäuse
- 14: Wasserzirkulationseinrichtung
- 15: Gebläse
- 16: Außenverkleidung
- 17: Steuereinrichtung
- 171: Speicher
- 172: Display
- 172x/173x: diverse Icons

- 2: Brenneinrichtung
- 21: erste Wartungsöffnung für die Brenneinrichtung
- 22: Drehmechanikhalterung
- 23: Drehmechanik
- 24: Brennkammer
- 25: Drehrost
- 26: Primärverbrennungszone der Brennkammer
- 27: Sekundärverbrennungszone bzw. Strahlungsteil der Brennkammer
- 28: Brennstoffbett
- 29: Brennkammersteine
- A1: erste Horizontalschnittlinie
- A2: erste Vertikalschnittlinie

- 201: Zündeinrichtung
- 202: Brennkammerschräge
- 203: Brennkammerdüse

- 211: Dämmmaterial bspw. Vermiculite
- 231: Antrieb bzw. Motor(en) der Drehmechanik

- 251: Bodenplatte des Drehrosts
- 252: Erstes Drehrostelement
- 253: Zweites Drehrostelement
- 254: Drittes Drehrostelement
- 255: Übergangselement
- 256: Öffnungen
- 257: Rostlippen
- 258: Verbrennungsfläche

- 260: Auflageflächen der Brennkammersteine
- 261: Nut
- 262: Vorsprung
- 263: Ring
- 264: Halterungssteine
- 265: Schräge der Halterungssteine

- 291: Sekundärluft bzw. Rezirkulationsdüsen

- 3: Wärmetauscher
- 31: Wartungsöffnung für Wärmetauscher
- 32: Kesselrohre
- 33: Kesselrohreintritt
- 34: Wendekammereintritt
- 35: Wendekammer
- 36: Federturbulator
- 37: Band- oder Spiralturbulator
- 38: Wärmetauschmedium

- 331: Isolation am Kesselrohreintritt
- 4: Filtereinrichtung
- 41: Abgasausgang
- 42: Elektrodenversorgungsleitung
- 43: Elektrodenhalterung
- 44: Filtereintritt
- 45: Elektrode
- 46: Elektrodenisolation
- 47: Filteraustritt
- 48: Käfig
- 49: Rauchgaskondensator

- 411: Rauchgaszuleitung zum Rauchgaskondensator
- 412: Rauchgasausgang aus dem Rauchgaskondensator
- 481: Käfighalterung
- 491: erster Fluidanschluss
- 491: zweiter Fluidanschluss
- 493: Wärmetauscherrohr
- 4931: Rohrhalteelement
- 4932: Rohrbodenelement
- 4933: Schlaufen/Umkehrstellen
- 4934: erste Zwischenräume der Wärmetauscherrohre zueinander
- 4935: zweite Zwischenräume der Wärmetauscherrohre zu der Außenwand des Rauchgaskondensators
- 4936: Durchlässe
- 495: Kopfelement
- 4951: Kopfelementströmungsführung
- 496: Kondensataustritt
- 4961: Kondensatsammeltrichter
- 497: Flansch
- 498: Seitenfläche mit Wartungsöffnung
- 499: Halterungseinrichtung für den Rauchgaskondensator
- 5: Rezirkulationseinrichtung
- 50: Ringkanal um Brennkammersteine
- 52: Luftventil
- 53: Rezirkulationseintritt
- 54: Primärmischkanal
- 55: Sekundärmischkanal
- 56: Primärrezirkulationskanal
- 57: Sekundärrezirkulationskanal
- 58: Primärluftkanal
- 59: Sekundärluftkanal

- 5a: Primärmischeinheit
- 5b: Sekundärmischeinheit

- 521: Ventilstellaktor
- 522: Ventilstellachsen
- 523: Ventilflügel
- 524: Ventilgehäuse
- 525: Ventilvorkammer
- 526: Ventildurchtrittsöffnung
- 527: Ventilkörper
- 528: Ventilfläche
- 531: Rezirkulationseintrittskanal
- 532: Rezirkulationseintrittskanalteiler

- 541: Primärdurchtritt
- 542: Primärmischkammer
- 543: Primärmischkammeraustritt
- 544: Primärreziventileintritt
- 545: Primärluftventileintritt
- 546: Primärmischkammergehäuse
- 551: Sekundärdurchtritt
- 552: Sekundärmischkammer
- 553: Sekundärmischkammeraustritt
- 554: Sekundärreziventileintritt
- 555: Sekundärluftventileintritt
- 556: Sekundärmischkammergehäuse

- 581: Primärlufteintritt
- 582: Primärluftsensor
- 591: Sekundärlufteintritt
- 592: Sekundärluftsensor

- 6: Brennstoffzufuhr
- 61: Zellradschleuse
- 62: Achse der Brennstoffzufuhr
- 63: Übersetzungsmechanik
- 64: Brennstoffzufuhrkanal
- 65: Brennstoffzufuhröffnung
- 66: Antriebsmotor
- 67: Brennstoff-Förderschnecke

- 7: Ascheabfuhr
- 71: Ascheaustragungsschnecke
- 711: Schneckenachse
- 712: Zentrierungsscheibe
- 713: Wärmetauscherabschnitt
- 714: Brennerabschnitt

- 72: Motor der Ascheabfuhr mit Mechanik
- 73: Übergangsschnecke
- 731: rechter Unterabschnitt - nach links steigende Schnecke
- 732: linker Unterabschnitt -nach rechts steigende Schnecke
- 74: Aschebehälter
- 75: Übergangschneckengehäuse
- 751: Öffnung des Übergangsschneckengehäuses
- 752: Begrenzungsblech
- 753: Hauptkörperabschnitt des Gehäuses
- 754: Befestigungs- und Trennelement
- 755: Trichterelement

- 81: Lagerachsen
- 82: Drehachse der Brennstoff-Niveauklappe
- 83: Brennstoff-Niveauklappe
- 831: Hauptfläche
- 832: Mittenachse
- 833: Oberflächenparallele
- 834: Öffnungen

- 84: Lagerkerbe
- 85: Sensorflansch
- 86: Glutbetthöhenmessmechanik

- 9: Reinigungseinrichtung
- 91: Reinigungsantrieb
- 92: Reinigungswellen
- 93: Wellenhalterung
- 94: Fortsatz
- 95: Turbulatorhalterungen
- 951: Drehlageraufnahme
- 952: Fortsätze
- 953: Durchlässe
- 954: Ausnehmungen
- 955: Drehlagergestänge
- 96: zweiarmiger Schlaghebel
- 97: Anschlagkopf

- E: Einschubrichtung des Brennstoffs
- S*: Strömungspfeile

## Patentansprüche

1. Verfahren zur Inbetriebnahme einer Biomasse-Heizanlage (1) zur Verfeuerung von Brennstoff in Form von Pellets und/oder Hackgut, wobei die Biomasse-Heizanlage, einen Kessel (11) mit einer Brennkammer (24), ein Gebläse (15), und eine Steuereinrichtung (17) mit einem Speicher (171) und einem Display (172) aufweist, wobei das Verfahren durch die folgenden Schritte gekennzeichnet ist:
Ermitteln (S2), ob die Biomasse-Heizanlage (1) erstmalig initialisiert wird, wobei, falls die Biomasse-Heizanlage (1) nicht erstmalig initialisiert wird, das Verfahren beendet wird, und falls die Biomasse-Heizanlage (1) erstmalig initialisiert wird, das Verfahren mit dem folgenden Schritt fortgesetzt wird:
Einstellen einer Mehrzahl von Wärmeerzeugungsparametern (S5), welche zumindest die folgenden Parameter umfassen:
- einen Kesseltypparameter mit dem zumindest ein Arbeitsbereich des Gebläses (15) festgelegt wird;
- einen Materialparameter, der die Eigenschaften des zu verfeuernden Brennstoffs / der Brennstoffe definiert.

2. Verfahren zur Inbetriebnahme einer Biomasse-Heizanlage (1) zur Verfeuerung von Brennstoff in Form von Pellets und/oder Hackgut nach Anspruch 1, wobei das Verfahren nach dem Schritt des Einstellens der Wärmeerzeugungsparameter die folgenden Schritte aufweist:
Überprüfung der Plausibilität der eingestellten Wärmeerzeugungsparameter, und falls die Plausibilitätsüberprüfung negativ ist:
erneutes Durchführen des Schrittes des Einstellens der Wärmeerzeugungsparameter;
Speichern der eingestellten Parameter in dem Speicher (171) der Steuereinrichtung, falls die Überprüfung der Plausibilität der eingestellten Parameter positiv ist.

3. Verfahren zur Inbetriebnahme einer Biomasse-Heizanlage (1) zur Verfeuerung von Brennstoff in Form von Pellets und/oder Hackgut nach Anspruch 2, wobei das Verfahren die folgenden Schritte nach dem Schritt des Durchführens der Plausibilitätsüberprüfung aufweist:
Anzeigen einer Abfrage auf dem Display (172), ob zumindest ein Puffer vorhanden ist;
Erfassen einer Benutzerantwort auf die Abfrage, ob zumindest ein Puffer vorhanden ist;
Durchführen der folgenden Schritte, falls zumindest ein Puffer vorhanden ist:
Einstellen zumindest eines Pufferparameters; und
Überprüfung der Plausibilität des eingestellten Pufferparameters, und falls die Plausibilitätsüberprüfung negativ ist:
erneutes Durchführen des Schrittes des Einstellens des Pufferparameters.

4. Verfahren zur Inbetriebnahme einer Biomasse-Heizanlage zur Verfeuerung von Brennstoff in Form von Pellets und/oder Hackgut nach Anspruch 2 oder 3, wobei das Verfahren die folgenden Schritte nach dem Schritt des Durchführens der Plausibilitätsüberprüfung aufweist:
Anzeigen einer Abfrage auf dem Display (172), ob zumindest ein Warmwasserspeicher vorhanden ist;
Erfassen einer Benutzerantwort auf die Abfrage, ob zumindest ein Warmwasserspeicher vorhanden ist;
Durchführen der folgenden Schritte, falls zumindest ein Warmwasserspeicher vorhanden ist:
Einstellen zumindest eines Warmwasserspeicherparameters; und
Überprüfung der Plausibilität des eingestellten Warmwasserspeicherparameters, und falls die Plausibilitätsüberprüfung negativ ist:
erneutes Durchführen des Schrittes des Einstellens des Warmwasserspeicherparameters.

5. Verfahren zur Inbetriebnahme einer Biomasse-Heizanlage zur Verfeuerung von Brennstoff in Form von Pellets und/oder Hackgut nach einem der Ansprüche 2 bis 4, wobei das Verfahren die folgenden Schritte nach dem Schritt des Durchführens der Plausibilitätsüberprüfung aufweist:
Anzeigen einer Abfrage auf dem Display (172), ob zumindest ein Heizkreis vorhanden ist;
Erfassen einer Benutzerantwort auf die Abfrage, ob zumindest ein Heizkreis vorhanden ist;
Durchführen der folgenden Schritte, falls zumindest ein Heizkreis vorhanden ist:
Einstellen zumindest eines Heizkreisparameters; und
Überprüfung der Plausibilität des eingestellten Heizkreisparameters, und falls die Plausibilitätsüberprüfung negativ ist:
erneutes Durchführen des Schrittes des Einstellens des Heizkreisparameters.

6. Verfahren zur Inbetriebnahme einer Biomasse-Heizanlage zur Verfeuerung von Brennstoff in Form von Pellets und/oder Hackgut nach einem der Ansprüche 2 bis 5, wobei das Verfahren die folgenden Schritte nach dem Schritt des Durchführens der Plausibilitätsüberprüfung aufweist:
Anzeigen einer Abfrage auf dem Display (172), ob zumindest ein Solarmodul vorhanden ist;
Erfassen einer Benutzerantwort auf die Abfrage, ob zumindest ein Solarmodul vorhanden ist;
Durchführen der folgenden Schritte, falls zumindest ein Solarmodul vorhanden ist:
Einstellen zumindest eines Solarmodulparameters; und
Überprüfung der Plausibilität des eingestellten Solarmodulparameters, und falls die Plausibilitätsüberprüfung negativ ist:
erneutes Durchführen des Schrittes des Einstellens des Solarmodulparameters.

7. Verfahren zur Inbetriebnahme einer Biomasse-Heizanlage zur Verfeuerung von Brennstoff in Form von Pellets und/oder Hackgut nach einem der vorhergehenden Ansprüche, das Verfahren aufweisen die folgenden Schritte:
Erstellen eines entsprechenden Icons für eine Anzeige auf dem Display (172), falls der jeweilige des Erfassens der Abfrage auf dem Display (172) positiv ergeben hat, dass Puffer und/oder Warmwasserspeicher und/oder Heizkreise und/oder Solarmodule vorhanden sind;
Abspeichern des Icons in der Steuereinrichtung (17).

8. Verfahren zur Inbetriebnahme einer Biomasse-Heizanlage zur Verfeuerung von Brennstoff in Form von Pellets und/oder Hackgut nach Anspruch 6, das Verfahren aufweisen die folgenden Schritte:
Erstellen der entsprechenden Icons derart, dass mit den Icons korrespondierende Sensorparameter, die durch die Steuereinrichtung (17) erfasst werden, in den Icons dargestellt werden.

9. Computerprogramm, umfassend Befehle, die bei der Ausführung des Programms durch einen Computer diesen veranlassen, das Verfahren eines der Ansprüche 1 bis 8 auszuführen.

10. Computerlesbares Speichermedium, auf dem das Computerprogramm des Anspruchs 9 gespeichert ist.

## Claims

1. Method for starting up a biomass heating system (1) for burning fuel in the form of pellets and/or wood chips, wherein the biomass heating system possesses a boiler (11) with a combustion chamber (24), a fan (15), and a control device (17) with a memory (171) and a display (172), wherein the method is **characterised by** the following steps: Determining (S2) whether the biomass heating system (1) is initialised for the first time, and if the biomass heating system (1) is not initialised for the first time, the method is ended, and if the biomass heating system (1) is initialised for the first time, the method is continued with the following step:
Setting a plurality of heat generation parameters (S5) that include at least the following parameters:
- a boiler type parameter with which at least one working range of the fan (15) is defined;
- a material parameter that defines the properties of the fuel(s) to be burned.

2. Method for starting up a biomass heating system (1) for burning fuel in the form of pellets and/or wood chips according to claim 1, wherein the method has the following steps after the step of setting the heat generation parameters:
Checking the plausibility of the set heat generation parameters, and if the plausibility check is negative:
Performing the step of setting the heat generation parameters again;
Saving the set parameters in the memory (171) of the control device if the plausibility check of the set parameters is positive.

3. Method for starting up a biomass heating system (1) for burning fuel in the form of pellets and/or wood chips according to claim 2, wherein the method has the following steps after the step of carrying out the plausibility check:
Displaying a query on the display (172) as to whether at least one buffer is present;
Detecting a user response to the query as to whether there is at least one buffer;
Performing the following steps if there is at least one buffer:
Setting at least one buffer parameter; and
Checking the plausibility of the set buffer parameter, and if the plausibility check is negative: Carrying out the step of setting the buffer parameter again.

4. Method for starting up a biomass heating system for burning fuel in the form of pellets and/or wood chips according to claim 2 or 3, wherein the method has the following steps after the step of carrying out the plausibility check:
Displaying a query on the display (172) as to whether at least one hot water tank is present;
Detecting a user response to the query as to whether there is at least one hot water tank;
Performing the following steps if there is at least one hot water tank:
Setting at least one hot water storage tank parameter; and
Checking the plausibility of the set hot water tank parameter, and if the plausibility check is negative:
Carrying out the step of setting the hot water tank parameter again.

5. Method for starting up a biomass heating system for burning fuel in the form of pellets and/or wood chips according to one of claims 2 to 4, wherein the method has the following steps after the step of carrying out the plausibility check:
Displaying a query on the display (172) as to whether at least one heating circuit is present;
Detecting a user response to the query as to whether there is at least one heating circuit;
Performing the following steps if there is at least one heating circuit:
Setting at least one heating circuit parameter; and
Checking the plausibility of the set heating circuit parameter, and if the plausibility check is negative:
Carrying out the step of setting the heating circuit parameter again.

6. Method for starting up a biomass heating system for burning fuel in the form of pellets and/or wood chips according to one of claims 2 to 5, wherein the method has the following steps after the step of carrying out the plausibility check:
Displaying a query on the display (172) as to whether at least one solar module is present;
Detecting a user response to the query as to whether there is at least one solar module;
Performing the following steps if there is at least one solar module:
Setting at least one solar module parameter; and
Checking the plausibility of the set solar module parameter, and if the plausibility check is negative: Carrying out the step of setting the solar module parameter again.

7. Method for starting up a biomass heating system for burning fuel in the form of pellets and/or wood chips according to one of the preceding claims, wherein the method has the following steps:
Creating a corresponding icon for displaying on the display (172) if each detection query on the display (172) has positively shown that buffers and or hot water storage tanks and/or heating circuits and/or solar modules are available.
Storing the icon in the control device (17).

8. Method for starting up a biomass heating system for burning fuel in the form of pellets and/or wood chips according to claim 6, wherein the method has the following steps: Creating the corresponding icons in such a way that the sensor parameters corresponding to the icons, and detected by the control device (17), are presented in the icons.

9. Computer programme comprising commands that when the program is executed by a computer cause them to implement the method of one of claims 1 to 8.

10. Computer-readable storage medium, on which is stored the computer programme of claim 9.

## Revendications

1. Procédé de mise en œuvre d'une installation de chauffage à biomasse (1) pour brûler du combustible sous la forme de pellets et/ou de produits hachés,
- l'installation de chauffage à biomasse comprenant une cuve (11) avec une chambre de combustion (24), une soufflante (15) ainsi qu'une installation de commande (17) avec une mémoire (171) et un affichage (172),
procédé **caractérisé par** les étapes consistant à :
- déterminer (S2) si l'installation de chauffage à biomasse (1) a été initialisé une première fois et si l'installation de chauffage à biomasse (1) n'a pas été initialisée une première fois, terminer le procédé et si l'installation de chauffage à biomasse (1) a été initialisé une première fois, poursuivre le procédé avec l'étape suivante :
- régler un ensemble de paramètres de génération de chaleur (S5) comprenant au moins les paramètres suivants :
** un paramètre de type de cuve avec au moins une plage de travail de la soufflante (15),
** un paramètre de matière définissant les propriétés du combustible à brûler et/ou des combustibles.

2. Procédé de mise en oeuvre d'une installation de chauffage à biomasse (1) pour brûler du combustible sous la forme de pellets et/ou de produits hachés selon la revendication 1,
selon lequel
le procédé, après l'étape de réglage des paramètres de génération de chaleur comprend les étapes suivantes consistant à :
- vérifier la plausibilité des paramètres de génération de chaleur réglés et si le contrôle de plausibilité est négatif :
- renouveler l'étape de réglage des paramètres de génération de chaleur,
- enregistrer en mémoire les paramètres de réglage dans la mémoire (171) de l'installation de commande si le contrôle de la plausibilité des paramètres réglés est positif.

3. Procédé de mise en œuvre d'une installation de chauffage à biomasse (1) pour brûler du combustible sous la forme de pellets et/ou de produits hachés selon la revendication 2,
selon lequel
les étapes qui suivent l'étape de mise en oeuvre du contrôle de plausibilité consiste à :
- afficher une question sur l'afficheur (172) demandant si au moins un tampon existe,
- saisir la réponse d'utilisateur à la question de savoir si au moins un tampon existe,
- effectuer les étapes suivantes s'il existe au moins un tampon :
* régler au moins un paramètre tampon, et
* vérifier la plausibilité du paramètre tampon réglé et si le contrôle de plausibilité est négatif :
** renouveler l'étape de réglage du paramètre tampon.

4. Procédé de mise en oeuvre d'une installation de chauffage à biomasse (1) pour brûler du combustible sous la forme de pellets et/ou de produits hachés selon la revendication 2 ou 3,
selon lequel
le procédé comprend les étapes suivantes après l'étape de contrôle de plausibilité :
- afficher une question sur l'afficheur (172) demandant si au moins un réservoir d'eau chaude :
* saisir une réponse d'utilisateur à la question de savoir s'il existe au moins un réservoir d'eau chaude,
- effectuer la même étape s'il y a au moins un réservoir d'eau chaude :
* régler au moins un paramètre de réservoir d'eau, et
* vérifier la plausibilité du paramètre de réservoir d'eau chaude, réglé et si le contrôle de plausibilité est négatif :
** répéter l'étape de réglage du paramètre de réservoir d'eau chaude.

5. Procédé de mise en œuvre d'une installation de chauffage à biomasse (1) pour brûler du combustible sous la forme de pellets et/ou de produits hachés selon les revendications 2 à 4,
selon lequel
le procédé comprend les étapes suivantes après l'étape de contrôle de plausibilité :
- afficher une question sur l'afficheur (172) demandant s'il existe au moins un circuit de chauffage,
- saisir la réponse d'utilisateur à la question demandant s'il existe au moins un circuit de chauffage,
- effectuer les étapes suivantes s'il existe au moins un circuit de chauffage :
* régler au moins un paramètre de circuit de chauffage, et
* vérifier la plausibilité du paramètre de circuit de chauffage réglé et si le contrôle de plausibilité est négatif :
** renouveler l'étape de réglage du paramètre de circuit de chauffage.

6. Procédé de mise en œuvre d'une installation de chauffage à biomasse (1) pour brûler du combustible sous la forme de pellets et/ou de produits hachés selon l'une des revendications 2 à 5,
selon lequel
le procédé comprend les étapes suivantes, après le contrôle de plausibilité :
- afficher une question sur l'afficheur (172) demandant s'il existe au moins un module solaire,
- saisir la réponse d'utilisateur à la question de savoir s'il existe au moins un module solaire,
- effectuer l'étape suivante s'il existe au moins un module solaire :
* régler au moins un paramètre de module solaire, et
* contrôler la plausibilité du paramètre réglé de module solaire et si le contrôle de plausibilité est négatif :
** répéter l'étape de réglage du paramètre de module solaire.

7. Procédé de mise en œuvre d'une installation de chauffage à biomasse (1) pour brûler du combustible sous la forme de pellets et/ou de produits hachés selon l'une des revendications précédentes,
le procédé comprenant les étapes suivantes consistant à :
- régler une icône correspondante pour l'afficher sur l'afficheur (172) si la saisie respective de la question sur l'afficheur (172) est positive, c'est-à-dire qu'il y a un tampon et/ou un réservoir d'eau chaude et/ou un circuit de chauffage et/ou un module solaire,
- enregistrer l'icône dans l'installation de commande (17).

8. Procédé de mise en oeuvre d'une installation de chauffage à biomasse (1) pour brûler du combustible sous la forme de pellets et/ou de produits hachés selon la revendication 6,
procédé comprenant les étapes suivantes consistant à :
- régler l'icône correspondante de façon à saisir avec l'icône, les paramètres correspondants du capteur par l'installation de commande (17), dans lequel est représentée l'icône.

9. Programme d'ordinateur comprenant des commandes qui, par la mise en œuvre du programme, font exécuter le procédé selon l'une des revendications 1 à 8 par l'ordinateur.

10. Support de mémoire lisible par un ordinateur contenant l'enregistrement du programme d'ordinateur selon la revendication 9.
